# EUROPEAN PATENT APPLICATION

(11) **EP 4 776 730 A1**
(43) Date of publication of application: **15.07.2026**
(21) Application number: 23951145.4
(22) Date of filing: 06.09.2023
(51) Int. Cl.: H04W 72/231

(54) **WIRELESS COMMUNICATION METHOD, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: SHI, Zhihua, Dongguan Guangdong 523860 (CN); LIU, Zhe, Dongguan Guangdong 523860 (CN)
(74) Representative: Taor, Simon Edward William
(86) International application number: PCT/CN2023/117280
(87) International publication number: WO 2025/050318

(57) **Abstract**

Embodiments of the present application provide a wireless communication method, a device, and a storage medium. The method comprises: a terminal device receives first configuration information sent by a network device, wherein the first configuration information indicates a first set, the first set comprises one or more first resources groups, the first resource groups are used for channel measurement and/or beam measurement, and the first configuration information is transmitted by means of radio resource control (RRC) signaling; and the terminal device receives second configuration information sent by the network device, wherein the second configuration information is used for indicating one or more first subgroups corresponding to a first target resource group, resources comprised in the first subgroup belong to the first target resource group, the first target resource group is a resource group among the one or more resource groups comprised in the first set, and the second configuration information is transmitted by means of RRC signaling.

## Description

### TECHNICAL FIELD

Embodiments of the present application relate to the technical field of mobile communication, and in particular to a wireless communication method and device, and a storage medium.

### BACKGROUND

In the related art, in order to perform good beam management (for example, a network selects a better downlink transmission beam (DL Tx beam) to transmit signals to a certain user), a communication system needs to know a communication quality corresponding to a beam, which involves how to measure and report the beam (or a reference signal). In an actual system, the network device may not directly instruct UE to measure a certain beam, but may use a beam to be measured to transmit a certain Reference signal (RS), so that the UE measures the RS. A measured result corresponding to the RS may reflect a transmission quality corresponding to the beam.

### SUMMARY

Embodiments of the present application provide a wireless communication method, a wireless communication device, and a storage medium.

The wireless communication method according to an embodiment of the present application includes the following operations.

A terminal device receives first configuration information transmitted by a network device. The first configuration information indicates a first group. The first group includes one or more first resource sets. The first resource sets are used for channel measurement and/or beam measurement, the first configuration information is transmitted through radio resource control (RRC) signaling.

The terminal device receives second configuration information transmitted by the network device. The second configuration information indicates one or more first subsets corresponding to a first target resource set. Resources included in the first subsets belong to the first target resource set, the first target resource set is one of the one or more resource sets included in the first group, and the second configuration information is transmitted through RRC signaling.

A wireless communication method according to an embodiment of the present application includes the following operations.

A network device transmits first configuration information to a terminal device. The first configuration information indicates a first group. The first group includes one or more first resource sets, the first resource sets are used for channel measurement and/or beam measurement. The first configuration information and the second configuration information are transmitted through radio resource control (RRC) signaling.

The network device transmits second configuration information to the terminal device. The second configuration information indicates one or more first subsets corresponding to a first target resource set. Resources included in the first subsets belong to the first target resource set, the first target resource set is one of the one or more resource sets included in the first group, and the second configuration information is transmitted through RRC signaling.

The terminal device according to an embodiment of the present application includes a first communication unit.

The first communication unit is configured to receive first configuration information transmitted by a network device. The first configuration information indicates a first group. The first group includes one or more first resource sets. The first resource sets are used for channel measurement and/or beam measurement, the first configuration information is transmitted through radio resource control (RRC) signaling.

The first communication unit is further configured to receive second configuration information transmitted by the network device. The second configuration information indicates one or more first subsets corresponding to a first target resource set. Resources included in the first subsets belong to the first target resource set, the first target resource set is one of the one or more resource sets included in the first group, and the second configuration information is transmitted through RRC signaling.

The network device according to an embodiment of the present application includes a second communication unit.

The second communication unit is configured to transmit first configuration information to the terminal device. The first configuration information indicates a first group. The first group includes one or more first resource sets, the first resource sets are used for channel measurement and/or beam measurement. The first configuration information is transmitted through radio resource control (RRC) signaling.

The second communication unit is further configured to transmit second configuration information to the terminal device. The second configuration information indicates one or more first subsets corresponding to a first target resource set. Resources included in the first subsets belong to the first target resource set, the first target resource set is one of the one or more resource sets included in the first group, and the second configuration information is transmitted through RRC signaling.

A communication device provided by an embodiment of the present application may be a terminal device in the above scheme, and the communication device includes a processor and a memory. The memory is used for storing a computer program, and the processor is used to call and run the computer program stored in the memory to execute the wireless communication method executed by the terminal device.

A communication device provided by an embodiment of the present application may be a network device in the above scheme, and the communication device includes a processor and a memory. The memory is configured to store a computer program, and the processor is configured to call and run the computer program stored in the memory to perform the above-described wireless communication method performed by the network device.

A chip provided by an embodiment of the present application is used for implementing the wireless communication method described above.

Specifically, the chip includes a processor for calling and running a computer program from a memory so that a device on which the chip is mounted performs the above-described wireless communication method.

A computer-readable storage medium according to an embodiment of the present application is used for storing a computer program that causes a computer to execute the above-described wireless communication method.

A computer program product provided by an embodiment of the present application includes computer program instructions that cause a computer to execute the above-described wireless communication method.

A computer program provided by an embodiment of the present application causes a computer to execute the above-described wireless communication method when it is run on the computer.

According to the above technical solution, a terminal device receives first configuration information and second configuration information transmitted by a network device, the first configuration information indicates a first group including one or more first resource sets, and the second configuration information indicates one or more first subsets corresponding to a first target resource set among the one or more first resource sets, so that the network device configures subsets for resource sets to the terminal device on the basis of configuring the resource sets for beam measurement and/or beam measurement basis, so that the terminal device can flexibly select measurement signals according to the communication environment.

### BRIEF DESCRIPTION OF THE DRAWINGS

Accompanying drawings described herein are intended to provide a further understanding of the present application, and constitute a part of the present application. The schematic embodiments and the description thereof of the present application are intended to explain the present application, and do not constitute an undue limitation of the present application. In the drawings:
FIG. 1 is a schematic diagram of an application scenario according to an embodiment of the present application.
FIG. 2 is an optional flowchart of selecting a Transmission Configuration Indication (TCI) state according to an embodiment of the present application.
FIG. 3 is an optional flowchart of a wireless communication method according to an embodiment of the present application.
FIG. 4 is an optional flowchart of a wireless communication method according to an embodiment of the present application.

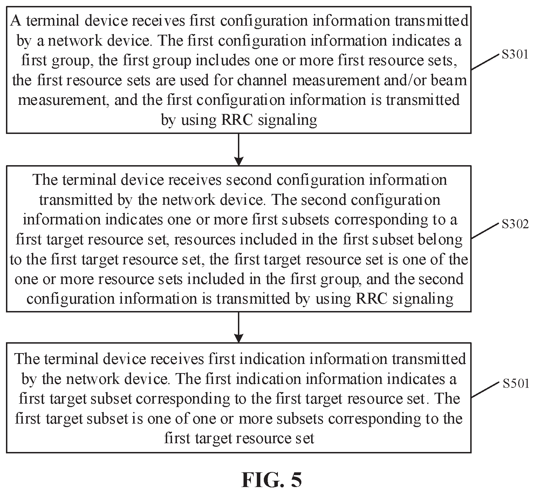

FIG. 5 is an optional flowchart of a wireless communication method according to an embodiment of the present application.
FIG. 6 is an optional flowchart of a wireless communication method according to an embodiment of the present application.
FIG. 7 is an optional flowchart of a wireless communication method according to an embodiment of the present application.
FIG. 8 is an optional flowchart of a wireless communication method according to an embodiment of the present application.
FIG. 9 is an optional schematic structural diagram of a terminal device according to an embodiment of the present application.
FIG. 10 is an optional schematic structural diagram of a network device according to an embodiment of the present application.
FIG. 11 is a schematic structural diagram of a communication device according to an embodiment of the present application.
FIG. 12 is a schematic structural diagram of a chip according to an embodiment of the present application.
FIG. 13 is a schematic block diagram of a communication system according to an embodiment of the present application.

### DETAILED DESCRIPTION

Hereinafter, technical solutions in embodiments of the present application will be described with reference to the accompanying drawings in the embodiments of the present application. It is obvious that the described embodiments are part of the embodiments of the present application, but not all the embodiments. Based on the embodiments in the present application, all other embodiments obtained by those skilled in the art without creative work fall within the protection scope of the present application.

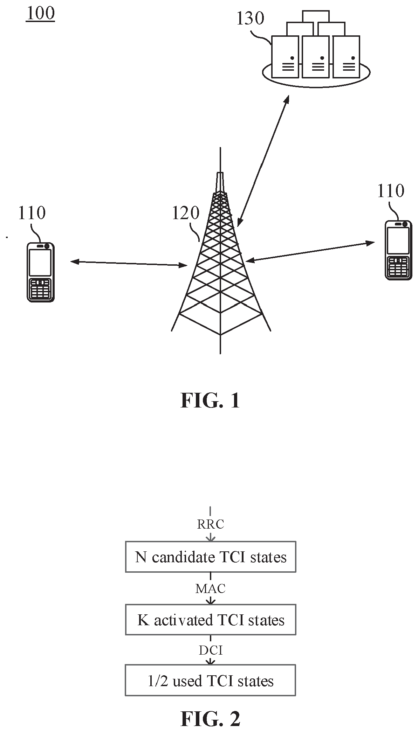

FIG. 1 is a schematic diagram of an application scenario according to an embodiment of the present application.

As shown in FIG. 1, a communication system 100 may include a terminal device 110 and a network device 120. The network device 120 may communicate with the terminal device 110 through an air interface. Multi-service transmission is supported between the terminal device 110 and the network device 120.

It should be understood that the embodiments of the present application are only illustrated with reference to the communication system 100, but the embodiments of the present application are not limited thereto. That is, the technical solutions of the embodiments of the present application can be applied to various communication systems, such as a Long Term Evolution (LTE) system, an LTE Time Division Duplex (TDD), a Universal Mobile Telecommunication System (UMTS), an Internet of Things (IoT) system, a Narrow Band Internet of Things (NB-IoT) systems, an enhanced Machine-Type Communication (eMTC) system, a 5G communication system (also referred to as New Radio (NR) communication system), or a future communication system, etc.

In the communication system 100 illustrated in FIG. 1, the network device 120 may be an access network device that communicates with the terminal device 110. An access network device may provide communication coverage for a particular geographic area and may communicate with a terminal device 110 (e.g., a UE) located within that coverage area.

The network device 120 may be an Evolutionary Node B (eNB or eNodeB) in a Long Term Evolution (LTE) system, a Next Generation Radio Access Network (NG RAN) device, a base station (gNB) in an NR system, a radio controller in a Cloud Radio Access Network (CRAN), or a relay station, an access point, an in-vehicle device, a wearable device, a hub, a switch, a bridge, a router, or a network device in a future evolved Public Land Mobile Network (PLMN).

The terminal device 110 may be any terminal device including, but not limited to, a terminal device that connects to the network device 120 or other terminal devices in a wired or wireless manner.

For example, the terminal device 110 may refer to an access terminal, a User Equipment (UE), a subscriber unit, a subscriber station, a mobile station, a mobile site, a remote station, a remote terminal, a mobile device, a user terminal, a terminal, a wireless communication device, a user agent, or a user device. The access terminal may be a cellular telephone, a cordless telephone, a Session Initiation Protocol (SIP) telephone, an IoT device, a satellite handheld terminal, a Wireless Local Loop (WLL) station, a Personal Digital Assistant (PDA), a handheld device with wireless communication functionality, a computing device or other processing device connected to a wireless modem, a vehicle-mounted device, a wearable device, a terminal device in a 5G network or a terminal device in a future evolution network, or the like.

The terminal device 110 may be used for device-to-device (D2D) communication.

The wireless communication system 100 may further include a core network device 130 that communicates with the base station, and the core network device 130 may be a 5G Core (5GC) device, for example, an Access and Mobility Management Function (AMF), for another example, an Authentication Server Function (AUSF), for another example, a User Plane Function (UPF), for another example, a Session Management Function (SMF). Alternatively, the core network device 130 may also be an Evolved Packet Core (EPC) device of an LTE network, for example, a Session Management Function + Core Packet Gateway (SMF+PGW-C) device of the core network. It should be understood that the SMF+PGW-C may implement functions of both the SMF and the PGW-C. In the process of network evolution, the core network devices may be called by other names, or forms a new network entity by dividing the functions of the core network, which is not limited by the embodiments of the present application.

Connections may be established between the functional units in the communication system 100 through a next generation (NG) network interface to achieve communication.

For example, a terminal device establishes an air interface connection with an access network device through a Uu interface for transmitting user plane data and control plane signaling; a terminal device can establish a control plane signaling connection with an AMF through a NG interface 1 (N1 for short); an access network device, such as a next generation radio access base station (gNB), can establish a user plane data connection with a UPF through a NG interface 3 (N3 for short); an access network device can establish a control plane signaling connection with an AMF through a NG interface 2 (N2 for short); a UPF may establish a control plane signaling connection with a SMF through a NG interface 4 (referred to as N4 for short); a UPF can interact user plane data with a data network through a NG interface 6 (N6 for short); an AMF may establish a control plane signaling connection with a SMF through a NG interface 11 (N11 for short); a SMF may establish a control plane signaling connection with a PCF through a NG interface 7 (referred to as N7 for short).

FIG. 1 exemplarily illustrates one base station, one core network device, and two terminal devices. Alternatively, the wireless communication system 100 may include a plurality of base station devices and another number of terminal devices may be included within the coverage range of each base station, which is not limited in the embodiments of the present application.

It should be noted that FIG. 1 only illustrates a system to which the present application is applied in the form of an example. Alternatively, methods shown in the embodiments of the present application can also be applied to other systems. Further, the terms "system" and "network" are often used interchangeably herein. Herein, the term "and/or" is only an association relationship describing association objects, and means that there may be three relationships, for example, A and/or B, which may mean that A alone exists, both A and B exist, or B alone exists. In addition, the character "/" herein generally indicates that related objects before and after the character "/" are in an "or" relationship. It should also be understood that the "indication" mentioned in the embodiments of the present application may be a direct indication, an indirect indication, or an associated relationship. For example, A indicates B, which may mean that A directly indicates B, for example, B can be acquired by A, or may mean that A indicates B indirectly, for example, A indicates C, and B can be obtained through C, or may mean that there is an association relationship between A and B. It should also be understood that "correspondence" mentioned in the embodiments of the present application may indicate that there is a direct correspondence or indirect correspondence between two items, may indicate that there is a correlation relationship between the two items, or may indicate a relationship between indicating and being indicated, configuring and being configured, or the like. It should also be understood that the term "predefined" or "predefined rules" mentioned in the embodiments of the present application can be realized by storing corresponding codes, tables, or other ways that can be used to indicate relevant information in advance in devices (e.g., including terminal devices and network devices), and the present application does not limit specific implementations thereof. For example, predefined may refer to defined in a protocol. It should also be understood that in the embodiments of the present application, the "protocol" may refer to a standard protocol in the field of communication, and may include, for example, an LTE protocol, an NR protocol, and related protocols applied in future communication systems, and the present application is not limited thereto.

In order to facilitate understanding of the technical solutions of the embodiments of the present application, related technologies of the embodiments of the present application will be described below, and the related technologies below can be arbitrarily combined with the technical solutions of the embodiments of the present application as options, and all of them belong to the protection scope of the embodiments of the present application.

Design goals of an NR/5G system include large bandwidth communication in a high-frequency range (such as frequencies above 6GHz). When an operating frequency increases, a path loss during transmission will increase, thereby affecting a coverage capability of a high-frequency system. In order to effectively ensure the coverage of the high-frequency NR system, an effective technical solution is to use multiple beams, also known as hybrid beams, based on massive MIMO to improve coverage capability.

In a typical 2G/3G/4G system, a cell (sector) uses a wider beam to cover the entire cell. Therefore, at each instant, UE within the cell coverage has an opportunity to obtain transmission resources allocated by the system.

A NR/5G Multi-beam system covers the entire cell through different beams, that is, each beam covers a smaller range, and an effect that the entire cell is covered through multiple beams is achieved through sweeping in time. Currently, different beams are identified through different signals carried on them:

Different Synchronous Signal blocks (SS blocks, SSBs) are transmitted on some different beams, and the UE can distinguish different beams through the different SSBs;

Different Channel State Information Reference Signals (CSI-RSs) are transmitted on some different beams, and the UE identifies different beams through CSI-RSs/CSI-RS resources.

Therefore, the following discussion is based on visible signals (which actually correspond to some physical beam/beams, but may not be explicitly stated in the standard).

In one multi-beam system, a Physical Downlink Control Channel (PDCCH) and a Physical Downlink Shared Channel (PDSCH) may be transmitted through different downlink transmission beams.

For systems below 6G, there is generally no analog beam on the UE side, so an omni-directional antenna (or near omni-directional antenna) is used to receive signals transmitted through different downlink transmission beams of the base station.

For millimeter wave systems, there may be analog beams on the UE side, and respective downlink receiving beams need to be used to receive signals transmitted through respective downlink transmission beams. At this time, corresponding beam indication information is required to assist the UE in determining information related to the transmission beam at the network side or information related to the corresponding receiving beam at the UE side.

In a NR protocol, the beam indication information does not directly indicate the beam itself, but is indicated through Quasi Co-Location (QCL) (for example, QCL-TypeD type) between signals. On the UE side, the determination to receive the corresponding channel/signal is also based on the quasi-co-location assumption. Herein, the QCL quasi-co-location assumption is indicated by transmitting a Transmission Configuration Indication (TCI) state (TCI-state). That is, the network configures and/or indicates the TCI state through a related signaling (Radio Resource Control (RRC), and/or a Medium Access Control Control Element (MAC CE), and/or Downlink control information (DCI)).

Future communication systems (for example, 6G wireless communication systems, new generation wifi) can also adopt multi-beam technology.

### Beam/reference signal measurement and reporting

In order to perform good beam management (for example, the network selects a better downlink transmission beam (DL Tx beam) to transmit signals to a certain user UE), then the communication system needs to know a communication quality corresponding to the beam, which involves how to measure and report the beam (or the reference signal). In an actual system, the network may not directly instruct the UE to measure a certain beam, but may use a beam to transmit a certain RS, and the UE may measure the transmitted RS. A measured result corresponding to the RS may be reflected as the transmission quality corresponding to the beam. Therefore, from the perspective of network and terminal interaction, the UE may only know more RSs for measurement, but does not know whether they are associated with a beam, and if they are associated with a beam, it does not know which beam is associated with it.

In fact, the RS may be measured not only to assist in beam management, but also to measure current channel information to assist in MIMO transmission.

In a 5G system, the basic flow of measurement and reporting is as follows: a network transmits configuration information to UE, the configuration information indicates one or more RSs and some configurations related to measurement; According to the received configuration information, the UE measures corresponding reference signal to obtain a measured result that needs to be reported (the measured result may not need to be reported); If it is necessary to report the measured result, the UE reports the corresponding measured result via a uplink channel.

The transmission of RS may have different forms, such as Aperiodic (AP) transmission, semi-persistent (SP) transmission and Periodic (P) transmission.

The reporting of the measured result supports a variety of mechanisms, including AP reporting, SP reporting and P reporting.

### TCI state

When the terminal receives signals, in order to improve the reception performance, the characteristics of the transmission environment corresponding to the data transmission can be used to improve the reception algorithm. For example, statistical characteristics of the channel may be utilized to optimize the design and parameters of the channel estimator. In a NR system, these characteristics corresponding to data transmission are represented by QCL status (QCL-Info).

If downlink transmissions are from different transmission reception points (TRPs)/antenna panels/beams, the characteristics of the transmission environment corresponding to the data transmission may also change. Therefore, in the NR system, when the network side transmits a downlink control channel or a data channel, the corresponding QCL status information is indicated to the terminal device through the TCI state.

A TCI state may contain the following configuration:
- TCI state identifier (ID), used to identify a TCI state;
- QCL information 1;
- QCL information 2 (optional).

A QCL information may include the following information:
- A QCL type configuration, which may be one of QCL type A (type A), QCL type B (typeB), QCL type C (typeC), or QCL type D (typeD);
- QCL reference signal configuration, including an ID of a serving cell where a reference signal is located, the Bandwidth Part (BWP) ID, and an identifier of the reference signal.
The identifier of the reference signal may be a CSI-RS resource ID or a Synchronization Signal Block (SSB) index. The SSB may also be referred to as a Synchronization Signal (SS)/Physical broadcast channel (PBCH) block.

If both QCL information 1 and QCL information 2 are configured, the QCL type of one or more pieces of QCL information must be one of QCL typeA, QCL typeB, and QCL typeC, and the QCL type of the other QCL information (if configured) must be QCL type D.

The different QCL type configurations are defined as follows:
- QCL-TypeA: {Doppler shift, Doppler spread, average delay, delay spread};
- QCL-TypeB: {Doppler shift, Doppler spread};
- QCL-TypeC: {Doppler shift, average delay};
- QCL-TypeD: {Spatial Rx parameter}.

In the protocol, the related configuration of TCI-State is as follows:

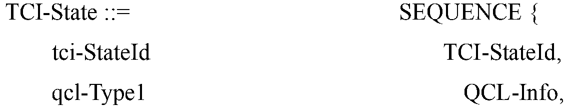

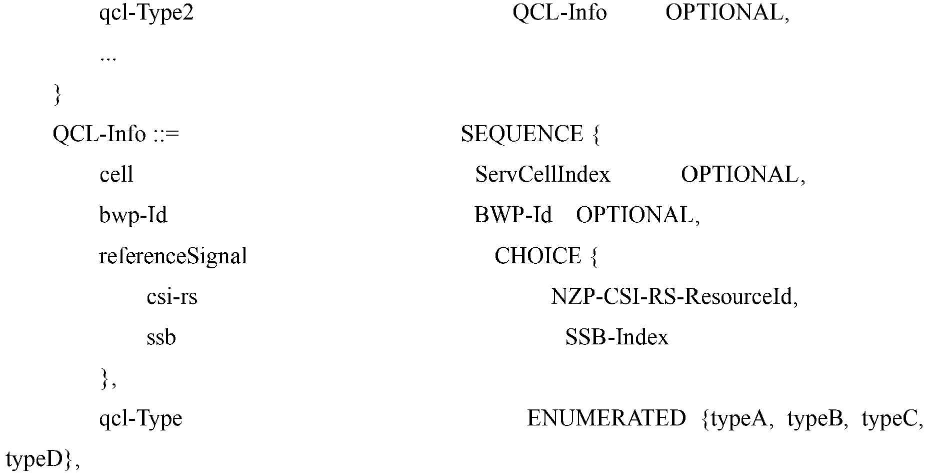

In an NR system, the network side may indicate a corresponding TCI state for a downlink signal or a downlink channel.

If the network side configures, through the TCI state, that the QCL reference signal of the target downlink channel or the target downlink signal is the reference SSB or the reference CSI-RS resource, and the QCL type is typeA, typeB, or typeC, the terminal device may assume that the target downlink channel or the target downlink signal is has a large-scale parameter as the reference SSB or the reference CSI-RS resource. The large-scale parameter is determined by the QCL type configuration. Large-scale parameters include: Doppler delay, average delay, spatial reception parameters, etc.

If the network side configures, through the TCI state, that the QCL reference signal of the target downlink channel or the target downlink signal is the reference SSB or the reference CSI-RS resource, and the QCL type is typeD, the terminal device may receive the target downlink signal using the same reception beam (i.e., the Spatial Rx parameter) as that for receiving the reference SSB or the reference CSI-RS resource. Generally, the target downlink channel or the target downlink signal and its reference SSB or reference CSI-RS resource are transmitted at the network side by a same TRP or a same panel or same beams. If transmission TRPs or transmission panels or transmission beams for two downlink signals or downlink channels are different, different TCI states are usually configured.

For a downlink control channel, a TCI state of a corresponding CORESET may be indicated through RRC signaling or RRC signaling + MAC signaling.

For a downlink data channel, a group of available TCI states is indicated through RRC signaling, and some of them are activated through a MAC layer signaling, and finally one or two TCI states are indicated from the activated TCI states through a TCI state indication field in Downlink control information (DCI) for the PDSCH scheduled by the DCI. In an example, as shown in FIG. 2, N candidate TCI states are indicated through RRC signaling, the N candidate TCI states constitutes a group of available TCI states, K candidate TCI states are activated by a MAC layer signaling, to obtain K activated TCI states, and one or two used TCI states are indicated from the activated TCI states by DCI for the PDSCH scheduled by DCI. The case of 2 TCI states is a similar scenario for multiple TRPs.

The TCI state introduced above is only applicable to downlink channels and signals, and there are many limitations in its application in NR systems. In order to provide a more unified uplink and downlink beam management mechanism for NR system, the concept of unified TCI state is proposed, which adds important new functions, examples of which are as follows:
- Two modes of unified TCI state are designed
   Mode 1: it contains one type of TCI state, which can be applied to uplink and downlink channels and signals. We call this type of TCI state as a joint TCI state;
   Mode 2: it contains two types of TCI states, in which a DL TCI state is only applicable to downlink channels and signals; a UL TCI state is only applicable to uplink channels and signals. We call this type of TCI state as a separate TCI state (an independent TCI state);
- Downlink channels (partial PDCCHs, PDSCHs) and signals (aperiodic CSI-RSs) use same downlink transmission indication beams, using a DL TCI state or a joint TCI state;
- Uplink channels (PUCCHs, PUSCHs) and signals (SRSs) use same uplink transmit beams, using a UL TCI state or a joint TCI state;
- The unified TCI state can be dynamically updated and indicated using a MAC CE and/or DCI;
- Suitable for carrier aggregation scenarios, the beam indication on a single CC may be suitable for multiple different CCs;
- Both the uplink beam indication and the uplink power control parameters may be given through a UL TCI state or a joint TCI state;
- Support inter-cell beam management functions.

For CORESET on each CC, there are four types:
CORESET A: It is only associated with a UE-specific search space, so it can be considered as the UE-specific downlink control channel resource, and must follow a indicated unified TCI state(s);
CORESET B: It is only associated with a search space common to cells. Whether it can follow a unified TCI state(s) indicated by NW depends on a RRC configuration of NW;
CORESET C: It is associated with both a search space common to cells, and a UE-specific search space. Whether it can follow a unified TCI state(s) indicated by NW depends on a RRC configuration of NW;
CORESET 0: It must be associated with a search space common to cells, or it may also be associated with a UE-specific search space. Whether it can follow a unified TCI state(s) indicated by NW depends on a RRC configuration of NW.

The TCI state mentioned in the embodiments of the present application may include any of the aforementioned TCI states if the TCI state is not explicitly specified. That is, the TCI state may be a joint TCI state, a separate TCI state, a DL TCI state, a UL TCI state, a combination of foregoing (i.e. containing multiple different types of TCI states), or a TCI state in R15/R16.

In the measurement/reporting mechanism of the related art, the network device configures a corresponding RS set to be measured through RRC signaling. For periodic reporting or semi-persistent reporting, the UE performs measurement for the RS set configured through the RRC. For aperiodic reporting, the UE measures one or some of the one or more RS sets configured through the RRC according to a trigger state indicated by the DCI. As can be seen from the above, the RS sets measured by the UE are all configured through the RRC. If a set of RS that the system wants the UE to measure is not currently included in the set of RS already configured through RRC, the network needs to configure the set of RS through RRC signaling.

In practical systems, in some cases, the network wants the UE to be able to dynamically measure certain RSs. For example, in a multi-beam system (assuming that there are 16 analog beams), the network infers based on certain information or methods that the channel quality (or link quality) of the beams numbered 0-3 is most likely best for a certain UE, and the channel quality of other beams is not good for the UE, then the network may only let the UE measure the beams numbered 0-3. Then, as the UE moves, at a next moment, the network infers that the channel quality (or link quality) of the beams numbered 2-5 is most likely the best for a certain UE, and the channel quality of other beams is not good for the UE, then the network can only let the UE measure the beams numbered 2-5. In this scenario, it is necessary to flexibly instruct the UE to measure different sets of signals.

Based on the mechanism of the RS set, the processing methods that can be adopted include:
- All different RS sets are configured in advance through RRC, and then aperiodic reporting is triggered through DCI to achieve measurement and reporting for different RS sets. This method has many disadvantages, for example, 1. the overhead of RRC signaling is large, and the number of RS sets that the UE needs to process is large, which increases the complexity of the UE; 2. more bits are needed in DCI to indicate different RS sets, which leads to an increase in DCI size and affects the coverage of the control channel;
- A currently required RS set is configured through RRC. This method also has many disadvantages: 1. frequent RRC signaling transmission leads to a large overhead of the total RRC signaling; 2. RRC signaling configuration leads to a large delay, which causes the network to not allow the UE to quickly measure certain RS, affecting the overall performance of the system.

In order to facilitate understanding of the technical solutions of the embodiments of the present application, the technical solutions of the present application will be described in detail below with reference to specific examples. As an optional solution, the above related technologies can be arbitrarily combined with the technical solutions of the embodiments of the present application, and all of them belong to the protection scope of the embodiments of the present application. The embodiments of the present application include at least some of the following.

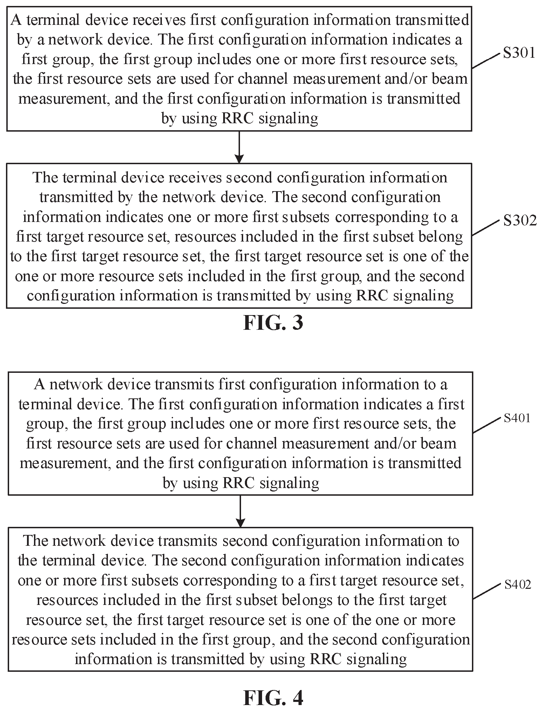

A wireless communication method provided by an embodiment of the present application is applied to a terminal device, and as shown in FIG. 3, the method includes operations S301-S302.

In S301, a terminal device receives first configuration information transmitted by a network device. The first configuration information indicates a first group, the first group includes one or more first resource sets, the first resource sets are used for channel measurement and/or beam measurement, and the first configuration information is transmitted through radio resource control (RRC) signaling.

In S302, the terminal device receives second configuration information transmitted by the network device. The second configuration information indicates one or more first subsets corresponding to a first target resource set, resources included in the first subset belong to the first target resource set, the first target resource set is one of the one or more resource sets included in the first group, and the second configuration information is transmitted through RRC signaling.

A wireless communication method provided by an embodiment of the present application is applied to a network device, and as shown in FIG. 4, the method includes operations S401 and S402.

In S401, a network device transmits first configuration information to a terminal device. The first configuration information indicates a first group, the first group includes one or more first resource sets, the first resource sets are used for channel measurement and/or beam measurement, and the first configuration information is transmitted through radio resource control (RRC) signaling.

In S402, the network device transmits second configuration information to the terminal device. The second configuration information indicates one or more first subsets corresponding to a first target resource set, resources included in the first subset belongs to the first target resource set, the first target resource set is one of the one or more resource sets included in the first group, and the second configuration information is transmitted through RRC signaling.

In the embodiments of the present application, one or more may be understood or described as at least one. For example, one or more first resource sets may also be understood or described as at least one first resource set. As another example, one or more first subsets may be understood or described as at least one first subset.

Hereinafter, the wireless communication methods shown in FIG. 3 or FIG. 4 will be further described.

The terminal device receives first configuration information transmitted by the network device. The first configuration information indicates a first group, the first group includes one or more first resource sets, each first resource set includes one or more first resources. The first resource is used for performing channel measurement and/or beam measurement. Here, it can be understood as that the first resource set is a resource set in the first group. The first configuration information is used to configure one or more resource sets included in the first group, and indicates a resource included in each resource set.

In an example, X1=2 resource sets are indicated for the first group G1, the 2 resource sets are denoted as G1_S1 and G1_S2, respectively. Herein, G1_S1 contains resources {A1, A2, A3, A4, A5, A6, A7, A8} and G1_S2 contains resources {B1, B2, B3,...}. It should be noted that, for the convenience of description, taking the value of X1 being 2 as an example, other values of X1 can be directly expanded, here will not give unnecessary details. In addition, for the sake of simplicity of description, taking G1_S1 containing 8 resources as an example, other numbers can be directly expanded, such as: 4, 16, 32, etc.

In the embodiments of the present application, the first resource is a resource in the first group, and the resource may be replaced with a signal resource, a reference signal, or a reference signal resource. The type of the first resource may include one of: a CSI-RS resource and an SSB.

Each first resource set in the first group is used for channel measurement, or for beam measurement, or for both channel measurement and beam measurement.

The first resource set in the first group is used for channel measurement, or for beam measurement, or for both channel measurement and beam measurement, which may also be understood as that the first resource in one or more first resource sets in the first group is used for channel measurement, or for beam measurement, or for both channel measurement and beam measurement.

Based on the first group indicated by the first configuration information, the terminal device may perform channel measurement and/or beam measurement based on the first resource set in the first group, and the terminal device may further report a measured result to the network device.

On the basis of receiving the first configuration information transmitted by the network device, the terminal device further receives second configuration information transmitted by the network device. The second configuration information indicates one or more first subsets for the first target resource set, and a resource in the first subset is referred to as a first resource. The first target resource set belongs to one of the one or more first resource sets in the first group, the first subset may be understood as a subset corresponding to the first resource set, and a first resource included in each of the one or more first subsets belongs to the first target resource set.

For the network device, on the basis of transmitting the first configuration information to the terminal device, the network device also transmits second configuration information to the terminal device. The second configuration information indicates one or more first subsets for a first target resource set. A resource in a first subset is referred to as a first resource. The first target resource set belongs to one of the one or more first resource sets in the first group. The first subset may be understood as a subset corresponding to the first resource set, and a first resource included in each of the one or more first subsets belongs to the first target resource set.

In the embodiments of the present application, the second configuration information indicates or configures a plurality of corresponding subsets for one of the one or more resource sets in the first group. The first resource set targeted by the second configuration information is referred to as a first target resource set.

In the embodiments of the present application, the network device configures a plurality of subsets for the first target resource set, which can effectively reduce the signaling overhead.

In an example, X1=2 resource sets is indicated for the first group G1, the 2 resource sets are denoted as G1_S1 and G1_S2, respectively. Herein, G1_S1 contains resources {A1, A2, A3, A4, A5, A6, A7, A8}. The second configuration information may indicate K1 subset for the resource set G1_S1. The first subset may contain resources {A1, A2, A3, A4}. If a second subset is indicated, in one example, the second subset may contain resources {A3, A4, A5, A6}, and in another example, the second subset may contain resources {A5, A6, A7, A8}. At this time, the resource set G1_S1 belongs to the first target resource set.

In order to simplify the description, a value of K1 being 2 is taken as an example in the below description, and other values can be directly expanded. In addition, in order to simplify the description, one subset including 4 resources is taken as an example, and other numbers can be directly expanded, such as: 2, 3, 5, 6, 8, etc.

In the embodiments of the present application, the network device may have a plurality of different methods to estimate which beams have better channel quality for a certain UE, thereby determining which first resources in a corresponding first target resource set are included in one first subset. For example:
1. The network device performs prediction based on information reported by the UE and/or information obtained through other approaches (such as measured results obtained by the network measuring signals transmitted by the UE or uplink transmission) through machine learning (ML) methods or artificial intelligence (AI) methods or statistical methods. Herein, deep learning (deep learning) is commonly used in the AI methods;
2. The UE predicts several best beams for itself according to its own measured results through machine learning methods or artificial intelligence methods, or statistical methods, and then reports the predicted results to the network device.

This method of using AI/ML technology to assist beam management can be collectively referred to as AI-based beam management. Whether or not AI/ML technology is used or which AI/ML technology is used may be invisible from the perspective of the network and the terminal. That is, one party (e.g., UE or network) may not know which AI/ML technology is adopted by the other party (e.g., network or UE). In addition to using AI/ML technology, the network or UE can also use non-AI/ML technology (non-AI/ML) to realize similar functions or achieve similar effects.

In the embodiments of the present application, the first configuration information is configured through RRC signaling. In an example, for an NR system, one resource set in the first group may be configured through an information element non-zero-power (NZP)-CSI-RS-ResourceSet (NZP-CSI-RS-ResourceSet) in RRC signaling, and the resources in the resource set are indicated through an information element NZP-CSI-RS-Resource in RRC signaling.

In the embodiments of the present application, the second configuration information is configured through RRC signaling, thereby realizing the configuration of the subset.

It may be appreciated that the first configuration information and the second configuration information may be transmitted through a same RRC signaling or may be transmitted through different RRC signaling.

In the embodiments of the present application, a terminal device receives first configuration information and second configuration information transmitted by a network device. The first configuration information indicates a first group including one or more first resource sets, and the second configuration information indicates one or more first subsets corresponding to a first target resource set in the one or more first resource sets, so that the network device configures the subset for the resource set on the basis of configuring the resource sets for beam measurement and/or beam measurement to the terminal device, so that the terminal device can flexibly select measurement signals according to a communication environment when measuring and/or reporting signals based on the subset.

In some embodiments, the first configuration information and the second configuration information are a same configuration information or two pieces of independent configuration information.

If the first configuration information and the second configuration information are the same configuration information, the same configuration information indicates both one or more first resource sets included in the first group and one or more first subsets configured for the first target resource set, thereby reducing signaling overhead.

If the first configuration information and the second configuration information are two pieces of independent configuration information, which may increase the flexibility of signaling, and facilitate the network to optimize the implementation.

In some embodiments, if the first configuration information and the second configuration information are two pieces of independent configuration information, the second configuration information is further used to indicate the first target resource set.

When the second configuration information indicates the first target resource set, the second configuration information may flexibly indicate for which first resource set the subset is configured, thereby improving the flexibility of the system.

In the embodiments of the present application, if the second configuration information does not indicate the first target resource set, the first target resource set may be determined according to a predetermined rule.

In some embodiments, if the first configuration information and the second configuration information are two independent pieces of configuration information, the first configuration information and the second configuration information are transmitted in a same RRC information element (IE).

The first configuration information and the second configuration information are transmitted in the same RRC IE, thereby reducing signaling overhead.

In some embodiments, the second configuration information is further used to indicate a subset identifier of each of the one or more first subsets included in the first target resource set.

For one or more first subsets included in the first target resource set, the second configuration information indicates an identifier of the corresponding first subset, that is, a subset identifier.

In an example, the second configuration information may indicate K1 subset for the resource set G1_S1, and the second configuration information may indicate a corresponding subset identifier (subset index or subset indicator) for the first first subset corresponding to the resource set G1_S1, so that subsequent signaling may indicate the corresponding subset, such as to select or activate a certain subset.

The second configuration information indicates an identifier of the corresponding first subset, which is convenient for subsequent signaling to indicate the corresponding subset, for example, to select or activate a certain subset.

In some embodiments, a manner in which the second configuration information indicates one or more first subsets corresponding to the first target resource set includes one of the following:
Subset indication manner 1: Indicating resources included in a first subset by means of bitmap;
Subset indication manner 2: indicating, for a first subset of the one or more first subsets, a number of a resource included in the first subset, herein the number of the resource is a number of the resource in the first target resource set;

Subset indication manner 3: indicating, for a first subset of the one or more first subsets, an identifier of a resource included in the first subset, and the identifier of the resource is an identifier in resource configuration information for the resource.

In the Subset indication manner 1, for each of the one or more first subsets corresponding to the first target resource set, it indicates which resources in the first resource set belong to this subset by a bitmap.

In an example, for the first subset corresponding to the first resource set G1_S1, it indicates using a bitmap of 8 bits, where four bits take a value of 1 to indicate resources A1, A2, A3, and A4. Optionally, the 4 bits with a value of 1 can be the first 4 bits (the 4 bits on the left) or the last 4 bits (the 4 bits on the right).

The first subset is indicated based on the Subset indication manner 1, and when the number of resources in the subset is relatively large or the number of resources in the first resource set is relatively large, the signaling overhead can be reduced.

In the Subset indication manner 2, for each of the one or more first subsets corresponding to the first target resource set, it indicates which resources in the first target resource set belong to the first subset by indicating one or more numbers. The number belongs to the number of the resource in the first resource set, and for example, 0 may correspond to the first resource in the first target resource set, and 1 may correspond to the second resource in the first target resource set.

In an example, the first subset corresponding to the resource set G1_S1 includes resources A1, A2, A3, and A4 in the resource set G1_S1. 0, 1, 2, and 3 are directly indicated to correspond to the first resource, the second resource, the third resource, and the fourth resource in the resource set G1_S1, respectively, that is, the resources A1, A2, A3, and A4. Or 1, 2, 3, and 4 are directly indicated to correspond to the first resource, the second resource, the third resource, and the fourth resource in the resource set G1_S1, respectively, that is, the resources A1, A2, A3, and A4.

When the first subset is indicated based on the subset indication manner 2, the signaling overhead can be reduced when the number of resources in the subset is relatively small or the number of resources in the first resource set is relatively small.

In the subset indication manner 3, for each of the one or more first subsets corresponding to the first target resource set, it indicates which resources in the first target resource set belong to the first subset by indicating one or more identifiers, herein the identifier is an identifier in the resource configuration information.

In an example, for the first subset of the resource set G1_S1, identifiers corresponding to A1, A2, A3, and A4 may be directly indicated. The identifiers corresponding to A1, A2, A3, and A4 are corresponding identifiers included in the configuration information for each of the resources A1, A2, A3, and A4.

In the subset indication manner 3, if the resource is a CSI-RS resource (because the CSI-RS resource here is used to actually transmit a CSI-RS signal, it can also be referred to as an NZP-CSI-RS-Resource), then in the NR system, the identifier is nzp-CSI-RS-ResourceId.

When the first subset is indicated based on the subset indication manner 3, the identifier of the resource itself is directly used, therefore, the processing of the terminal device can be simplified. It should be noted that the manner 3 may increase the overhead of RRC signaling.

In some embodiments, if the first group includes at least two first resource sets, the second configuration information indicates a subset corresponding to each of the at least two first resource sets.

In the embodiments of the present application, the second configuration information may indicate first subsets corresponding to a plurality of first resource sets.

As one example, X1 = 2 resource sets are indicated for a first group G1, the 2 resource sets are denoted as G1_S1 and G1_S2, respectively. The second configuration information may indicate a K2 (K2>=1) subset for the resource set G1_S2. At this time, the resource set G1_S2 belongs to the first target resource set.

As yet another example, X1 = 2 resource sets are indicated for a first group G1, the 2 resource sets are denoted as G1_S1 and G1_S2, respectively. The second configuration information may indicate K1 (K1>=1) and K2 (K2>=1) subsets for the resource set G1_S1 and the resource set G1_S2, respectively. At this time, both of the resource set G1_S1 and the resource set G1_S2 belong to the first target resource set.

If the first configuration information and the second configuration information are the same configuration information, and the second configuration information indicates first subsets corresponding to the plurality of first resource sets, a signaling carrying the second configuration information transmitted by the network device to the terminal device may include multiple pieces of second configuration information, and the multiple pieces of configuration information may be implemented through a SEQUENCE structure, herein each element in the SEQUENCE structure corresponds to a piece of second configuration information.

If the first configuration information and the second configuration information are the same configuration information, and the second configuration information indicates first subsets corresponding to the plurality of first resource sets, a signaling carrying the second configuration information and the first configuration information transmitted by the network device to the terminal device may include multiple pieces of first configuration information and multiple pieces of first configuration information, and the multiple pieces of first configuration information are realized through a SEQUENCE (SEQUENCE) structure, that is, SEQUENCE1, and the multiple pieces of second configuration information are realized through a SEQUENCE (SEQUENCE) structure, that is, SEQUENCE2. Herein each element in the SEQUENCE1 corresponds to a piece of first configuration information and each element in the SEQUENCE2 corresponds to a piece of second configuration information.

In some embodiments, based on the wireless communication method shown in FIG. 3, the method further includes operation S501.

In S501, the terminal device receives first indication information transmitted by the network device. The first indication information indicates a first target subset corresponding to the first target resource set. The first target subset is one of one or more subsets corresponding to the first target resource set.

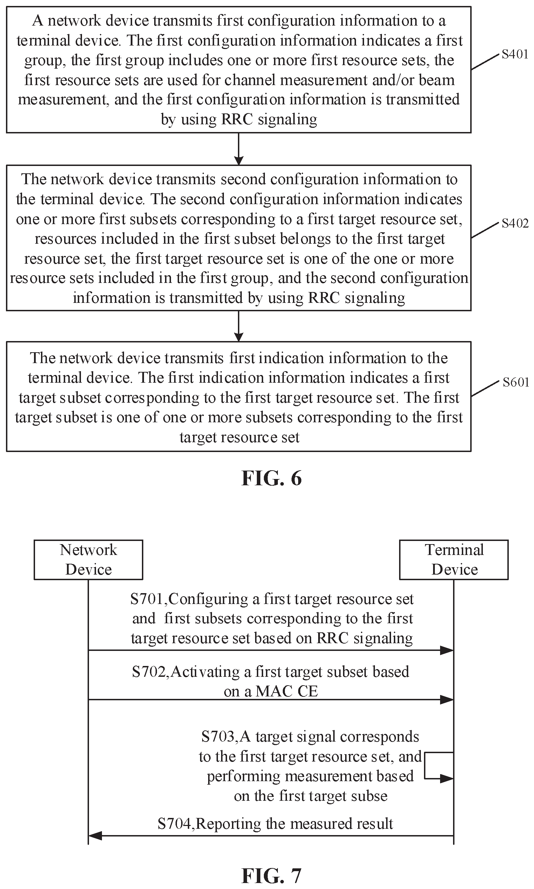

At this time, based on the wireless communication method shown in FIG. 4, as shown in FIG. 6, the wireless communication method includes operation S601.

In S601, the network device transmits first indication information to the terminal device. The first indication information indicates a first target subset corresponding to the first target resource set. The first target subset is one of one or more subsets corresponding to the first target resource set.

The network device transmits the first indication information to the terminal device, the first indication information indicates the first target subset corresponding to the first target resource set, and the first target subset belongs to one or more first subsets corresponding to the first target resource set.

The first indication information includes one or more of resource set indication information indicating the first target resource set and subset indication information indicating the first target subset, thereby indicating the first target subset in the first target resource set.

In the embodiments of the present application, by indicating the first target subset corresponding to the first target resource set through the first indication information, it is possible to flexibly indicate which subset or subsets to use, thereby reducing signaling overhead and improving system performance.

In some embodiments, the transmission manner of the first indication information includes one of the following two manners:

Transmission manner 1: the first indication information is transmitted through one of:
a radio resource control (RRC); or
a Media Access Control element (MAC CE).

Transmission manner 2: the first indication information is transmitted through downlink control information (DCI).

Hereinafter, the transmission manner 1 will be described.

When the first indication information is transmitted through RRC, reliability is high, but the signaling overhead is large and the processing delay is large.

When the network device transmits the first indication information through the RRC or the MAC CE, the first target subset indicated by the first indication information is activated, and the activated first target subset can be used for corresponding measurement and/or reporting on the terminal device side.

When the first indication information is transmitted through the MAC CE, the signaling overhead is small, the processing delay is small, and the reliability is lower than that of the first indication information transmitted through the RRC, but the reliability is higher than that of the first indication information transmitted through the DCI, so that a better compromise and balance can be achieved among a plurality of system design indicators.

In some embodiments, the first target subset meets one or more of the following:

Resources included in the first target subset belong to a first serving cell; or

Resources included in the first target subset belong to a first BWP.

Here, regardless of whether or not the first indication information indicates the first serving cell and/or the first BWP, resources included in the first target subset belong to the first serving cell and/or the first BWP. In some embodiments, the first serving cell may be understood as a serving cell accessed by the terminal device. In some embodiments, the first BWP may be understood as a BWP applied by the terminal device.

In some embodiments, if the first indication information is transmitted through the MAC CE, the first indication information is further used for one of the following:
Indicating a first serving cell, the first indication information is applied to the first serving cell;
Indicating a first bandwidth portion (BWP), the first indication information is applied to the first BWP;
Indicating a second serving cell;
Not indicating the second serving cell;
Indicating a second BWP; or
Not indicating the second BWP.

In the embodiments of the present application, it is optional that the first indication information indicates the first serving cell, whether the first indication information indicates the second serving cell, the first indication information indicates the first BWP, and whether the first indication information indicates the first BWP.

In the embodiments of the present application, the contents indicated by the first indication information may be combined without conflict. For example, the first indication information indicates the first serving cell and does not indicate the second serving cell. For another example, the first indication information indicates the first BWP and does not indicate the second BWP.

The first indication information indicates the first serving cell, which may be understood as that the first indication information indicates a first carrier, the first carrier is a carrier of the first serving cell. The first indication information indicates the first serving cell, which may be understood as that the MAC CE that transmits the first indication information, that is, the first MAC CE indicates the first serving cell, and the first indication information is applied to the first serving cell.

In some embodiments, the first MAC CE indicates the first serving cell through a Serving Cell ID.

The first indication information indicates the first BWP, which may be understood as that the first MAC CE indicates the first BWP, the first indication information is applied to the first BWP. In some embodiments, the first MAC CE may indicate the first BWP through the BWP ID.

The second serving cell is a cell other than the first serving cell. The second BWP is a BWP other than the first BWP.

In some embodiments, the first indication information indicates a first serving cell, and the resource included in the first target subset is in or belongs to the first serving cell.

In some embodiments, the first indication information indicates a first BWP, and the resource included in the first target subset is in or belongs to the first BWP.

In some embodiments, if the first indication information indicates the second serving cell, the resource included in the first target subset belongs to the second serving cell. If the first indication information does not indicate the second serving cell, the resource included in the first target subset belongs to the first serving cell. If the first indication information indicates the second BWP, the resource included in the first target subset belongs to the second BWP. If the first indication information does not indicate the second BWP, the resource included in the first target subset belongs to the first BWP.

The first indication information indicates the second serving cell, which may also be understood as that the first indication information indicates a second carrier or a first MAC CE indicates a second serving cell, and the resource in the first target subset is in or belongs to the second serving cell. As an example, the first MAC CE may indicate the second serving cell through a Serving Cell ID. The first indication information indicates the second serving cell, which can flexibly indicate a signal/resource to be measured in other cells.

The first indication information indicates the second BWP, which may be understood as that the first MAC CE indicates a second BWP, and the resource in the first target subset is in or belongs to the second BWP. As an example, the first MAC CE may indicate the second BWP through a BWP ID. The first indication information indicates the second BWP, which can flexibly indicate a signal/resource to be measured in other BWPs.

The first indication information has not indicated or does not indicate the second serving cell, which may be understood as that the first MAC CE does not indicate a second serving cell (or carrier), and the resources in the first target subset are in or belong to the first serving cell. The first indication information does not indicate the second serving cell, which can reduce the signaling overhead, but cannot indicate a signal to be measured in other cells/carriers with respect to the case where the first indication information indicates the second serving cell.

The first indication information has not indicated or does not indicate the second BWP, which may be understood as that the first MAC CE does not indicate the second BWP, and the resources in the first target subset are in or belong to the first BWP. The first indication information does not indicate the second BWP, which can reduce signaling overhead, but cannot indicate a signal to be measured in another BWP with respect to a case where the first indication information indicates the second BWP.

In some embodiments, based on the wireless communication method shown in FIG. 7, the method further includes the following operations:

If the target signal to be measured and/or reported corresponds to the first target resource set, the terminal device performs measurement and/or reporting based on the first target subset.

If the transmission manner of the first indication information is the transmission manner 1, and the measurement and/or reporting or a certain measurement and/or reporting of the terminal device corresponds to the first target resource set, the terminal device performs measurement and/or reporting based on the first target subset.

If the transmission manner of the first indication information is transmission manner 1, the terminal device does not receive the first indication information, and the target signal to be measured corresponds to the first target resource set, the terminal device performs measurement and/or reports based on the first target resource set.

Hereinafter, the transmission manner 2 will be described.

By transmitting the first indication information through DCI, the DCI signaling processing delay is lower, which makes the terminal device to measure different subsets more quickly.

In some embodiments, the manner in which the first indication information indicates the first target subset includes one of the following:
Target subset indication manner 1: The first indication information indicates a subset identifier of the first target subset; or
Target subset indication manner 2: The first indication information indicates the first target subset by means of a bitmap.

In the target subset indication manner 1, the second indication information indicates the first target subset by indicating a subset identifier. For example, if the first target resource set is G1_S1, the first indication information indicates a subset identifier (a subset index or a subset indicator) of the first target subset corresponding to G1_S1. By indicating the first target subset through the subset identifier, the DCI signaling overhead can be reduced when the number of the first subsets is large.

In the target subset indication manner 2, the first indication information indicates the first target subset by means of a bitmap. For example, bitmap has A bits. If a bit takes a value of 1, it indicates that the corresponding first subset is indicated. Or if a bit takes a value of 1, it indicates that the corresponding first subset is activated. If a bit takes a value of 0, it indicates that the corresponding first subset is not activated. Activating the first subset means that in the corresponding measurement and/or reporting, it is necessary to perform measurement and/or reporting based on the first subset, that is, the first subset is the first target subset. If all A bits have a value of 0, it indicates that the corresponding measurement and/or reporting is based on the first resource set. By indicating the first target subset by using bits, the DCI signaling overhead can be reduced when the number of first subsets is small.

In some embodiments, the first indication information is carried in a first domain in the DCI, and the size of the first domain is determined through one of the followings:

The size of the first domain is determined based on a first number, the first number is a maximum number among a number of subsets corresponding to each of the one or more resource sets corresponding to the first target subset; or

The size of the first domain is indicated by the network device.

The second indication information indicates the first subset by using a first field in the DCI. As one example, some or some values of the first domain correspond to a subset identifier of the first target subset.

Optionally, if there are a plurality of resource sets (in the first group, or in the first group and the second group, or in the first group and the second group and the third group) corresponding to the first target subset, the size of the first domain is determined according to a first number, and the first number is a maximum number of subsets included in each of the plurality of resource sets.

In an example, if three resource sets correspond to the first target subset, and the number of subsets included in each of the three resource sets is M1, M2, and M3, respectively, the first number is the maximum value among M1, M2, and M3. RRC signaling can be reduced in a case where the size of the first domain is determined by the first number with respect to a case that the size is indicated through the network setting.

If the size of the first domain is indicated or configured by the network configuration, the size of the first domain may be determined according to the RRC configuration signaling of the network device or according to the MAC CE signaling transmitted by the network device.

The size of the first domain is indicated or configured by the network configuration, which increases system flexibility.

In some embodiments, if the size of the first domain is indicated by the network device, and the value of the first domain is greater than the number of first subsets included in the first target resource set, the first target subset is determined according to a predetermined rule.

If the value of the first domain is larger than the number of subsets corresponding to the first target resource set, the indication of the first domain is ignored, or a certain subset is determined according to a predetermined rule (which is, for example, configured through RRC in advance or specified by a protocol in advance), and the determined subset is the first target subset.

In some embodiments, the method further includes that the terminal device performs measurement and/or reporting based on the first target subset.

If the transmission manner of the first indication information is the transmission manner 2, the measurement and/or reporting of the terminal device (or a certain measurement and/or reporting) corresponds to the first target resource set, and the terminal device performs the measurement and/or reporting based on the first target subset.

If the transmission manner of the first indication information is the transmission manner 2, the first indication information indicates a first value, and the terminal device performs measurement based on the first target resource set.

When the value of the first field is a first value, the terminal device performs measurement and/or reporting based on the first resource set. The first value may be a predetermined reserved value, such as 0. Here, it is equivalent to a fallback mode, that is, the subset is not used for measurement and/or reporting, but the resource set is directly used for measurement and/or reporting.

In one example, the first target resource set corresponds to six subsets, denoted as subset X, subset Y, subset Z, subset U, subset V, and subset W, respectively. As an example, the first indication information may indicate that the subset X is activated (for example, when the second indication information takes a value of 1), or the subset Y is activated (for example, when the second indication information takes a value of 2), or the subset Z is activated (for example, when the second indication information takes a value of 3), or the subset U is activated (for example, when the second indication information takes a value of 4), or the subset V is activated (for example, when the second indication information takes a value of 5), or the subset W is activated (for example, when the second indication information takes a value of 6). Similarly, the first indication information may not activate any subset. For example, when the value of the first indication information is fixed to 0, no subset may be activated. If the first indication information indicates that the subset Z is activated, the terminal device performs measurement and/or reporting based on the subset Z. If the value of the first indication information is 0, that is, no subset is activated, the terminal device performs measurement and/or reporting based on the first target resource set.

In an example, the network device transmits a MAC CE signaling indicating that some subsets (assuming subsets X, Y, Z) of one or more subsets corresponding to the first resource set (assuming subsets X, Y, Z, U, V, W) may be indicated through DCI, and then the first indication information may indicate that subset X is activated (for example, when the value of the first indication information is 1), or subset Y is activated (for example, when the value of the first indication information is 2), or subset Z is activated (for example, when the value of the first indication information is 3). Similarly, the first indication information may not activate any subset. For example, when the value of the first indication information is fixed to 0, no subset may be activated.

If the transmission manner of the first indication information is the transmission manner 2, the terminal device does not receive the first indication information, the target signal to be measured corresponds to the first target resource set, and the terminal device performs measurement and/or reports based on the first target resource set.

In the embodiments of the present application, the scenario in which the terminal device performs measurement and/or reporting includes two scenarios:
Scenario 1, the terminal device performs measurement and/or reporting based on the first target subset;
Scenario 2: The terminal device performs measurement and/or reporting based on the first target resource set.

The terminal device performs measurement and/or reporting at scenario 1 under the following cases:
Case A1: the transmission manner of the first indication information is transmission manner 1, the first indication information received by the terminal device indicates a first target subset, and the target signal to be measured and/or reported by the terminal device corresponds to the first target resource set;
Case A2: the transmission manner of the first indication information is the transmission manner 2, and the first indication information received by the terminal device indicates the first target subset.

The terminal device performs measurement and/or reporting under Scenario 2 under the following cases:
Case B1: the transmission manner of the first indication information is transmission manner 1, and the terminal device does not receive the first indication information;
Case B2: the transmission manner of the first indication information is the transmission manner 2, and the terminal device does not receive the first indication information;
Case B3: the transmission manner of the first indication information is the transmission manner 2, and the value of the first indication information received by the terminal device is the first value.

Hereinafter, the content related to interference measurement in the scenario 1 in which the terminal device performs measurement and/or reports based the first target subset will be described.

In some embodiments, the terminal device is further configured to perform the following processing:
The terminal device performs interference measurement based on a second target subset and/or a third target subset. The second target subset corresponds to a second target resource set. The second target resource set is one of one or more second resource sets included in a second group. A second resource in the second resource set is used for performing interference measurement on a signal corresponding to the second resource. The third target subset corresponds to a third target resource set. The third target resource set is one of one or more third resource sets included in a third group. A third resource in the third resource set is used for performing interference measurement.

The terminal device performs interference measurement through the second target subset and/or the third target subset, which can assist the system to better select the beam by measuring the interference.

A signal corresponding to the second target subset is signaled with the first target subset, so that the interference measurement is performed on the signals measured through the first target subset by using the second target subset.

The second resource in the second target subset belongs to the second group. One resource in the second group may correspond to one signal (e.g., SSB) or one reference signal (e.g., CSI-RS), or may correspond to one reference signal resource (e.g., CSI-RS resource). The second group includes a plurality of second resource sets, and each second resource set is used for interference measurement. That is to say, resources in one or more resource sets in the second group are used for the terminal device to perform interference measurement on corresponding signals or reference signals.

The resource set of the third target subset is identical to the resource set of the first target subset, so that interference measurements may be performed on signals measured through the first target subset by using the third target subset.

A third resource in the third target subset belongs to the third group. The third group includes one or more resource sets. A resource in the third group may correspond to a frequency domain resource, a time domain resource, or a time domain-frequency domain resource, so that the terminal device performs interference measurement on the corresponding resource.

### For the second target subset

In some embodiments, the first indication information is further used to indicate the second target subset. The second target subset is one of one or more second subsets corresponding to the second target resource set.

In some embodiments, the first indication information indicates a second serving cell and the first indication information indicates a second target subset, then resources within the second target subset are in the second serving cell. In some embodiments, if the first indication information does not indicate the second serving cell and the first indication information indicates the second target subset, resources within the second target subset are within the first serving cell.

In some embodiments, the first indication information indicates a second BWP and the first indication information indicates a second target subset, then resources within the second target subset are in the second BWP. In some embodiments, the first indication information does not indicate the second BWP and the first indication information indicates the second target subset, then resources within the second target subset are within the first BWP.

In some embodiments, if the second target resource set corresponds to one or more second subsets, and the first indication information does not indicate the second target subset, the second target subset is one of the following:
One second subset determined from the one or more second subsets according to a first rule;
One second subset determined from the one or more second subsets according to a first relationship, the first relationship is a correspondence relationship between a first subset of the first target resource set and a second subset of the second target resource set; or

The second target resource set.

In some embodiments, if the second target resource set does not correspond to one or more second subsets, the second target subset is one of the following:
A subset consisting of second resources determined from the second target resource set according to a second rule;
A subset consisting of second resources determined from the second target resource set according to a second relationship, the second relationship is a correspondence relationship between a first resource in the first target resource set and a second resource in the second target resource set configured by the network device; or
The second target resource set.

In the embodiments of the present application, when the terminal device performs measurement and/or reporting based on the second target subset, the determination manner of the second target subset includes one of the following:
If the terminal device is configured with the second group, and the first indication information indicates a second target subset, the terminal device further performs measurement and/or reporting based on the second target subset. That is, the terminal device performs measurement and/or reporting based on the first target subset and the second target subset.

If the terminal device is configured with the second group, and one or more subsets are indicated for the second target resource set in the second group, but the first indication information does not indicate the second target subset corresponding to the second target resource set, the terminal device performs measurement and/or reporting based on the second target subset. The second target subset is determined according to a predetermined rule (e.g., a rule specified in a protocol), or according to a correspondence relationship between a first subset of the first target resource set and a second subset of the second target resource set configured by the network (e.g., the network indicates the correspondence relationship through an RRC parameter), or the second target subset is the second target set. At this time, the first indication information does not need to indicate the second target subset, which may reduce the signaling overhead of the first indication information.

If the terminal device is configured with the second group but one or more subsets are not indicated for the second target resource set, the terminal device performs measurement and/or reporting based on the second target subset. The second target subset is determined according to a predetermined rule (e.g., a rule specified in a protocol), or according to a correspondence relationship between a first resource (or signal resource) of the first target resource set and a second resource (or signal resource) of the second target resource set configured by the network (e.g., the network indicates the correspondence relationship through an RRC parameter), or the second target subset is the second target resource set. At this time, is not required to transmit information for indication one or more subset for the second target resource set, which may reduce total signaling overhead of a system.

In some embodiments, the terminal device receives third configuration information transmitted by the network device. The third configuration information indicates one or more second subsets corresponding to the second target resource set, and resources included in the second subset belong to the second target resource set.

At this time, the network device transmits third configuration information to the terminal device. The third configuration information indicates one or more second subsets corresponding to the second target resource set, and resources included in the second subset belong to the second target resource set.

In the embodiments of the present application, the third configuration information indicates a plurality of corresponding subsets for one resource set in the second group. A resource set in the second group is referred to as a second resource set, and the second resource set targeted by the third configuration information is referred to as a second target resource set.

The terminal device receives the third configuration information transmitted by the network device. The third configuration information indicates one or more second subsets for a second target resource set. A resource in a second subset is referred to as a second resource. The second target resource set belongs to one of the one or more second resource sets in the second group, the second subset may be understood as a subset corresponding to the second resource set, and the second resource included in each of the one or more second subsets belongs to the second target resource set.

In the embodiments of the present application, the network device configures a plurality of subsets for the second target resource set, which can effectively reduce the signaling overhead.

In an example, X3=2 resource sets is indicated for the second group G2, the 2 resource sets are denoted as G2_S1 and G2_S2, respectively, G2_S1 contains resources {B1, B2, B3, B4, B5, B6, B7, B8}. The third configuration information may indicate a K3 subset for the resource set G2_S1. The first subset may contain resources {B1, B2, B3, B4}, if a second subset is indicated, then in one example, the second subset may contain resources {B3, B4, B5, B6}, in another example, the second subset may contain resources {B5, B6, B7, B8}. At this time, the resource set G2_S1 belongs to the first target resource set.

In some embodiments, the third configuration information is transmitted through RRC signaling.

In some embodiments, the third configuration information and the second configuration information are a same configuration information or two pieces of independent configuration information.

When the second configuration information and the third configuration information are the same configuration information, one or more first subsets configured for the first target resource set and one or more second resource sets configured for the second target resource set are simultaneously indicated through the same configuration information, thereby reducing signaling overhead.

The second configuration information and the third configuration information are two pieces of independent and different configuration information, which can increase the flexibility of signaling and facilitate the network to optimize the implementation.

In some embodiments, if the third configuration information and the second configuration information are two pieces of independent configuration information, the third configuration information is further used to indicate the second target resource set.

When the third configuration information indicates the second target resource set, the third configuration information may flexibly indicate for which second resource set a subset is to be configured, thereby improving the flexibility of the system.

In the embodiments of the present application, if the third configuration information does not indicate the second target resource set, the second target resource set may be determined by a predetermined rule or based on the first target resource set.

In some embodiments, if the third configuration information and the second configuration information are two pieces of independent configuration information, the third configuration information and the second configuration information are transmitted in a same RRC information element.

In some embodiments, the third configuration information is further used to indicate a subset identifier of each of the one or more second subsets corresponding to the second target resource set.

In some embodiments, the manner in which the third configuration information indicates one or more second subsets corresponding to the second target resource set includes one of the following:
A resource included in the second subset is indicated by means of a bitmap;
A number of a resource included in the second subset is indicated for a second subset of the one or more second subsets, the number of the resource is a number of the resource in the second target resource set; or
An identifier of a resource included in the second subset is indicated for a second subset of the one or more second subsets, the identifier of the resource is an identifier in resource configuration information forthe resource.

In some embodiments, if the second group includes at least two first resource sets, the third configuration information indicates a subset corresponding to each of the at least two second resource sets.

In the embodiments of the present application, the manner in which the third configuration information indicates the second subset may refer to the manner in which the second configuration information indicates the first subset, and the description thereof will not be repeated herein.

### For a third target subset

In some embodiments, the first indication information is further used to indicate a third target subset. The third target subset is one of one or more third subsets corresponding to the third target resource set.

In some embodiments, the first indication information indicates a second serving cell and the first indication information indicates a third target subset, then resources within the third target subset are in the second serving cell. In some embodiments, if the first indication information does not indicate the second serving cell and the first indication information indicates the third target subset, resources within the third target subset are within the first serving cell.

In some embodiments, the first indication information indicates a second BWP and the first indication information indicates a third target subset, then resources within the third target subset are in the second BWP. In some embodiments, if the first indication information does not indicate the second BWP and the first indication information indicates the third target subset, resources within the third target subset are within the first BWP.

In some embodiments, if the third target resource set corresponds to one or more third subsets, and the first indication information does not indicate the third target subset, the third target subset is one of the following:
One third subset determined from the one or more third subsets according to a third rule;
One third subset determined from the one or more third subsets according to a third relationship, the third relationship is a correspondence relationship between a first subset of the first target resource set and a third subset of the third target resource set; or
The third target resource set.

In some embodiments, if the third target resource set does not correspond to one or more third subsets, the third target subset is one of the following:
A subset consisting of third resources determined from the third target resource set according to a fourth rule;
A subset consisting of third resources determined from the third target resource set according to a fourth relationship, the fourth relationship is a correspondence relationship between a first resource in the first target resource set and a third resource in the fourth target resource set configured by the network device; or
The third target resource set.

In the embodiments of the present application, when the terminal device performs measurement and/or reporting based on the third target subset, the determination manner of the third target subset includes one of the followings:
If the terminal device is configured with the third group, and the first indication information indicates a third target subset, the terminal device further performs measurement and/or reporting based on the third target subset. At this time, that is, the terminal device performs measurement and/or reporting based on the first target subset and the third target subset.

If the terminal device is configured with the third group, and one or more subsets are indicated for the third target resource set in the third group, but the first indication information does not indicate the third target subset corresponding to the third target resource set, the terminal device performs measurement and/or reporting based on the third target subset. The third target subset is determined according to a predetermined rule (for example, a rule specified in a protocol), or according to a correspondence relationship between a first subset of the first target resource set and a third subset of the third target resource set configured by the network (for example, the network indicates the correspondence relationship through an RRC parameter), or the third target subset is the third target resource set. At this time, the first indication information does not need to indicate the third target subset, which may reduce the signaling overhead of the first indication information.

If the terminal device is configured with the third group but one or more subsets are not indicated for the third target resource set, the terminal device performs measurement and/or reports based on the third target subset. the third target subset is determined according to a predetermined rule (e.g., a rule specified in a protocol), or according to a correspondence relationship between a first resource (or signal resource) of the first target resource set and a third resource (or signal resource) of the third target resource set configured by the network (e.g., the network indicates the correspondence relationship through an RRC parameter), or the third target subset is the third target resource set. At this time, it is not required to transmit information for indicating one or more subset for the third target resource set, which may reduce the total signaling overhead of the system.

It can be understood that if the second group and the third group are indicated for the terminal device, and the first indication information also indicates the second target subset and the third target subset, the terminal device performs measurement and/or reporting based on the first target subset, the second target subset, and the third target subset.

In the embodiments of the present application, when the terminal device performs measurement and/or reporting based on the first target subset, the second target subset, and the third target subset, the determination manners of each of the first target subset, the second target subset, and the third target subset may be independent of each other.

In some implementations, the terminal device receives fourth configuration information transmitted by the network device. The fourth configuration information indicates one or more third subsets corresponding to the third target resource set, and resources included in the third subset belong to the third target resource set.

At this time, the network device transmits the fourth configuration information to the terminal device. The fourth configuration information indicates one or more third subsets corresponding to the third target resource set, and resources included in the third subset belong to the third target resource set.

In the embodiments of the present application, the fourth configuration information indicates a plurality of corresponding subsets for one resource set in the third group. The resource set in the third group is referred to as a third resource set, and the third resource set targeted by the fourth configuration information is referred to as a third target resource set.

The terminal device receives the fourth configuration information transmitted by the network device. The fourth configuration information indicates one or more third subsets for a third target resource set, and a resource in the third subset is referred to as a third resource. The third target resource set belongs to one of the one or more third resource sets in the third group, the third subset may be understood as a subset corresponding to the third resource set, and the third resource included in each of the one or more third subsets belongs to the third target resource set.

In the embodiments of the present application, the network device configures a plurality of subsets for the third target resource set, which can effectively reduce the signaling overhead.

In an example, X4=2 resource sets are indicated for the third group G3, the 2 resource sets are denoted as G3_S1 and G3_S2, respectively. G3_S1 contains resources {C1, C2, C3, C4, C5, C6, C7, C8}, and the fourth configuration information may indicate a K4 subset for the resource set G3_S1. The first subset may contain resources {C1, C2, C3, C4}. If a second subset is indicated, then in one example, the second subset may contain resources {C3, C4, C5, C6}, and in another example, the second subset may contain resources {C5, C6, C7, C8}. At this time, the resource set G3_S1 belongs to the third target resource set.

In some embodiments, the fourth configuration information is transmitted through RRC signaling.

In some embodiments, the fourth configuration information and the second configuration information are a same configuration information or two pieces of independent configuration information.

When the second configuration information and the fourth configuration information are the same configuration information, one or more first subsets configured for the first target resource set and one or more third resource sets configured for the third target resource set are simultaneously indicated by using the same configuration information, thereby reducing signaling overhead.

The second configuration information and the fourth configuration information are two pieces of independent and different configuration information, which can increase the flexibility of signaling and facilitate the network to optimize the implementation.

In some embodiments, if the fourth configuration information and the second configuration information are two pieces of independent configuration information, the fourth configuration information is further used to indicate the third target resource set.

When the fourth configuration information indicates the third target resource set, the fourth configuration information may flexibly indicate for which third resource set a subset is to be configured, thereby improving the flexibility of the system.

In the embodiments of the present application, if the fourth configuration information does not indicate the third target resource set, the third target resource set may be determined by a predetermined rule or based on the first target resource set.

In some embodiments, if the fourth configuration information and the second configuration information are two pieces of independent configuration information, the fourth configuration information and the second configuration information are transmitted in a same RRC information element.

In some embodiments, the fourth configuration information is further used to indicate a subset identifier of each of the one or more third subsets corresponding to the third target resource set.

In some embodiments, a manner in which the fourth configuration information indicates one or more third subsets corresponding to the third target resource set includes one of the followings:
A resource included in the third subset is indicated by means of a bitmap;
A number of a resource included in the third subset is indicated for a third subset of the one or more third subsets, the number of the resource is a number of the resource in the third target resource set; or
An identifier of a resource included in the third subset is indicated for a second subset of the one or more third subsets, and the identifier of the resource is an identifier in resource configuration information for the resource.

In some embodiments, if the third group includes at least two third resource sets, the fourth configuration information indicates a subset corresponding to each of the at least two third resource sets.

In the embodiments of the present application, the manner in which the fourth configuration information indicates the third subset may refer to the manner in which the second configuration information indicates the first subset, and the description thereof will not be repeated here.

In some embodiments, the reporting type of a measured result of the first target subset is applicable to one or more of:
Aperiodic reporting, periodic reporting or semi-persistent reporting.

In the embodiments of the present application, the reporting of the measured result of the measurement performed by the terminal device based on the first target subset is applicable to one or more of the following schemes:
Applicable scheme 1: Applicable to aperiodic reporting. Aperiodic reporting has the highest flexibility. On this basis, adding flexible indications based on subsets can further improve system flexibility. At the same time, if periodic and semi-persistent reporting are not adopted, the implementation complexity of the network and the terminal can be reduced.
Applicable scheme 2: Applicable to periodic reporting. The flexibility of periodic reporting is relatively insufficient. Introducing and adding flexible indications based on subsets can improve the flexibility of the system. At the same time, if aperiodic and semi-persistent reporting are not adopted, the implementation complexity of the network and the terminal can be reduced.
Applicable scheme 3: Applicable to semi-persistent reporting. Compared with aperiodic reporting, the flexibility of semi-persistent reporting is relatively insufficient. Introducing and adding flexible indications based on subsets can improve the flexibility of the system. At the same time, if aperiodic and periodic reporting are not adopted, the implementation complexity of the network and the terminal can be reduced.
Applicable scheme 4: Applicable to aperiodic reporting, periodic reporting and semi-persistent reporting. Therefore, the flexible indication based on subset is introduced to all reporting manners, which can improve the flexibility of the system.
Applicable scheme 5: Applicable to periodic reporting and semi-persistent reporting. Compared with aperiodic reporting, the flexibility of periodic reporting and semi-persistent reporting is relatively insufficient. Introducing and adding flexible indications based on subsets can improve the flexibility of the system, while not adopting aperiodic reporting can reduce the implementation complexity of the network and the terminal.

Hereinafter, contents related to interference measurement in scenario 2 in which the terminal device performs measurement and/or reports based on the first target resource set will be described.

In some embodiments, the terminal device is further configured to perform the following processings:
The terminal device performs interference measurement based on a second target resource set and/or a third target resource set. The second target resource set is one of one or more second resource sets included in a second group. A second resource in the second resource set is used for performing interference measurement on the signal corresponding to the second resource. A third target resource set is one of one or more third resource sets included in a third group. A third resource in the third resource set is used for performing interference measurement.

In the embodiments of the present application, when the terminal device performs measurement and/or reporting based on the first target resource:
Optionally, if the measurement and/or reporting of the terminal device corresponds to the first target resource set and the second target resource set, and the terminal device does not receive the first indication information, the terminal device performs measurement and/or reporting based on the first target resource set and the second target resource set.

Optionally, if the measurement and/or reporting of the terminal device corresponds to the first target resource set and the third target resource set, and the terminal device does not receive the first indication information, the terminal device performs measurement and/or reporting based on the first target resource set and the third target resource set.

Optionally, if the measurement and/or reporting of the terminal device corresponds to the first target resource set, the second target resource set, and the third target resource set, and the terminal device does not receive the first indication information, the terminal device performs measurement and/or reporting based on the first target resource set, the second target resource set, and the third target resource set.

In some embodiments, based on the method of FIG. 3, the method further includes the following operations:
The terminal device reports a first result to the network device. The first result includes a measured result for measurement information and/or a predicted result corresponding to the measurement information, and the predicted result is determined based on the measured result.

The measured result may be a measured result obtained by performing measurement based on the first target subset, or may be a measured result obtained by performing measurement based on the first target resource set.

For the first result, one or more of the following options are included:
Option 1: The first result includes a measured result of the terminal device;
Option 2: The first result includes a predicted result of the terminal device;
Option 3: The first result includes a measured result and a predicted result of the terminal device.

For Option 1, the terminal device performs measurements and reports the measured results to the network device. The network device can determine subsequent beam management operations according to appropriate algorithms or rules (such as deep learning algorithms, AI algorithms, machine learning algorithms, statistical algorithms, etc., and the specific algorithms are not limited), for example, allowing the UE to perform beam measurements, or configuring some beams for the UE, or instructing the UE to use one or some beams for transmission, thereby improving the overall performance of the network.

For Option 2, the terminal device performs measurements, and then the terminal device can use appropriate algorithms or rules (such as deep learning algorithms, AI algorithms, machine learning algorithms, statistical algorithms, etc., the specific algorithms are not limited) to determine which beams are most beneficial to itself and reports these predicted beams to the network device, which can help the network device make better beam management and improve network performance.

For Option 3, it is a combination of options 2 and 1. The measurement information measured by the terminal device itself is more accurate than the predicted result. The terminal device reports the measured measurement information to the network, which can help the network make better beam management and improve network performance.

In the embodiments of the present application, when the terminal device only determines the measured result, the terminal device reports the measured result to the network device. When the terminal device determines the measured result and determines the predicted result based on the measured result, the reported first result is any one of the above-described options.

In some embodiments, if the terminal device determines the measured result and the predicted result, the first result is the measured result or the predicted result, the method further includes the following operation:

The terminal device receives second indication information transmitted by the network device. The second indication information indicates that the first result is the measured result or the predicted result.

The network device also performs the following processing:
The network device transmits second indication information to the terminal device. The second indication information is used to indicate that the first result is the measured result or the predicted result in case that the terminal device determines the measured result and the predicted result.

The network device specifies whether the terminal device reports the predicted result or the measured result through the second indication information, thereby providing greater freedom for the network.

The operation of determining that the first result is the measured result or the predicted result according to the second indication information may be determining that the first result is the measured result or the predicted result according to a value of the second indication information. For example, when the second indication information is a second value, the first result includes a measured result, and when the second indication information is a third value, the first result includes a predicted result.

In an example, when the second indication information is a second value, the first result includes a measured L1-RSRP corresponding to the one signal or signal resource, when the second indication information is a third value, the first result includes a predicted L1-RSRP corresponding to the one signal or signal resource.

In the embodiments of the present application, the operation of determining that the first result is the measured result or the predicted result according to the second indication information may be determining that the first result is the measured result or the predicted result according to whether the network transmits the second indication information or whether the second indication information is configured. For example, when the network device transmits the second indication information, the first result includes the measured result, and when the network device does not transmit the second indication information, the first result includes the predicted result. For another example, when the network device transmits the second indication information, the first result includes the predicted result, when the network device does not transmit the second indication information, the first result includes the measured result.

In an example, when the network device does not transmit or indicate the second indication information, the first result includes a measured L1-RSRP corresponding to the one signal or signal resource, when the network device transmits or indicates the second indication information, the first result includes a predicted L1-RSRP corresponding to the one signal or signal resource.

In an example, when the network device does not transmit or indicate the second indication information, the first result includes a predicted L1-RSRP corresponding to the one signal or signal resource, when the network device transmits or indicates the second indication information, the first result includes a measured L1-RSRP corresponding to the one signal or signal resource.

In some embodiments, the measurement information includes one or more of:
Reference signal received power (RSRP) or layer 1 reference signal received power (L1-RSRP); or
Signal-to-interference noise ratio (SINR) or layer 1 signal-to-interference noise ratio (L1-SINR).

In some embodiments, based on the method illustrated in FIG. 3, the terminal device reports first capability information to the network device. The first capability information indicates a first terminal capability of the terminal device, and the first terminal capability is related to a subset.

Based on the method shown in FIG. 4, the network device further performs the following processing:
The network device receives first capability information reported by the terminal device. The first capability information indicates a first terminal capability of the terminal device, and the first terminal capability is related to a subset.

In the embodiments of the present application, the terminal device reports a first terminal capability to the network device. The first terminal capability indicates all or part of the capability of the first terminal device related to a subset.

In some embodiments, the first capability information is transmitted through RRC signaling, or a MAC CE.

In some embodiments, the first terminal capability includes one or more of the following:
For one resource set, configuring one or more corresponding subsets through RRC;
For one resource set, indicating, through the MAC CE, the corresponding one or more subsets;
For one resource set, indicating, through the DCI, the corresponding one or more subsets; or
The terminal device supports subset-based measurement and/or reporting.

In the embodiments of the present application, the first terminal capability may include that the RRC may configure a subset for one resource set, and/or the MAC CE may indicate one or more subsets, and/or the DCI signaling may indicate one or more subsets, and/or the terminal may support subset-based measurement, and/or the terminal may support subset-based reporting.

In some embodiments, the first terminal capability is reported according to one of the following:
a frequency band, a frequency band combination, a frequency band in a frequency band combination, a carrier on a frequency band in a frequency band combination, a frequency band range, or a terminal device.

The first terminal capability is reported according to the frequency band (per band), which can be understood as that the first terminal capability is reported for a frequency band (band) or corresponding capabilities can be independently reported for different frequency bands. Among them, independent reporting for different frequency bands can allow the terminal devices to have greater freedom. For example, the terminal device can support this function on one or some bands, but does not support this function on other bands, so that more terminals can support this new function.

The first terminal capability is reported according to the frequency band combination (per band combination), which can be understood as that the first terminal capability is reported independently according to a frequency band combination (per band combination). Independent reporting for different frequency band combinations can allow the terminal device to achieve greater freedom. For example, the terminal device does not support this function under a certain frequency band combination, but supports this function under another frequency band combination, so that more terminal devices can support this new function.

The first terminal capability is reported according to the frequency band in the frequency band combination (per band per band combination), which can be understood as that the first terminal capability is reported independently according to each frequency band in the frequency band combination or can be reported independently according to frequency bands in different frequency band combinations. Independent reporting for different frequency band combinations can allow the terminal device to have greater freedom. For example, the terminal device may not support this function under a certain CA, but support this function under some bands in another CA combination, thus allowing more terminals to support this new function.

The first terminal capability is reported according to the carrier on the frequency band in the frequency band combination (per CC per band per band combination, or FSPC), which can be understood as that the first terminal capability is reported independently according to each carrier in each frequency band in the frequency band combination or can be reported independently according to different carrier CCs in frequency bands in different frequency band combinations. Different frequency band combinations are reported independently, and different carriers on a band can also be reported independently, which allows the terminal device to achieve greater freedom, allowing more terminal devices to support this new function.

The capability of the first terminal is reported according to the frequency range (per frequency range), which can be understood as that the first terminal capability is reported according to the Frequency range (FR) or can be reported independently for different FRs, that is, it can be reported independently for FR1 and FR2. Independent reporting for different FRs can allow the terminal device to have greater freedom. For example, this function is not supported in the low frequency (FR1) of the terminal device, but it is supported in FR2 (high frequency), so that more terminals can support this new function.

The first terminal capability is reported according to the terminal device (per UE), which can be understood as that the first terminal capability is reported for the UE, that is, if the UE reports this capability, this capability can be supported in each frequency band. The signaling overhead for terminal capability reporting can be reduced.

Hereinafter, the first configuration information will be further described.

In some embodiments, the first configuration information is associated with a first serving cell.

The first configuration information is associated with the first serving cell, which may be understood as that the first configuration information belongs to the first serving cell, that is, the first configuration information is configuration information of the first serving cell or the first configuration information is transmitted through the first serving cell. The first serving cell may be a serving cell accessed by the terminal device.

In some embodiments, resources in one or more first resource sets in the first group belong to the first serving cell or the second serving cell.

If the resources in one or more first resource sets in the first group belong to the first serving cell, and the first configuration information and the resources configured by using the first configuration information are in the same serving cell, which can effectively reduce processing complexity of the system (including the UE), thereby reducing the difficulty of product implementation.

If the resources in one or more first resource sets in the first group belong to the second serving cell, the first configuration information and the resources configured by using the first configuration information are in different serving cells, which can increase system flexibility, that is, the terminal device can measure the resources of other cells and then report the measured results from another cell, thereby improving the overall performance of the system.

In some examples, one resource in the first resource set corresponds to one signal.

Each first resource in each of the one or more first resource sets in the first group corresponds to one signal, or one reference signal, or one reference signal resource.

In some embodiments, each of the one or more resource sets in the first group may indicate one or more CSI-RS resources, or may indicate one or more SSBs, or may indicate both CSI-RS resource (s) and SSB (s).

In some embodiments, for the NR system, if a resource set in the first group indicates a CSI-RS resource, the resource set is configured with a field "repetition" in the corresponding RRC signaling, and the value thereof may be "on" or "off", that is, repetition transmission is performed or repetition transmission is not performed.

In some embodiments, the first configuration information is further used to configure a second group and/or a third group, the second group includes one or more second resource sets, the third group includes one or more third resource sets, the second resource in the second resource set is used to perform interference measurement on a signal corresponding to the second resource, and the third resource in the third resource set is used to perform interference measurement.

In the embodiments of the present application, the resource set in the first group may be referred to as a first resource set and the resource in the first group may be referred to as a first resource. The resource set in the second group may be referred to as a second resource set and the resource in the second group may be referred to as a second resource. The resource set in the third group may be referred to as a third resource set and the resource in the third group may be referred to as a third resource.

The second group includes one or more second resource sets, and the second resource in the second group may correspond to a signal (e.g., SSB), a reference signal (e.g., CSI-RS), or a reference signal resource (e.g., CSI-RS resource).

Each resource set in the second group is used for interference measurement. That is to say, the resource or reference signal (or reference signal resource) in one or more resource sets in the second group is used for interference measurement.

The third group includes one or more third resource sets, and a third resource in the third group may correspond to one frequency domain resource, one time domain resource, or a time domain-frequency domain resource.

In the embodiments of the present application, when the first configuration information indicates both the first group and the second group, the terminal device may perform channel measurement based on one or more resource sets in the first group and interference measurement based on the corresponding one or more resource sets in the second group according to the network configuration information, and then the first terminal device determines a report to the network based on the measured results. At this time, the terminal device can directly measure other interfering beams, so that the communication quality information can be obtained more accurately and the overall performance of the system can be improved.

In the embodiments of the present application, when the first configuration information indicates both the first group and the third group, the terminal device can perform channel measurement based on one or more first resource sets in the first group and interference measurement based on one or more third resource sets corresponding to the third group according to the network configuration information, and then the terminal device determines a report to the network device based on the measured results. The terminal device can measure the total interference of other cells or other beams, so as to obtain the communication quality information more accurately and improve the overall performance of the system.

In the embodiments of the present application, when the first configuration information indicates all of the first group, the second group, and the third group, the terminal device can perform channel measurement based on one or more first resource sets in the first group, interference measurement based on one or more second resource sets corresponding to the second group, and interference measurement based on one or more third resource sets corresponding to the third group according to the network configuration information, and then the terminal device determines a report to the network device based on the measured results. The terminal device can directly measure the interference of a specific cell or a specific beam, and also measure the total interference of other cells or other beams, so that the communication quality information can be obtained more accurately and the overall performance of the system can be improved.

In some embodiments, a second resource in one or more second resource sets in the second group belongs to a first serving cell or a second serving cell or a third serving cell.

If the second resource belongs to the first serving cell, the first configuration information configures resources in the same cell, and at this time, the first resource, the second resource, and the third resource may belong to the same serving cell. The configuration information and the resources configured by using the configuration information are in the same serving cell, which can effectively reduce the processing complexity of the system (including the UE), thereby reducing the difficulty of product implementation.

If the second resource belongs to the second serving cell or the third serving cell, the first configuration information configures resources in other cells for the second group, which may increase the system flexibility. That is, the UE can measure resources (such as signal resources) of other cells, and then report the measured results from another cell, thereby improving the overall performance of the system. If the second resource belongs to the second serving cell, resources for measuring channel/beam and resources for measuring the interference belong to the same cell, which can better reflect the communication quality.

In some embodiments, one second resource in the second resource set corresponds to one signal.

A second resource in the second group corresponds to one signal (or a reference signal resource or a reference signal), and the first configuration information indicates information corresponding to some or all of the following:
A type of signal/reference signal;
An Identifier or number of the signal/reference signal;
Resources corresponding to the signal/reference signal (e.g. a frequency domain resource, or a time domain resource, or a time domain-frequency domain resource);
Power information corresponding to the signal/reference signal;
Scrambling information corresponding to the signal/reference signal, for example, the scrambling information is used to produce a signal/reference signal sequence; or
QCL information or TCI-state information corresponding to the signal/reference signal.

Optionally, each of the one or more second resource sets in the second group may indicate one or more CSI-RS resources. Optionally, the second resource set may indicate a set of CSI-RS resources by using a SEQUENCE structure.

In some embodiments, one third resource set in the third group indicates one or more of the following: a time domain resource, a frequency domain resource, and a time frequency resource.

For a third resource in the third group, the first configuration information may indicate information corresponding to some or all of the following:
An identifier or number of the resource; or
A resource corresponding to the signal/reference signal (e.g., a frequency domain resource, or a time domain resource, or a time domain-frequency domain resource).
If the first configuration information indicates the resource corresponding to the signal or the reference signal, the first configuration information may indicate one or more of the following information: a corresponding subcarrier position, a corresponding symbol position, an occupied PRB resource, a period, and an offset.

In the embodiments of the present application, the time-frequency resource may be configured by using a CSI-Interference Management (IM) resource (CSI-IM resource).

In some embodiments, the third resource set in the third group and the corresponding first resource set in the first group belong to the same serving cell, and resources for measuring channel/beam and resources for measuring the interference belong to the same cell, which can better reflect the communication quality.

In some embodiments, the first configuration information is transmitted through RRC.

In some embodiments, the first configuration information is further used to indicate that one of the following measurement information is reported:
L1-RSRP or RSRP; or
L1-SINR or SINR.

In some embodiments, the first configuration information is further used to indicate that the reporting type is aperiodic reporting, periodic reporting, or semi-persistent reporting.

The terminal device may report the first result based on the reporting type indicated by the first configuration information.

The wireless communication method provided by the embodiments of the present application can be implemented including but not limited to one or more of the following scenarios A-C:
Scenario A, as shown in FIG. 7, includes operations S701-S704.

In S701, a network device configures a first target resource set and a first subset corresponding to the first target resource set to a terminal device through RRC.

The network device configures the first group and one or more resource sets included in the first group to the terminal device through the first configuration information carried by the RRC, and configures one or more first subsets corresponding to the first target resource set to the terminal device through the second configuration information carried by the RRC. The resource set configured by the first configuration information includes the first target resource set.

In S702, the network device activates a first target subset in the subsets corresponding to the first target resource set through the MAC CE.

The network device transmits the first indication information to the terminal device through the MAC CE. The first indication information indicates the first target subset in the first target resource set, thereby activating the first target subset. Herein, the first indication information may activate one or more first target subsets.

In S703, a target signal to be measured corresponds to the first target resource set, and the terminal device performs measurement based on the first target subset.

The terminal device performs channel measurement and/or beam measurement based on the first target subset, to obtain a measured result.

In S704, the terminal device reports the measured result.

In S704, when reporting the measured result, the terminal device may determine a predicted result based on the measured result, and report the predicted result to the network device, or report the measured result and the predicted result to the network device together.

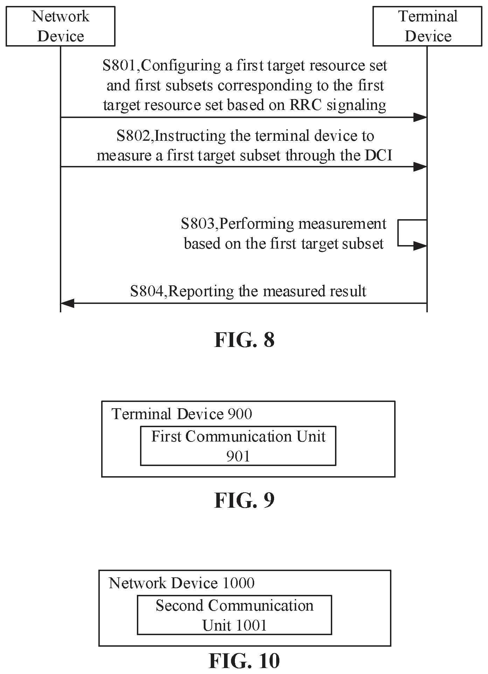

Scenario B, as shown in FIG. 8, includes operations S801-S803.

In S801, a network device configures a first target resource set and a first subset corresponding to the first target resource set to a terminal device through RRC.

The network device configures the first group and one or more resource sets included in the first group to the terminal device through the first configuration information carried by the RRC, and configures one or more first subsets corresponding to the first target resource set to the terminal device through the second configuration information carried by the RRC. Herein, the resource sets configured by the first configuration information include the first target resource set.

In S802, the network device instructs the terminal device to measure a first target subset through the DCI.

The network device transmits the first indication information to the terminal device through the DCI, and the first indication information indicates the first target subset in the first target resource set, thereby instructing the terminal device to perform measurement based on the first target subset. Herein, the first indication information may indicate one or more first target subsets.

In S803, the terminal device performs measurement based on the first target subset.

The terminal device performs channel measurement and/or beam measurement based on the first target subset, to obtain a measured result.

In S704, the terminal device reports the measured result.

In S704, when reporting the measured result, the terminal device may determine a prediction 804result based on the measured result, and report the predicted result to the network device, or report the measured result and the predicted result to the network device together.

Scenario C: When the terminal device performs measurement based on the first target subset in scenario A and scenario B, the terminal device performs interference measurement based on the second target subset and/or the third target subset corresponding to the first target subset, to improve the accuracy of the measured result obtained by performing the measurement based on the first target subset.

In the related art, the terminal device performs measurement and/or reporting based on the corresponding resource set according to the configuration and/or indication information (for example, RRC or RRC+DCI) of the network device. On this basis, in the wireless communication method according to the embodiments of the present application, the terminal device may further perform measurement and/or reporting based on one or more subsets corresponding to the corresponding resource set according to the network configuration information and/or indication information.

Hereinafter, the wireless communication method provided by the embodiments of the present application will be further described.

In the following description, in order to simplify the description, reference to an RS may refer to the transmitted RS itself, or may refer to a resource corresponding to the RS. For example, when referring to a CSI-RS, it may refer to a CSI-RS resource. Similarly, when referring to a CSI-IM, it may refer to a CSI-IM resource.

The wireless communication method provided by the embodiments of the present application includes, but is not limited to, the following aspects:
1. A first terminal device receives first configuration information transmitted by the first network device. The first configuration information indicates a first group, and the first group includes one or more resource sets (sets), and the resource set may also be referred to as a Signal Resource set (Signal Resource Set) or an interference Signal Resource set (Reference signal resource set). For the first configuration information:
   a. Optionally, the first configuration information is transmitted through RRC signaling.
   b. Optionally, the first configuration information belongs to a serving cell A: the first serving cell. That is, the first configuration information is configuration information in the first serving cell.
   c. Optionally, resources in the one or more resource sets in the first group belong to a serving cell B, that is, the resources in the one or more resource sets in the first group are resources in the serving cell B. For the serving cell B: optionally, the serving cell A and the serving cell B are the same serving cell, and at this time, the configuration information and the resources are in the same serving cell, which can effectively reduce the processing complexity of the system and thus reduce the difficulty of product implementation. Optionally, the serving cell A and the serving cell B are different serving cells, and at this time, which can increase the system flexibility. That is, the UE can measure resources (such as signal resources) of other cells, and then report the measured results from the other cell, thereby improving the overall performance of the system.
   d. Optionally, each resource in the one or more resource sets in the first group corresponds to one signal, or one reference signal, or one reference signal resource.
   e. Optionally, each resource set of the one or more resource sets in the first group may indicate one or more CSI-RS resources, or may indicate one or more SSBs, or may indicate both the CSI-RS resource (s) and the SSB (s). Herein, optionally, each resource set is used for channel measurement, or for beam measurement, or for both channel measurement and beam measurement. Optionally, for the NR system, if one of the above-described resource sets indicates a CSI-RS resource, the signal set is configured with a field "repetition" in the corresponding RRC signaling, and the value thereof may be "on" or "off".
   f. Optionally, the first configuration information indicates that L1-RSRP, or L1-SINR, or RSRP, or SINR is reported, so as to be combined with the 5G system design.
   i. Optionally, for the NR system, the first configuration information may include a field "reportQuantity", and the value thereof may be cri-RSRP, ssb-Index-RSRP, cri-SINR, or ssb-Index-SINR.
   g. Optionally, the first configuration information indicates a second group including one or more resource sets. The resource sets in the first group are different from the resource set in the second group. Herein,
      i. Optionally, the resources in one or more resource sets in the second group belong to a serving cell C. That is, the resources in the one or more resource sets in the second group are resources in the serving cell C. Optionally, the serving cell A and the serving cell C are the same serving cell. Optionally, the serving cell A and the serving cell C are not a same serving cell. Optionally, the serving cell B and the serving cell C are the same serving cell;
      ii. Optionally, each resource in the one or more resource sets in the second group corresponds to one signal, or one reference signal, or one reference signal resource;
      iii. Optionally, each of the one or more resource sets in the second group may indicate one or more CSI-RS resources, or may indicate one or more SSBs, or may indicate both CSI-RS resource (s) and SSB (s);
      iv. Optionally, resources in one or more resource sets in the second group are used for interference measurements.
   h. Optionally, the first configuration information indicates a third group, the third group includes one or more resource sets. Resources in the third group do not actually correspond to actual transmission signals. Optionally, each resource set of the one or more resource sets in the third group indicates one or more time domain resources or frequency domain resources or time frequency resources. Optionally, the time-frequency resources may be configured via CSI-IM resource. Optionally, resources in one or more resource sets in the third group are used for interference measurements.
   i. Optionally, the first configuration information indicates that the corresponding reporting type is periodic, aperiodic, or semi-persistent.
   j. Optionally, the first configuration information indicates the first group, or indicates both the first group and the second group, or indicates both the first group and the third group, or indicates both the first group, the second group, and the third group.
   k. the first terminal device may receive multiple pieces of first configuration information transmitted by the first network device. Optionally, the multiple pieces of first configuration information may be transmitted in the same RRC IE.
2. On the basis of 1, the first terminal device receives second configuration information transmitted by the first network device. The second configuration information indicates one or more subsets for a first resource set. Herein the first resource set belongs to one of the one or more resource sets in the first group, and resources (or signal resources) included in each of the one or more subsets belong to the resources in the first resource set. Here, compared with configuring the plurality of sets, configuring the plurality of subsets for a certain set can effectively reduce the overhead of RRC signaling. For the second configuration information:
   a. Optionally, the second configuration information is transmitted through RRC signaling.
   b. Optionally, the first configuration information and the second configuration information are the same configuration information, thereby facilitating reducing signaling overhead.
   c. Optionally, the first configuration information and the second configuration information are different configuration information, thereby increasing the flexibility of signaling and facilitating the network to optimize the implementation. Herein, i, optionally, the second configuration information further indicates the first resource set, which can flexibly indicate a resource set, thereby improving the flexibility of the system; ii. optionally, the first configuration information and the second configuration information are transmitted in the same RRC IE.
   d. Optionally, for a subset in the one or more subsets, the second configuration information indicates an identifier of the corresponding subset, so as to facilitate subsequent signaling to indicate the corresponding subset.
   e. Optionally, for each of the one or more subsets, which resources in the first resource set belong to the subset is indicated by means of a bitmap, and when the number of resources in the subset is relatively large or the number of resources in the first resource set is relatively large, the signaling overhead can be reduced as compared with f.
   f. Optionally, for each of the one or more subsets, which resources in the first resource set belong to the subset is indicated by indicating one or more numbers. Herein the numbers belong to the numbers of resources in the first resource set, for example, 0 may correspond to the first resource in the first resource set, 1 may correspond to the second resource in the first resource set, and when the number of resources in the subset is relatively small or the number of resources in the first resource set is relatively small, signaling overhead may be reduced compared with e.
   g. Optionally, for each of the one or more subsets, which resources in the first resource set belong to the subset is indicated by indicating one or more identifiers. Herein the identifier is an identifier in the resource configuration information. For example, if the resource is a CSI-RS resource (because the CSI-RS resource here is to actually transmit a CSI-RS signal, it can also be referred to as an NZP-CSI-RS-Resource, and NZP refers to non-zero-power), then the identifier is nzp-CSI-RS-ResourceId in the NR system. The ID of the CSI-RS resource itself is used directly, which can simple the process of UE, but the disadvantage is that the overhead of RRC signaling may be increased.
   h. Optionally, the second configuration information may indicate subsets corresponding to a plurality of first resource sets.

In the embodiments of the present application, the configuration of the subset of the first resource set in the first group may be extended to the configuration of the subset of the second resource set in the second group and the configuration of the subset of the third resource set in the third group.

For example i, the third configuration information is used to indicate one or more subsets for a second resource set. Herein, the second resource set belongs to one of the one or more resource sets in the second group, each of the one or more subsets containing resources (or signal resources) belonging to resources in the second signal set.

For example ii, the fourth configuration information is used to indicate one or more subsets for a third resource set. Herein, the third resource set belongs to one of the one or more resource sets in the third group, each of the one or more subsets contains resources belonging to resources in the third resource set. Herein, the resources in the third resource set, i.e. the third resource, are not signal resources.

For the third configuration information and the fourth configuration information:
Optionally, the third configuration information and the second configuration information are the same configuration information.

Optionally, the four configuration information and the second configuration information are the same configuration information.

Optionally, the third configuration information, the fourth configuration information, and the second configuration information are the same configuration information.

3. Optionally, on the basis of 2, a first terminal device receives first indication information transmitted by a first network device. The first indication information indicates a first subset corresponding to a first resource set. The first subset belongs to a subset among one or more subsets corresponding to the first resource set. Therefore, by the first indication information, it can flexibly indicate which subset or which subsets to be used, thereby reducing signaling overhead and improving system performance. Here, the first indication information is transmitted through RRC or MAC CE. For the first indication information transmitted through RRC or MAC CE:
a. Optionally, the first indication information further indicates a second subset corresponding to a second resource set, and the second subset belongs to a subset of one or more subsets corresponding to the second resource set, so that the corresponding interference measurement subset can be flexibly indicated simultaneously in the same signaling, which increases system flexibility on one hand, and does not significantly increase signaling overhead on the other hand.
b. Optionally, the first indication information indicates a third subset corresponding to a third resource set, and the third subset belongs to a subset in one or more subsets corresponding to the third resource set, so that the corresponding interference measurement subset can be flexibly indicated simultaneously in the same signaling, which increases system flexibility on one hand and does not significantly increase signaling overhead on the other hand.
c. Optionally, the first indication information is transmitted through RRC signaling, and the RRC signaling is used, which has a simple design and high reliability, but has the disadvantages of large signaling overhead and large processing delay.
d. Optionally, the first indication information is transmitted through MAC CE. Compared with using RRC signaling, using MAC CE signaling has less overhead, lower processing delay, better reliability than DCI signaling, and can achieve better compromise and balance among multiple system design indicators.
   i. Optionally, the first indication information indicates a first serving cell or a carrier. The first indication information is applied to the first serving cell or the MAC CE is applied to the first serving cell or (indicates the Serving Cell for which the MAC CE applies). Optionally, the first serving cell is indicated by using the Serving Cell ID.
   ii. Optionally, the first indication information indicates a first BWP, the first indication information is applied to the first BWP or the MAC CE is applied to a first serving cell. Optionally, the first BWP is indicated by using the BWP ID.
   iii. Optionally, the first indication information indicates a second serving cell or a carrier, and the resources (or signal resources) in the first subset are in the second serving cell or belong to the second serving cell, which can flexibly indicate the signals/resources to be measured in other cells. Herein, optionally, the second serving cell is indicated by using a Serving Cell ID. Optionally, if the first indication information also indicates a second subset, resources (or signal resources) in the second subset are in the second serving cell. Optionally, if the first indication information further indicates a third subset, resources in the third subset are in the second serving cell.
   iv. Optionally, if the second serving cell is not indicated, resources (or signal resources) within the first subset are in the first serving cell, so that signaling overhead can be reduced, but signals to be measured of other cells/carriers cannot be indicated. Optionally, if the first indication information also indicates a second subset, resources (or signal resources) in the second subset are in the first serving cell. Optionally, if the first indication information further indicates a third subset, the resources in the third subset are in the first serving cell.
   v. Optionally, the first indication information indicates a second BWP, and resources (or signal resources) in the first subset are in the second BWP (or belong to the second BWP), which can flexibly indicate signals/resources to be measured in other BWPs. Optionally, the second BWP is indicated by using the BWP ID. Optionally, if the first indication information also indicates a second subset, resources (or signal resources) in the second subset are in the second BWP. Optionally, if the first indication information also indicates a third subset, the resourced in the third subset are in the second BWP.
   vi. Optionally, if the second BWP is not indicated, the resources (or signal resources) within the first subset are in the first BWP, which can reduce the signaling overhead, but cannot indicate signals to be measured in other BWPs. Optionally, if the first indication information also indicates a second subset, the resource signal (or signal resource) in the second subset is in the first BWP. Optionally, if the first indication information also indicates a third subset, the resource in the third subset is in the first BWP.
   vii. Optional, the above schemes are applicable to the case of aperiodic reporting. Herin, aperiodic reporting has the highest flexibility. On this basis, adding flexible indications based on subsets can further improve the flexibility of the system. If periodic and semi-persistent reporting are not adopted, the complexity of network and terminal implementation can be reduced.
   viii. Optionally, the above schemes are applicable to the case of periodic reporting. Herein, periodic reporting is relatively insufficient in flexibility. Introducing and adding flexible indications based on subsets can improve system flexibility. At the same time, aperiodic and semi-persistent reporting are not adopted, which can reduce the implementation complexity of the network and terminal.
   ix. Optional, the above schemes are applicable to the case of semi-persistent reporting. Compared with aperiodic reporting, the flexibility of semi-persistent reporting is relatively insufficient. Introducing flexible indications based on subsets can improve the flexibility of the system. At the same time, aperiodic and periodic reporting are not adopted, which can reduce the complexity of network and terminal implementation.
   x. Optionally, the above schemes are applicable to the case of aperiodic reporting, periodic reporting and semi-persistent reporting. Introducing and adding flexible indications based on subsets to all reporting methods can improve system flexibility.
   xi. Optionally, the above schemes are applicable to periodic reporting and semi-persistent reporting. Compared with aperiodic reporting, the flexibility of periodic reporting and semi-persistent reporting is relatively insufficient. Introducing and adding flexible indications based on subsets can improve the flexibility of the system. At the same time, if aperiodic is not adopted, the implementation complexity of the network and terminal can be reduced.

4. On the basis of 3, optionally, if the measurement and/or reporting of the first terminal device (or a certain measurement or reporting, the following are similar and will not be described one by one) corresponds to the first resource set, the first terminal device performs the measurement and/or reporting based on the first subset. In the case of performing the measurement or reporting based on the first subset:
a. Optionally, if the first configuration information configures and indicates the second group, and the first indication information also indicates the second subset, on the basis of the first subset, the first terminal device further performs measurement and/or reporting based on the second subset, which may perform measurement of interference, thereby assisting the system to better select the beam.
b. Optionally, if the first configuration information configures and indicates the third group, and the first indication information also indicates the third subset, on the basis of the first subset, the first terminal device further performs measurement and/or reporting based on the third subset, which may perform measurement of interference, thereby assisting the system to better select the beam.
c. Optionally, if the first configuration information configures and indicates the second group and the third configuration information indicates one or more subsets for the second resource set, but the first indication information does not indicate the second subset corresponding to the second resource set, based on the first subset, the first terminal device further performs measurement and/or reporting based on the second subset. The second subset is determined according to a predetermined rule (for example, a rule specified in a protocol), or according to a correspondence relationship between the subset of the first resource set and the subset of the second resource set configured by the network (for example, the network indicates the correspondence relationship through an RRC parameter), or the second subset is the second resource set, which may reduce the signal overhead of the first indication information.
d. Optionally, if the first configuration information configures and indicates the second group, but there is no third configuration information to indicate one or more subsets for the second resource set, based on the first subset, the first terminal device further performs measurement and/or reporting based on the second subset. The second subset is determined according to a predetermined rule (for example, a rule specified in a protocol), or according to a correspondence relationship between the resource (or signal resources) of the first signal set and the resource (or signal resources) of the second resource set configured by the network (for example, the network indicates the correspondence relationship through an RRC parameter), or the second subset is the second resource set. Therefore, it is not required to transmit third configuration information, which can reduce the total signal overhead of a system.
e. Optionally, if the first configuration information configures and indicates the third group and the fourth configuration information indicates one or more subsets for the third resource set, but the first indication information does not indicate the third subset corresponding to the third resource set, based on the first subset, the first terminal device further performs measurement and/or reporting based on the third subset. The third subset is determined according to a predetermined rule (for example, a rule specified in a protocol), or according to a correspondence relationship between the subset of the first resource set and the subset of the third resource set configured by the network (for example, the network indicates the correspondence relationship through an RRC parameter), or the third subset is the third resource set, which may reduce the signal overhead of the first indication information.
f. Optionally, if the first configuration information configures and indicates the third group, but there is no fourth configuration information to indicate one or more subsets for the third resource set, based on the first subset, the first terminal device further performs measurement and/or reporting based on the third subset. The third subset is determined according to a predetermined rule (for example, a rule specified in a protocol), or according to a correspondence relationship between resources (or signal resources) of the first resource set and resources of the third resource set configured by the network (for example, the network indicates the correspondence relationship through an RRC parameter), or the third subset is the third resource set. Therefore, it is not required to transmit the fourth configuration information, which may reduce the total signal overhead of the system.

5. On the basis of 2, optionally, if the measurement and/or reporting of the first terminal device corresponds to the first resource set, and the first terminal device does not receive the first indication information, the first terminal device performs measurement and/or reporting based on the first resource set. Herein, the measurement and/or reporting is performed based on the first resource set itself, rather than based on its subsets. Therefore, the default behavior when the UE does not receive the first indication information is defined, which may reduce additional signaling design. In the case of performing measurement and/or reporting based on the first resource set:
a. Optionally, if the measurement and/or reporting of the first terminal device corresponds to the first resource set and the second resource set, and the first terminal device does not receive the first indication information, the first terminal device performs measurement and/or reporting based on the first resource set and the second resource set.
b. Optionally, if the measurement and/or reporting of the first terminal device corresponds to the first resource set and the third resource set, and the first terminal device does not receive the first indication information, the first terminal device performs measurement and/or reporting based on the first resource set and the third resource set.
c. Optionally, if the measurement and/or reporting of the first terminal device corresponds to the first resource set, the second resource set, and the third resource set, and the first terminal device does not receive the first indication information, the first terminal device performs measurement and/or reporting based on the first resource set, the second resource set, and the third resource set.

6. On the basis of 2, optionally, the first terminal device receives first indication information transmitted by the first network device, herein the first indication information indicates a first subset corresponding to a first resource set, and the first subset belongs to a subset of one or more subsets corresponding to the first resource set. The first indication information is indicated by using DCI signaling. The processing delay of the DCI signaling is lower, which allows the UE to measure different subsets faster. For the first indication information transmitted through DCI:
a. Optionally, if the measurement and/or reporting of the first terminal device corresponds to the first resource set, the first terminal device performs measurement and/or reporting based on the first subset.
b. Optionally, the first indication information indicates the first subset by indicating a subset identifier. When the number of subsets is large, the DCI signaling overhead can be reduced as compared with the following scheme.
c. Optionally, the first indication information indicates the first subset by means of a bitmap, and when the number of subsets is small, the DCI signaling overhead can be reduced as compared with the above aspect.
d. Optionally, the first indication information is indicated by using a first field in the DCI signaling (which may be combined with the previous a, b). Herein, i, optionally, if a plurality of resource sets (in the first group, or in the first group and the second group, or in the first group and the third group, or in the first group, the second group and the third group) have corresponding subsets, the size of the first field is determined according to a first number. The first number is the maximum number of subsets included in the plurality of resource sets (for example, if three resource sets have corresponding subsets, and the numbers of the respective subsets are M1, M2, and M3, respectively, then the first number is the maximum number in M1, M2, and M3), which may reduce the RRC signaling. ii. Optionally, the size of the first domain is configured by the network, which can increase system flexibility.

Optionally, if the value of the first domain is greater than the number of subsets corresponding to the first resource set, the indication of the first domain is ignored, or a certain subset is determined according to a predetermined rule (for example, configured by RRC in advance or pre-specified by a protocol.
e. Optionally, when the value of the first indication information is the first value, the first terminal device performs measurement and/or reporting based on the first resource set. Herein the first value may be a reserved value specified in advance (Note: equivalent to a fallback mode, that is, the resource set is directly used instead of using a subset).
f. Optionally, if the first configuration information configures and indicates the second group, the first terminal device may further perform measurement and/or reporting based on the second subset (i.e., based on the first subset, which is similar in the following). The second subset is determined based on the second indication information, or the second subset is determined based on a predetermined rule, or the second subset is determined based on the correspondence relationship between the second subset and the first subset configured by the network (for example, the network indicates the correspondence relationship through RRC signaling or MAC CE signaling), the interference can be measured to assist the system in better selection of beams.
g. Optionally, if the first configuration information configures and indicates the third group, the first terminal device further performs measurement and/or reporting based on the third subset. The third subset is determined according to the second indication information, or the third subset is determined according to a predetermined rule, or the third subset is determined according to the correspondence relationship between the third subset and the first subset configured by the network (for example, the network indicates the correspondence relationship through RRC signaling or MAC CE signaling), the interference can be measured to assist the system in better selection of beams.
h. Optionally, the above schemes are suitable for aperiodic reporting. Aperiodic reporting has the highest flexibility. On this basis, adding flexible indications based on subsets can further improve the flexibility of the system. At the same time, periodic and semi-persistent reporting are not adopted, which can reduce the complexity of network and terminal implementation.
i. Optionally, the above schemes are suitable for periodic reporting. The flexibility of periodic reporting is relatively insufficient. Introducing and adding flexible indications based on subsets can improve the flexibility of the system. At the same time, aperiodic and semi-persistent reporting are not adopted, which can reduce the complexity of network and terminal implementation.
j. Optionally, the above schemes are suitable for semi-persistent reporting. Compared with aperiodic reporting, the flexibility of semi-persistent reporting is relatively insufficient. Introducing and adding flexible indications based on subsets can improve the flexibility of the system. At the same time, aperiodic and periodic reporting are not adopted, which can reduce the complexity of network and terminal implementation.
k. Optionally, the above schemes are applicable to aperiodic reporting, periodic reporting and semi-persistent reporting. Introducing and adding flexible indications based on subsets to all reporting methods can improve system flexibility.
1. Optionally, the above schemes are suitable for periodic reporting and semi-persistent reporting. Compared with aperiodic reporting, the flexibility of periodic reporting and semi-persistent reporting is relatively insufficient. Introducing and adding flexible indications based on subsets can improve the system flexibility. At the same time, aperiodic is not adopted, which can reduce the implementation complexity of the network and terminal.

7. On the basis of 6, optionally, if the measurement and/or reporting of the first terminal device corresponds to the first resource set, and the first terminal device does not receive the first indication information, the first terminal device performs measurement and/or reporting based on the first resource set. Herein, the measurement is performed based on the first resource set itself rather than its subsets. Therefore, the default behavior when the UE does not receive the first indication information DCI is defined, which can reduce the additional signaling design.
a. Optionally, if the measurement and/or reporting of the first terminal device corresponds to the first resource set and the second resource set, and the first terminal device does not receive the first indication information, the first terminal device performs measurement and/or reporting based on the first resource set and the second resource set.
b. Optionally, if the measurement and/or reporting of the first terminal device corresponds to the first resource set and the third resource set, and the first terminal device does not receive the first indication information, the first terminal device performs measurement and/or reporting based on the first resource set and the third resource set.
c. Optionally, if the measurement and/or reporting of the first terminal device corresponds to the first resource set, the second resource set, and the third resource set, and the first terminal device does not receive the first indication information, the first terminal device performs measurement and/or reporting based on the first resource set, the second resource set, and the third resource set.

8. On the basis of any one of 1 to 7, optionally, the first terminal device reports a first result to the network device. Optionally, the first result may have the following options:
a, Option 1: The first result includes a measured result, for example, a measured L1-RSRP, and/or a corresponding signal identifier or signal resource identifier (for example, one of the identifiers indicates a CSI-RS resource, for another example, the identifier indicates an SSB). In addition to L1-RSRP, it may also be L1-SINR. The terminal performs measurements based on one or more subsets, and reports the measured results to the network. The network may determine subsequent beam management operations according to appropriate algorithms or rules (such as deep learning algorithms, AI algorithms, machine learning algorithms, statistical algorithms, etc., but the specific algorithms are not limited), for example, let the UE perform beam measurements, or configure some beams to the UE, or instruct the UE to use one or some beams for transmission, thereby improving the overall performance of the network.
b. Option 2: The first result includes a predicted result of the first terminal device, for example, a signal (or signal resource) predicted by the first terminal device. Optionally, the predicted signal/signal resource may be reported by using an identifier (for convenience, we refer to it as a predicted identifier) (for example, one predicted identifier indicates a predicted CSI-RS resource, for another example, the identifier indicates a predicted SSB). Optionally, the first result may further include an RSRP value (or L1-RSRP value) predicted by the first terminal device, herein the predicted RSRP value corresponds to the predicted signal or signal resource. In addition to L1-RSRP, it can also be L1-SINR. The terminal performs measurements based on one or more subsets, and can use appropriate algorithms or rules (such as deep learning algorithms, AI algorithms, machine learning algorithms, statistical algorithms, etc., the specific algorithm is not limited) to determine which beams are most beneficial to it. Reporting these predicted beams to the network can help the network make better beam management and improve network performance.
c, Option 3: It is a combination of options 2 and 1. That is, the first result includes both the measured L1-RSRP and the predicted L1-RSRP. As one example, additional information may be included in the first result for indicating whether a certain L1-RSRP is a measured result or a predicted result. As another example, whether a certain L1-RSRP is a measured result or a predicted result is indicated according to a predetermined rule (the implementation mode may include different ways such as specified in a protocol or configured by a network), such as the arrangement position in the reporting information. In addition to L1-RSRP, it may also be L1-SINR. In some cases, the L1-RSRP measured by the UE itself may be more accurate than the predicted L1-RSRP. Reporting the measured L1-RSRP to the network can help the network make better beam management, which improves network performance.

In a case where a signal or signal resource may have both a corresponding measured L1-RSRP and a predicted L1-RSRP:
i. Optionally, in the first result, one signal or signal resource may have both a corresponding measured L1-RSRP and a predicted L1-RSRP. In other embodiments, the L1-RSRP may also be replaced with the L1-SINR to report more information to the network, which may help the network to make better beam management and improve network performance.
ii. Optionally, if a signal or signal resource has a corresponding measured L1-RSRP and a predicted L1-RSRP, the reporting of the first result includes the measured L1-RSRP corresponding to the signal or signal resource. In other embodiments, the L1-RSRP here may also be replaced with the L1-SINR. In some cases, the L1-RSRP measured by the UE itself may be more accurate than the predicted L1-RSRP, and reporting the measured L1-RSRP to the network may help the network to make better beam management, which improves network performance.
iii. Optionally, if a signal or signal resource has a corresponding measured L1-RSRP and a predicted L1-RSRP, the reporting of the first result includes the predicted L1-RSRP corresponding to the signal or signal resource. In other embodiments, the L1-RSRP here may also be replaced with the L1-SINR, and the UE reports the predicted L1-RSRP corresponding to this signal resource, which can facilitate the network to better compare the quality of different beams (reference resources). Because they are all predicted, it facilitates the network to perform better beam management, thereby improving network performance.
iv. Optionally, if a signal or a signal resource has a corresponding measured L1-RSRP and a predicted L1-RSRP, it is determined, according to the second indication information, whether the reporting of the first result includes the measured L1-RSRP corresponding to the one signal or the signal resource or the predicted L1-RSRP corresponding to the one signal or the signal resource. The second indication information is transmitted by the first network device to the first terminal device. In other embodiments, L1-RSRP herein may also be replaced with L1-SINR. The network uses signaling to clarify whether the UE reports the predicted L1-RSRP or the measured L1-RSRP, thereby providing the network with greater freedom. Optionally, the determination performed according to the second indication information may be determination performed according to a value of the second indication information. Optionally, the determination performed according to the second indication information may be based on whether the second indication information is transmitted by the network or whether the second indication information is configured, which may reduce the signaling overhead.

9. On the basis of any one of 1 to 8, optionally, before the above operations, the first terminal device reports the first terminal capability to the first network device. The first terminal capability indicates all or part of the above capability of the first terminal device related to the subset. For example, the RRC may configure the subset for one resource set, and/or the MAC CE may indicate one or more subsets, and/or the DCI signaling may indicate one or more subsets, and/or the terminal may support subset-based measurement, and/or the terminal may support subset-based reporting. For reporting of the capability of the first terminal:
a. Optionally, the first terminal capability is transmitted through RRC signaling or MAC CE.
b. Optionally, the first terminal capabilities are reported for frequency bands (i.e., for different frequency bands, corresponding capabilities can be independently reported, per band). Independent reporting for different frequency bands can allow the terminal to have greater freedom. For example, the terminal can support this function on one or some bands, but do not support this function on other bands, so that more terminals can support this new function.
c. Optionally, the first terminal capability is independently reported according to the band combination (per band combination). For different frequency band combinations, reporting is independently performed, so that the terminal can have greater freedom. For example, the terminal do not support this function under a certain frequency band combination, but support this function under another frequency band combination, so that more terminals can support this new function.
d. Optionally, the first terminal capability is independently reported according to each frequency band in a band combination (i.e., reporting is performed independently for frequency bands in different frequency band combinations, per band per band combination). Independent reporting for different frequency band combinations can allow the terminal to have greater freedom. For example, the terminal may not support this function under a certain CA, but support this function under some bands of another CA combination, so that more terminals can support this new function.
e. Optionally, the first terminal capability is independently reported according to each carrier in each frequency band in a band combination (i.e., different carriers (CCs) in frequency bands in different band combinations may be independently reported, per CC per band per band combination, or FSPC). Reporting is performed independently for different frequency band combinations, and reporting may also be performed independently for different carriers on one band, which allows terminals to have greater freedom, thereby allowing more terminals to support this new function.
f. Optionally, the first terminal capability is reported according to a frequency range (that is, the first terminal capability is reported independently for different FRs, per FR, that is, reporting is performed for FR1 and FR2 independently). Reporting is performed independently based on different FRs, which allows terminals to have greater freedom. For example, the terminal does not support this function at low frequency (FR1), but supports this function at FR2 (high frequency), so that more terminals can support this new function. g. Optionally, the first terminal capability is reported for the UE (that is, per UE, that is, if the UE reports this capability, this capability can be supported in each frequency band), which may reduce the signaling overhead of terminal capability reporting.

The wireless communication method provided by the embodiments of the present application includes, but is not limited to, the following embodiments.

Embodiment 1: a scenario of RRC plus MAC CE, herein, RRC is used to configure a subset, and MAC CE is used to indicate which subset is activated.

### Regarding that the first configuration information indicates the first group

A first terminal device receives first configuration information transmitted by a first network device. The first configuration information indicates a first group, and the first group includes one or more resource sets. Herein, each resource set (Resource Set) includes one or more resources, and a resource may correspond to a signal (e.g., SSB), a reference signal (e.g., CSI-RS), or a reference signal resource (e.g., CSI-RS resource). Therefore, the resource set may also be referred to as a signal resource set (a set of RS resources, or RS resource set). For example, when the resource corresponds to one reference signal resource or one reference signal, the first configuration information indicates information corresponding to some or all of the following (information corresponding to the reference signal resource or the reference signal):
A type of signal/reference signal;
An identifier, or a number, of the signal/reference signal;
A resource corresponding to the signal/reference signal (e.g., a frequency domain resource, or a time domain resource, or a time domain-frequency domain resource);
Power information corresponding to the signal/reference signal;
Scrambling information corresponding to the signal/reference signal, for example, the scrambling information is used to produce a signal/reference signal sequence; or
QCL information or TCI-state information corresponding to the signal/reference signal.

Optionally, in the NR system, each resource set of the one or more resource sets in the first group may indicate one or more CSI-RS resources, or may indicate one or more SSBs, or may indicate both the CSI-RS resource (s) and the SSB (s). Assuming that a resource set is labeled as ResourceSet, a set of resources can be indicated by using a SEQUENCE structure (a structure of RRC signaling), for example, a SEQUENCE (size of Resource Related Information (SIZE) (maximum number of resources within a set)). The resource-related information may indicate different options. For example: Option 1: The resource-related information indicates one CSI-RS resource; Option 2: The resource-related information indicates one SSB; and Option 3: The resource-related information indicates one SSB or one CSI-RS resource.

Optionally, each resource set in the first group is used for channel measurement, or for beam measurement, or for both channel measurement and beam measurement, which can simultaneously perform a Precoding Matrix Indicator (PMI) and beam measurement, thereby reducing system overhead. That is to say, resources or reference signals (or reference signal resources) in one or more resource sets in the first group are used for channel measurements, or for beam measurements, or for both channel measurements and beam measurements. For example, the UE may perform channel measurement and/or beam measurement based on the above-described resource set. On this basis, the UE may further report the measured result to the network. For another example, in the NR system, if one of the above resource sets indicates a CSSI-RS resource, the signal set is configured with a corresponding field "repetition" in the RRC signaling, and the value thereof may be "on" or "off."

Optionally, the first configuration information may further indicate to report L1-RSRP, or L1-SINR, or RSRP, or SINR. For example, in the NR system, there may be a field "reportQuantity" in the first configuration information, and the value thereof may be cri-RSRP, ssb-Index-RSRP, cri-SINR, or ssb-Index-SINR.

Optionally, the first configuration information indicates only the first group. For example, when the first configuration information indicates the first group (but does not indicate a second group and a third group mentioned later), the first terminal device may perform channel measurement based on one or more resource sets in the first group according to the network configuration information, and may further report the measured results to the network (for example, the RSRP result or the L1-RSRP result may be reported).

### Regarding the second group

Optionally, on the basis that the first configuration information indicates the first group, the first configuration information may further indicate a second group. The second group includes one or more resource sets. a resource in the second group may correspond to a signal (for example, an SSB), a reference signal (for example, a CSI-RS), or a reference signal resource (for example, a CSI-RS resource).

Optionally, each resource set in the second group is used for interference measurement. That is to say, resources or reference signals (or reference signal resources) in one or more resource sets in the second group are used for interference measurements.

For example, when the resource in the second group correspond to one reference signal resource or one reference signal, the first configuration information indicates information corresponding to some or all of the following (information corresponding to the reference signal resource or the reference signal):
- A type of the signal/reference signal;
- An identifier, or number, of the signal/reference signal;
- A resource corresponding to the signal/reference signal (e.g. a frequency domain resource, or a time domain resource, or a time domain-frequency domain resource);
- Power information corresponding to the signal/reference signal;
- Scrambling information corresponding to the signal/reference signal, e.g. the scrambling information is used to produce a signal/reference signal sequence; or
- QCL information or TCI-state information corresponding to the signal/reference signal

Optionally, in the NR system, each of the one or more resource sets in the second group may indicate one or more CSI-RS resources. Optionally, the resource set may indicate a set of resources (CSI-RS resource) through a SEQUENCE structure (a structure of RRC signaling).

Optionally, the first configuration information indicates a first group and a second group. For example, when the first configuration information indicates both the first group and the second group, the first terminal device may, according to the network configuration information, perform channel measurement based on one or more resource sets in the first group and interference measurement based on the corresponding one or more resource sets in the second group, and then the first terminal device determines a report to the network based on the measured results (for example, the SINR result or the L1-SINR result may be reported).

### Regarding a third group

Optionally, on the basis that the first configuration information indicates the first group, the first configuration information may further indicate a third group. The third group includes one or more resource sets. a resource in the third group may correspond to a frequency domain resource, a time domain resource, or a time domain-frequency domain resource.

For example, for the resource in the third group, the first configuration information may indicate information corresponding to some or all of the following:
An identifier or number of the resource; or
A resource (e.g. a frequency domain resource, or a time domain resource, or a time domain-frequency domain resource) corresponding to the signal/reference signal, e.g., a corresponding subcarrier position, a corresponding symbol position, an occupied PRB resource, a period, and an offset.

Optionally, each resource set in the third group is used for interference measurement. That is to say, resources in one or more resource sets in the third group are used for interference measurements.

Optionally, the first configuration information indicates a first group and a third group. For example, when the first configuration information indicates both the first group and the third group, the first terminal device may, according to the network configuration information, perform channel measurement based on one or more resource sets in the first group and interference measurement based on the corresponding one or more resource sets in the third group. Then the first terminal device determines a report to the network based on the measured results (for example, a SINR result or a L1-SINR result may be reported).

Optionally, the first configuration information indicates a first group, a second group, and a third group. For example, when the first configuration information indicates the first group, the second group, and the third group at the same time, the first terminal device may, according to the network configuration information, perform channel measurement based on one or more resource sets in the first group, interference measurement based on one or more resource sets corresponding to the second group, and interference measurement based on one or more resource sets corresponding to the third group. Then the first terminal device determines a report to the network based on the measured results (for example, a SINR result or an L1-SINR result may be reported).

Regarding other Indications in the first configuration information

Optionally, the first configuration information indicates that the corresponding reporting type is periodic, aperiodic, or semi-persistent.

Optionally, the first terminal device may receive multiple pieces of first configuration information transmitted by the first network device. That is, the first network device may configure the first terminal device with one of the following:
A plurality of first groups;
A plurality of first groups and a plurality of second groups;
A plurality of first groups and one second group;
A plurality of first groups and a plurality of third groups (for example, one piece of first configuration information indicates both one first group and one third group, another piece of first configuration information indicates only one first group, and other situations are similar and can be easily obtained by similar expansion, so no examples will be given one by one);
A plurality of first groups and one third group;
A plurality of first groups, a plurality of second groups, and a plurality of third groups;
A plurality of first groups, one second group, and a plurality of third groups
A plurality of first groups, a plurality of second groups, and one third group
A plurality of first groups, one second group, and one third group.

Optionally, multiple pieces of first configuration information may be transmitted in the same RRC signaling. They are transmitted in the same RRC signaling, it is convenient to share some information, thus reducing the overall signaling overhead.

Optionally, the multiple pieces of first configuration information are transmitted in different RRC signaling. The signaling design is simple, and the network transmits the configuration, which has better flexibility.

Optionally, the multiple pieces of first configuration information are the same configuration information. The same configuration information indicates more contents, which is convenient to share some information, thus reducing the overall signaling overhead.

Optionally, multiple pieces of first configuration information are different configuration information. The different configuration information performs configuration individually, which may simplify the designs of signaling and protocols. At the same time, when the network transmits the corresponding configuration, it also has better flexibility.

### Regarding indication of subsets of the first resource set

On any of the foregoing, the first terminal device receives second configuration information transmitted by the first network device. The second configuration information indicatES one or more subsets for a first resource set (set). Herein, the first resource set belongs to one of the one or more resource sets in the first group, and resources (or reference signal resources) included in each of the one or more subsets belong to the resources in the first resource set.

The first configuration information and the second configuration information are the same configuration information.

In an example, the first configuration information is as follows:

```
 ResourceSetConfig
 { SetIndicator,
 SetOfResource,
 ListOfSubset,
 ...
 }
```

ResourceSetConfig configures one resource set (for example, configure one first resource set), which includes the following information (each sub-item is optional, not necessarily all. That is, these sub-items are optional. At the same time, other sub-items can also be included. In addition, the order of these sub-items is not limited. These sub-items can also be called a Field).

A set indicator (SetIndicator) indicates an identifier or number of this resource set.

A set resource (SetOfResource) indicates resources included in this resource set. For example, the specific content thereof may be configuration information of each corresponding resource, or an identifier or number of each corresponding resource.

A list of subsets (ListOfSubset) indicates one or more subsets corresponding to this resource set. Exemplarily, resources included in each subset may be indicated by means of bitmap. Exemplarily, resources included in each subset may be indicated by resource identifier/number. Exemplarily, resources included in each subset may be indicated by the number of a resource in the resource set. Exemplarily, ListOfSubset may indicate one or more subsets by using a SEQUENCE structure. As an example, each element in the SEQUENCE structure is a subset. Optionally, each subset has its own corresponding identifier (i.e. its own corresponding subset identifier). As yet another example, each element in the SEQUENCE structure is one subset identifier for indicating a corresponding subset.

In the above-described examples of the first configuration information, a type corresponding to each field is omitted for simplicity of description. For example, for a domain, the full form is xxx Type xxx, that is, a domain named xxx, and its corresponding type is TypeXXX. In the above examples and the following examples, for the sake of simplicity of description, the type is omitted and directly written as xxx. For example, SetIndicator Type SetIndicator is abbreviated as SetIndicator. For another example: SetOfResource T type SETOFRESOURC E is abbreviated as SetOfResource.

The first network device may indicate a plurality of resource sets to the first terminal device. Exemplarily, this indication specific signaling may be implemented by using a SEQUENCE structure. Each element in the SEQUENCE structure corresponds to the ResourceSetConfig in the above examples.

Optionally, the first configuration information and the second configuration information are different configuration information. As an example, the second configuration information may further indicate the first resource set. As an example, the first configuration information and the second configuration information may be transmitted in the same RRC IE.

In one example, the first configuration information and the second configuration information are as follows, respectively.

```
 ResourceSetConfig
 {
 SetIndicator,
 SetOfResource,
 ... (Indicates that there may be additional fields, or additional sub-items)
 }
 SubsetConf
 {
 ResourceSetIndicator,
 ListOfSubset,
 ...
 }
```

ResourceSetConfig is used as the first configuration information to configure one resource set (for example, configure one first resource set), which includes the following information (each subitem is optional, not necessarily included. That is, these subitems are optional. At the same time, other subitems can also be included. In addition, the order of these sub-items is not limited. These sub-items can also be called a Field).

SetOfResource indicates a resource included in this resource set. For example, the specific content of SetOfResource may be configuration information of each corresponding resource or identifier or number of each corresponding resource.

SubsetConf is used as the second configuration information to configure one or more subsets corresponding to one resource set (for example, one first resource set) as, which includes the following information (each sub-item is optional, but not necessarily included. That is, these sub-items are optional. At the same time, other sub-items may also be included. In addition, the order of these sub-items is not limited. These sub-items may also be called a Field).

ResourceSetIndicator indicates one resource set. If there is no such sub-item, it is determined which resource set corresponds to the subset indicated below according to preset rules (such as specified by a protocol, agreed by multiple parties, configured by a network, etc.).

ListOfSubset indicates one or more subsets corresponding to this resource set. For example, resources included in each subset may be indicated by means of bitmap. For example, resources included in each subset may be indicated by a resource identifier/number. For example, for each subset, a resource included in the subset may be indicated by using the number of resource within the resource set.

Exemplarily, ListOfSubset may indicate one or more subsets by using a SEQUENCE structure. As an example, each element in the SEQUENCE structure is a subset. Optionally, each subset has its own corresponding identifier (i.e. its own corresponding subset identifier). As another example, each element in the SEQUENCE structure is a subset identifier for indicating a corresponding subset.

The first network device may indicate to the first terminal device a plurality of resource sets and subsets corresponding to the one or more resource sets. Exemplarily, this specific signaling for indication may be implemented by using two SEQUENCE structures, where each element in one SEQUENCE structure corresponds to the ResourceSetConfig in the above example, and each element in the other SEQUENCE structure corresponds to the SubsetConf in the above example.

For configuring subsets for the resource sets in the second group and the third group, in addition to the following contents, reference may be made to the description of configuring the set and configuring the subset in the first group.

The first terminal device receives third configuration information transmitted by the first network device. The third configuration information indicates one or more subsets for a second resource set. Herein, the second resource set belongs to one of the one or more resource sets in the second group. Each of the one or more subsets includes resources (or reference signal resources) belonging to resources in the second resource set. The third configuration information, the subset indication for the second resource set, and the like can be obtained by similar expansion according to the previous first configuration information and the subgroup indication manner of the first resource set, and will not be described in detail here.

The first terminal device receives fourth configuration information transmitted by the first network device. The fourth configuration information indicates one or more subsets for a third resource set. The third resource set belongs to one of one or more resource sets in the third group. Each of the one or more subsets includes resources (or reference signal resources) belonging to resources in the third resource set. The fourth configuration information, the subset indication for the third resource set, and the like can be obtained by similar expansion according to the above first configuration information and the subset indication manner of the first resource set, and will not be repeatedly described here.

Regarding indicating the first subset based on the first indication information in the MAC CE

Optionally, the first terminal device receives first indication information transmitted by the first network device. The first indication information indicates a first subset corresponding to a first resource set, and the first subset belongs to a subset of one or more subsets corresponding to the first resource set. Optionally, the first subset is activated and can be used for corresponding measurement and/or reporting on the side of the first terminal device.

The first indication information further indicates a second subset corresponding to a second resource set. The second subset belongs to a subset of one or more subsets corresponding to the second resource set. Optionally, the second subset is activated and can be used for corresponding measurement and/or reporting on the first terminal device side.

Optionally, the first indication information indicates a third subset corresponding to a third resource set. The third subset belongs to a subset of one or more subsets corresponding to the third resource set. Optionally, the third subset is activated and can be used for corresponding measurement and/or reporting on the first terminal device side.

The MAC CE for transmitting the first indication information includes, but is not limited to, the following MAC CE examples:

### MAC CE Example 1

The first MAC CE includes the following information:
Serving cell indication information for indicating a first serving cell;
Resource set indication information for indicating a first resource set;
Subset indication information for indicating a certain subset or certain subsets (i.e., a first subset) corresponding to the first resource set.

Herein, the first resource set is in the first serving cell. The first MAC CE is applied to the first serving cell.

### MAC CE Example 2

The first MAC CE includes the following information (the order is not limited, including the information position in the later schematic diagram, which can also be changed, and is not limited, and is only used as an example. Other subsequent parts are similar, and will not be repeated one by one),
Serving cell indication information for indicating a first serving cell;
Resource set indication information 1 for indicating a first resource set;
Subset indication information 1 for indicating a certain subset or certain subsets (i.e., the first subset) corresponding to the first resource set;
Resource set indication information 2 for indicating a third resource set;
Subset indication information 2 for indicating a certain subset or some subsets (i.e., a third subset) corresponding to the third resource set.

The above resource set indication information 2 and the subset indication information 2 may also be used to indicate the second resource set and the corresponding subset, respectively (the description of the third resource set later can easily be replaced with the second resource set. Since it is a simple extension, it will not be repeated one by one. Similar processing is also performed in some other examples). Herein, the first resource set and the third resource set are in the first serving cell. The first MAC CE is applied to the first serving cell.

### MAC CE Example 3

The first MAC CE includes the following information:
Serving cell indication information for indicating a first serving cell;
BWP indication information for indicating a first BWP (or a first downlink BWP, a first DL BWP);
Resource set indication information for indicating a first resource set;
Subset indication information for indicating a certain subset or certain subsets (i.e., a first subset) corresponding to the first resource set.

Herein, there are some different options, such as:
Option 1: The first resource set is in the first serving cell. A first MAC CE is applied to the first BWP of the first serving cell;
Option 2: The first resource set is in the first BWP of the first serving cell. The first MAC CE is applied to the first BWP of the first serving cell.

### MAC CE Example 4

The first MAC CE includes the following information:
Serving cell indication information for indicating a first serving cell;
BWP indication information for indicating a first BWP (or a first downlink BWP, a first DL BWP);
Resource set indication information 1 for indicating a first resource set;
Subset indication information 1 for indicating a certain subset or certain subsets corresponding to the first resource set (i.e., the first subset);
Resource set indication information 2 for indicating a third resource set;
Subset indication information 2 for indicating a certain subset or some subsets (i.e., a third subset) corresponding to the third resource set.

The above-described resource set indication information 2 and the subset indication information 2 may be used to indicate the second resource set and the corresponding subset, respectively.

Herein, there are some different options, such as:
Option 1: The first resource set and the third resource set are in the first serving cell. The first MAC CE is applied to the first BWP of the first serving cell.
Option 2: The first resource set and the third resource set are in the first BWP of the first serving cell. The first MAC CE is applied to the first BWP of the first serving cell.

### MAC CE Example 5

The first MAC CE includes the following information:
Serving cell indication information 1 for indicating a first serving cell;
BWP indication information 1 for indicating a first BWP (or a first downlink BWP, a first DL BWP);
Serving cell indication information 2 for indicating a second serving cell;
Resource set indication information for indicating a first resource set (i.e., a first subset);
Subset indication information for indicating a certain subset or certain subsets corresponding to the first resource set.

The first MAC CE is applied to the first BWP of the first serving cell, and the first resource set has some different options, for example:
Option 1: The first resource set is in the second serving cell;
Option 2: The first resource set is in the first BWP in the second serving cell.

### MAC CE Example 6

The first MAC CE includes the following information:
Serving cell indication information 1 for indicating a first serving cell;
BWP indication information 1 for indicating a first BWP (or a first downlink BWP, a first DL BWP);
Serving cell indication information 2 for indicating a second serving cell;
BWP indication information 2 for indicating a second BWP (or a second downlink BWP, a second DL BWP);
Resource set indication information for indicating a first resource set;
Subset indication information for indicating a certain subset or certain subsets (i.e., a first subset) corresponding to the first resource set.

Herein, the first MAC CE is applied to the first BWP of the first serving cell, the first resource set is in the second BWP in the second serving cell.

### MAC CE Example 7

The first MAC CE includes the following information:
Serving cell indication information 1 for indicating a first serving cell;
BWP indication information 1 for indicating a first BWP (or a first downlink BWP, a first DL BWP);
Serving cell indication information 2 for indicating a second serving cell;
Resource set indication information 1 for indicating a first resource set;
Subset indication information 1 for indicating a certain subset or certain subsets corresponding to the first resource set (i.e., the first subset);
Resource set indication information 2 for indicating a third resource set;
Subset indication information 2 for indicating a certain subset or some subsets (i.e., a third subset) corresponding to the third resource set.

The above-described resource set indication information 2 and the subset indication information 2 may be used to indicate the second resource set and the corresponding subset, respectively. Here, the first MAC CE is applied to the first BWP of the first serving cell, there are some different options, for example:
Option 1: The first resource set and the third resource set are in the second serving cell;
Option 2: The first resource set and the third resource set are in the first BWP in the second serving cell.

### MAC CE Example 8

The first MAC CE includes the following information:
Serving cell indication information 1 for indicating a first serving cell;
BWP indication information 1 for indicating a first BWP (or a first downlink BWP, a first DL BWP);
Serving cell indication information 2 for indicating a second serving cell;
BWP indication information 2 for indicating a second BWP (or a second downlink BWP, a second DL BWP);
Resource set indication information 1 for indicating a first resource set;
Subset indication information 1 for indicating a certain subset or certain subsets (i.e., a first subset)corresponding to the first resource set;
Resource set indication information 2 for indicating a third resource set;
Subset indication information 2 for indicating a certain subset or certain subsets (i.e., a third subset) corresponding to the third resource set;

The above-described resource set indication information 2 and the subset indication information 2 may be used to indicate the second resource set and the corresponding subset, respectively.

Herein, the first MAC CE is applied to the first BWP in the first serving cell, and the first resource set and the third resource set are in the second BWP in the second serving cell.

The order of information included in the above-described MAC CE is not limited in any way, and is shown as an example only.

Regarding that the first terminal device performs measurement based on a subset activated through the MAC CE.

Optionally, if the measurement and/or reporting of the first terminal device corresponds to the first resource set, the first terminal device performs the measurement and/or reporting based on the first subset.

Optionally, if the first configuration information configures and indicates the second group, and the first indication information also indicates the second subset, the first terminal device may further perform measurement and/or report based on the second subset. That is, the first terminal device performs measurement and/or reporting based on the first subset and the second subset.

Optionally, if the first configuration information configures and indicates the third group, and the first indication information further indicates the third subset, the first terminal device further performs measurement and/or reporting based on the third subset. That is, the first terminal device performs measurements and/or reports based on the first subset and the third subset.

Optionally, if the first configuration information configures and indicates the second group and the third group, and the first indication information also indicates the second subset and the third subset, the first terminal device performs measurement and/or reporting based on the first subset, the second subset, and the third subset.

Optionally, if the first configuration information configures and indicates the second group and the third configuration information indicates one or more subsets for the second resource set, but the first indication information does not indicate the second subset corresponding to the second resource set, the first terminal device may further perform measurement and/or reporting based on the second subset. The second subset is determined according to a predetermined rule (for example, a rule specified in a protocol), or according to a correspondence relationship between a subset of the first resource set and a subset of the second resource set configured by the network (for example, the network indicates the correspondence relationship through an RRC parameter), or the second resource set is the second subset.

Optionally, if the first configuration information configures and indicates the second group, but there is no third configuration information to indicate one or more subsets for the second resource set, the first terminal device may further perform measurement and/or reporting based on the second subset. The second subset is determined according to a predetermined rule (for example, a rule specified in a protocol), or according to a correspondence relationship between a resource (or signal resource) of the first signal set and a resource (or signal resource) of the second signal set configured by the network (for example, the network indicates the correspondence relationship through an RRC parameter), or the second resource set is the second subset.

Optionally, if the first configuration information configures and indicates the third group and the fourth configuration information indicates one or more subsets for the third resource set, but the first indication information does not indicate the third subset corresponding to the third resource set, the first terminal device may further perform measurement and/or reporting based on the third subset. The third subset is determined according to a predetermined rule (for example, a rule specified in a protocol), or according to a correspondence relationship between a subset of the first resource set and a subset of the third resource set configured by the network (for example, the network indicates the correspondence relationship through an RRC parameter), or the third subset is the third resource set.

Optionally, if the first configuration information configuration indicates the third group, but there is no fourth configuration information to indicate one or more subsets for the third resource set, the first terminal device further performs measurement and/or reporting based on the third subset. The third subset is determined according to a predetermined rule (for example, a rule specified in a protocol), or according to a correspondence relationship between a resource of the first resource set (or signal resource) and a resource of the third resource set configured by the network (for example, the network indicates the correspondence relationship through an RRC parameter), or the third subset is the third resource set.

### Regarding the default behavior of the first terminal device when the MAC CE does not activate the subset

If the measurement and/or reporting of the first terminal device corresponds to the first resource set, and the first terminal device does not receive the first indication information, the first terminal device performs measurement and/or reporting based on the first resource set.

Optionally, the first terminal device performs measurement and/or reporting based on the first resource set and the second resource set.

Optionally, the first terminal device performs measurement and/or reporting based on the first resource set and the third resource set.

Optionally, the first terminal device performs measurement and/or reporting based on the first resource set, the second resource set, and the third resource set.

Embodiment 2: a scenario of RRC plus DCI, herein, RRC is used to configure a subset, and DCI is used to indicate which subset is activated.

Recitation of the first configuration information indicating the first group, the second group, the third group, and the second configuration information, the third configuration information, and the fourth configuration information can be described in the embodiment 1.

### Regarding indicating the first subset based on the first indication information in the DCI

A first terminal device receives first indication information transmitted by a first network device. The first indication information indicates a first subset corresponding to a first resource set. The first subset belongs to a subset of one or more subsets corresponding to the first resource set, hereinS the first indication information is indicated by using DCI signaling.

If the measurement and/or reporting of the first terminal device (or a certain measurement and/or reporting) corresponds to a first resource set, the first terminal device performs the measurement and/or reporting based on the first subset.

Optionally, when a value of the first indication information is a first value, the first terminal device performs measurement and/or reporting based on the first resource set. The first value may be a reserved value specified in advance. For example, when a value of a first field is the first value, the first terminal device performs measurement and/or reporting based on the first resource set. For example, in one example, the reservation value is 0 (Note: equivalent to a fallback mode, that is, instead of using subsets, the resource set is directly used)

Optionally, if the first configuration information configuration indicates a second group, the first terminal device further performs measurement and/or reporting based on a second subset. That is, the first terminal device performs measurement and/or reporting based on the first subset and the second subset. The second subset is determined according to the first indication information, or the second subset is determined according to a predetermined rule, or the second subset is determined according to the correspondence relationship between the second subset and the first subset configured by the network (for example, the network indicates the correspondence relationship through RRC signaling or MAC CE signaling).

Optionally, if the first configuration information configures and indicates a third group, the first terminal device further performs measurement and/or reporting based on a third subset. That is, the first terminal device performs measurement and/or reporting based on the first subset and the third subset. The third subset is determined according to the first indication information, or the third subset is determined according to a predetermined rule, or the third subset is determined according to a correspondence relationship between the third subset and the first subset configured by the network (for example, the network indicates the correspondence relationship through RRC signaling or MAC CE signaling).

Optionally, if the first configuration information configures and indicates a second group and a third group, the first terminal device further performs measurement and/or reporting based on the second subset and the third subset. That is, the first terminal device performs measurement and/or reporting based on the first subset, the second subset, and the third subset. The second subset and the third subset are determined according to the first indication information, or the second subset and the third subset are determined according to a predetermined rule, or the second subset and the third subset are determined according to the correspondence relationship between the second subset and the first subset configured by the network (for example, the network indicates the correspondence relationship through RRC signaling or MAC CE signaling).

### Regarding the default behavior of the first terminal device when the first indication information is not received through the DCI

If the measurement and/or reporting of the first terminal device corresponds to the first resource set, and the first terminal device does not receive the first indication information (or the value of the first indication information received by the first terminal device is a specific value), the first terminal device performs measurement and/or reporting based on the first resource set. The specific value is a predefined value (e.g., predefined by the protocol, or configured by the network).

### Regarding reporting behavior of the first terminal device

The first terminal device reports a first result to the network device. Optionally, the first result may have the following options:
Option 1: The first result includes a measured result, for example, a measured L1-RSRP, and/or a corresponding signal identifier or signal resource identifier (for example, one identifier indicates one CSI-RS resource, for another example, the identifier indicates one SSB). For example, K L1-RSRP measurement results may be included in the first result. For another example, the first result may include K pairs, where each pair has a signal indication information/identifier and corresponding measured L1-RSRP. For example, the first result includes 4 pairs: {CSI-RS resource indicator1, L1-RSRP1}, {CSI-RS resource indicator2, L1-RSRP2}, {CSI-RS resource indicator3, L1-RSRP3}, {CSI-RS resource indicator4, L1-RSRP4}. Here, the number of pairs included in the first result may be a value set according to a demand, such as 2, 5, or 7.

In one example, the first result includes four measured results: L1-RSRP1, L1-RSRP2, L1-RSRP3}, L1-RSRP4. The positions of the four measured results in the first result are determined according to a predetermined rule (for example, the value of the corresponding CSI-RS resource indicator being small is in the front, or the value of the corresponding CSI-RS resource indicator being large is in the front).

For Option 1, the terminal device performs measurements based on one or more subsets, and reports the measured results to the network device. The network device may determine subsequent beam management operations according to appropriate algorithms or rules (such as deep learning algorithms, AI algorithms, machine learning algorithms, statistical algorithms, etc., but the specific algorithms are not limited), for example, allowing the UE to perform beam measurements, or configuring some beams for the UE, or instructing the UE to use one or some beams for transmission, thereby improving the overall performance of the network.

Option 2: The first result includes a predicted result of the first terminal device, for example, a signal (or signal resource) predicted by the first terminal device. Optionally, the predicted signal/signal resource may be reported through an identifier, that is, a predicted identifier (for example, one predicted identifier indicates one predicted CSI-RS resource, for another example, the identifier indicates one predicted SSB). Optionally, the first result may further include an RSRP value (or L1-RSRP value) predicted by the first terminal device, herein the predicted RSRP value corresponds to the predicted signal or signal resource.

The first result may include K predicted signals or signal resources (e.g., indicated by SSB indication information/identifier or CSI-RS resource indication information/identifier). The first result may include K pairs, where each pair has a signal indication information/identifier (e.g., SSB indication information/identifier, or CSI-RS resource indication information/identifier) and a corresponding predicted L1-RSRP. In one example, the first result includes 4 pairs: {CSI-RS resource indicator1, L1-RSRP1}, {CSI-RS resource indicator2, L1-RSRP2}, {CSI-RS resource indicator3, L1-RSRP3}, {CSI-RS resource indicator4, L1-RSRP4}.

In one example, the first result includes 4 pairs (with SSB and CSI-RS resource being indicated):
{CSI-RS resource indicator1, L1-RSRP1}, {SSB index2, L1-RSRP2}, {CSI-RS resource indicator3, L1-RSRP3}, {CSI-RS resource indicator4, L1-RSRP4}.

For option 2, the terminal device performs measurement based on one or more subsets, and then can use appropriate algorithms or rules (such as deep learning algorithms, AI algorithms, machine learning algorithms, statistical algorithms, etc., and the specific algorithms are not limited) to determine which beams are most beneficial to itself, and reports these predicted beams to the network device, which can help the network device make better beam management, thereby improving network performance.

Option 3: Option 3 is a combination of options 2 and 1. That is, the first result includes both the measured L1-RSRP and the predicted L1-RSRP.

Optionally, the first result may include additional information for indicating whether a certain L1-RSRP is a measured result or a predicted result.

In one example, the first result contains 4 pairs: {CSI-RS resource indicator1, L1-RSRP1, flag1}, {CSI-RS resource indicator2, L1-RSRP2, flag2}, {CSI-RS resource indicator3, L1-RSRP3, flag3}, {CSI-RS resource indicator4, L1-RSRP4, flag4}. As an example, the first result contains 4 pairs (with the SSB and CSI-RS resource being indicated): {CSI-RS resource indicator1, L1-RSRP1, flag1}, {SSB index2, L1-RSRP2, flag2}, {CSI-RS resource indicator3, L1-RSRP3, flag3}, {CSI-RS resource indicator4, L1-RSRP4, flag4}. Herein, for flag1, flag2, flag3, and flag4, different values of them indicate whether it is a measured L1-RSRP or a predicted L1-RSRP.

Optionally, it is determined whether the measured result or the predicted result is reported according to a predetermined rule (the implementation method may include different methods such as specified in a protocol or configured by network). For example, the arrangement position in the report information indicates whether a certain L1-RSRP is a measured result or a predicted result.

Optionally, in the first result, one signal or signal resource may have both a corresponding measured L1-RSRP and a predicted L1-RSRP. As an example, the first result includes both a measured L1-RSRP and a predicted L1-RSRP corresponding to a certain CSI-RS resource. For example, the first result includes {CSI-RS resource indicator1, L1-RSRP 1A, L1-RSRP 1B}. How to distinguish it is a measured result or a predicted result can also be done in different ways. For example, the measured L1-RSRP is placed in front of the predicted L1-RSRP. For another example, the predicted L1-RSRP is placed in front of the measured L1-RSRP. For another example, each L1-RSPR corresponds to additional information for indicating whether it is measured or predicted.

Optionally, if one signal or one signal resource has a corresponding measured L1-RSRP and a predicted L1-RSRP, the reporting of the first result includes the measured L1-RSRP corresponding to the signal or signal resource. For example, if a certain CSI-RS resource has both a corresponding measured L1-RSRP and a corresponding predicted L1-RSRP, only the measured L1-RSRP corresponding to the certain CSI-RS resource is included in the first result.

Optionally, if one signal or one signal resource has a corresponding measured L1-RSRP and a predicted L1-RSRP, the reporting of the first result includes a predicted L1-RSRP corresponding to the signal or signal resource. As an example, if a certain CSI-RS resource has both a corresponding measured L1-RSRP and a corresponding predicted L1-RSRP, only the predicted L1-RSRP corresponding to the certain CSI-RS resource is included in the first result.

Optionally, if one signal or one signal resource has a corresponding measured L1-RSRP and a predicted L1-RSRP, it is determined according to the second indication information that the reporting of the first result includes the measured L1-RSRP corresponding to the one signal or the signal resource or includes the predicted L1-RSRP corresponding to the one signal or the signal resource. Herein, the second indication information is transmitted by the first network device to the first terminal device.

As an example, it is determined according to the second indication information, which may be that it is determined according to a value of the second indication information. For example, when the second indication information is a second value, the first result includes a measured L1-RSRP corresponding to the one signal or signal resource, and when the second indication information is a third value, the first result includes a predicted L1-RSRP corresponding to the one signal or signal resource.

As an example, it is determined according to the second indication information, which may be that it is determined based on whether or not the second indication information is transmitted by the network or whether or not the second indication information is configured by the network. For example, when the network does not transmit or indicate the second indication information, the first result includes the measured L1-RSRP corresponding to the one signal or signal resource, and when the network transmits or indicates the second indication information, the first result includes the predicted L1-RSRP corresponding to the one signal or signal resource. For another example, when the network does not transmit or indicate the second indication information, the first result includes the predicted L1-RSRP corresponding to the one signal or signal resource, and when the network transmits or indicates the second indication information, the first result includes the measured L1-RSRP corresponding to the one signal or signal resource.

L1-RSRP is employed in the above examples. In other embodiments, L1-RSRP may also be replaced with L1-SINR. The scheme can be directly expanded and will not be repeated one by one.

In addition, in the first result reported by the terminal device, the L1-RSRP may also be quantized (for example, quantization may be performed according to a quantization method fixed in the protocol or a quantization method configured in the network), and the quantized result may be reported.

Optionally, in the first result reported by the terminal device, if the first result includes a plurality of L1-RSRPs (which may be measured or predicted), the first result may be reported in a differential manner, thereby reducing the reporting overhead.

The terminal device can select an appropriate algorithm or rule (such as deep learning algorithm, AI algorithm, machine learning algorithm, statistical algorithm, etc., the specific algorithm is not limited) to predict the corresponding beam, or the corresponding resource (such as CSI-RS resource, SSB, etc.), or the corresponding L1-RSRP, or the corresponding L1-SINR.

The wireless communication method provided by the embodiments of the present application can be applied to one or more of the following situations, including but not limited to:
AI/ML-based or AI-based beam management flow;
AI/ML-based spatial domain beam prediction or AI-based spatial domain beam prediction. For example, the best G2 narrow beams (i.e., Top-G2 narrow beams) are predicted from the measured results of G1 wide beams For another example, the best G2 narrow beams (i.e., Top-G2 narrow beams) among G3 beams are predicted from the measured result of G1 beams, herein G1 beams belong to part of the G3 beams;
AI/ML-based temporal beam prediction or AI-based temporal beam prediction. For example, the best G2 beams (i.e. Top-G2 beams) at a certain moment in the future, or at certain moments in the future, are predicted by using the current measured results and/or previous measurements of G1 beams. At different moments in the future, the value of G2 may be different.

In the above case, the AI algorithm or the ML algorithm may not be used, and another non-AI or non-ML algorithm, for example, a linear prediction algorithm, may be used.

The preferred embodiments of the present application have been described in detail above with reference to the accompanying drawings, but the present application is not limited to the specific details in the above-described embodiments. Within the scope of the technical concept of the present application, various simple modifications can be made to the technical solutions of the present application, and these simple modifications all fall within the scope of protection of the present application. For example, various specific technical features described in the above-described detailed description can be combined in any suitable manner without conflict. Various possible combinations will not be described separately in this application in order to avoid unnecessary repetition. For another example, various embodiments of the present application may be combined arbitrarily, and as long as they do not depart from the idea of the present application, they should also be regarded as the disclosure of the present application. For another example, on the premise that there is no conflict, each embodiment described in the present application and/or the technical features in each embodiment can be arbitrarily combined with the prior art, and the technical solution obtained after the combination should also fall within the scope of protection of the present application.

It should also be understood that in various method embodiments of the present application, the size of the sequence number of the above-described processes does not mean the sequence of execution, and the sequence of execution of each process should be determined by its function and internal logic, and should not constitute any limitation on the implementation of the embodiments of the present application. In addition, in the embodiments of the present application, the terms "downlink", "uplink", and "sidelink" are used to indicate the transmission direction of signals or data, herein "downlink" indicating that the transmission direction of signals or data is a first direction transmitted from the site to the user equipment of the cell, "uplink" indicating that the transmission direction of signals or data is a second direction transmitted from the user equipment of the cell to the site, and "sidelink" indicating that the transmission direction of signals or data is a third direction transmitted from the user equipment 1 to the user equipment 2. For example, "downlink signal" indicates that the transmission direction of the signal is the first direction. In addition, in the embodiments of the present application, the term "and/or" is only one kind of association relationship describing an association object, and indicates that there may be three kinds of relationships. Specifically, A and/or B may represent three cases including A alone, both A and B, and B alone. In addition, the character "/" in this article generally indicates that the related objects before and after the character "/" are in an "or" relationship.

FIG. 9 is a schematic tructural diagram of a terminal device according to the embodiments of the present application. As shown in FIG. 9, the terminal device 900 includes a first communication unit 901.

The first communication unit 901 is configured to receive first configuration information transmitted by a network device. The first configuration information indicates a first group, the first group includes one or more first resource sets used for channel measurement and/or beam measurement, and the first configuration information is transmitted through radio resource control RRC signaling.

The first communication unit 901 is further configured to receive second configuration information transmitted by the network device. The second configuration information indicates one or more first subsets corresponding to a first target resource set, resources included in the first subset belong to the first target resource set, the first target resource set is one of the one or more resource sets included in the first group, and the second configuration information is transmitted through RRC signaling.

It is understood that the network device further includes a storage unit configured to store the first configuration information and the second configuration information.

In some embodiments, the first configuration information and the second configuration information are same configuration information or two pieces of independent configuration information.

In some embodiments, when the first configuration information and the second configuration information are two pieces of independent configuration information, the second configuration information is further used to indicate the first target resource set.

In some embodiments, when the first configuration information and the second configuration information are two independent pieces of configuration information, the first configuration information and the second configuration information are transmitted in a same RRC information element.

In some embodiments, the second configuration information is further used to indicate a subset identifier of each of the one or more first subsets included in the first target resource set.

In some embodiments, a manner in which the second configuration information indicates the one or more first subsets corresponding to the first target resource set includes one of the following:
Indicating resources included in the first subset by means of a bitmap;
For a first subset of the one or more first subsets, indicating a number of a resource included in the first subset, the number of the resource is a number of the resource in the first target resource set; or
For a first subset of the one or more first subsets, indicating an identifier of a resource included in the first subset, the identifier of the resource is an identifier in resource configuration information for the resource.

In some embodiments, when the first group includes at least two first resource sets, the second configuration information indicating a subset corresponding to each of the at least two first resource sets.

In some embodiments, the first communication unit 901 is further configured to receive first indication information transmitted by the network device, and the first indication information indicating a first target subset corresponding to the first target resource set, and the first target subset is one of one or more subsets corresponding to the first target resource set.

In some embodiments, the first indication information is transmitted via one of:
a Radio Resource Control (RRC); or
a Media Access Control Element (MAC CE).

In some embodiments, the first target subset meets one or more of:
resources included in the first target subset belong to the first serving cell; or
resources included in the first target subset belong to the first BWP.

In some embodiments, when the first indication information is transmitted via the MAC CE, the first indication information is further used for one of the following:
Indicating a first serving cell to which the first indication information is applied;
Indicating a first bandwidth portion (BWP) to which the first indication information is applied;
Indicating a second serving cell;
not indicating the second serving cell;
indicating a second BWP; or
not indicating the second BWP.
In some embodiments, when the first indication information indicates the second serving cell, resources included in the first target subset belong to the second serving cell;
when the first indication information does not indicate the second serving cell, resources included in the first target subset belong to the first serving cell;
when the first indication information indicates the second BWP, resources included in the first target subset belong to the second BWP;
when the first indication information does not indicate the second BWP, resources included in the first target subset belongs to the first BWP.

In some embodiments, the terminal device 900 further includes a first measurement unit. The first measurement unit is configured to: perform measuring and/or reporting based on the first target subset when a target signal to be measured and/or reported corresponds to the first target resource set.

In some embodiments, the first indication information is transmitted through Downlink Control Information (DCI).

In some embodiments, a manner in which the first indication information indicates the first target subset includes one of the following:
The first indication information indicates a subset identifier of the first target subset; or
The first indication information indicates the first target subset by means of a bitmap.

In some embodiments, the first indication information is carried in a first field in the DCI, a manner for determining a size of the first field comprises one of the followings:
the size of the first field is determined based on a first number, the first number is a maximum number among a number of subsets corresponding to each of the one or more resource sets corresponding to the first target subset; or
the size of the first field is indicated by the network device.

In some embodiments, when the size of the first field is indicated by the network device, and a value of the first field is greater than the number of first subsets included in the first target resource set, the first target subset is determined by a predetermined rule.

In some embodiments, the terminal device 900 further includes a second measurement unit configured to performing measuring and/or reporting based on the first target subset.

In some embodiments, the terminal device 900 further includes a second interference measurement unit configured to perform interference measurement based on a second target subset and/or a third target subset. The second target subset corresponds to a second target resource set, the second target resource set is one of one or more second resource sets included in a second group, a second resource in the second resource set is used for performing interference measurement on a signal corresponding to the second resource. The third target subset corresponds to a third target resource set, the third target resource set is one of one or more third resource sets comprised in a third group, and a third resource in the third resource set is used for performing interference measurement.

In some embodiments, the first indication information is further used to indicate the second target subset and the second target subset is one of one or more second subsets corresponding to the second target resource set.

In some embodiments, when the second target resource set corresponds to one or more second subsets, and the first indication information does not indicate the second target subset, the second target subset is one of the following:

One second subset determined from the one or more second subsets according to a first rule;
One second subset determined from the one or more second subsets according to a first relationship, the first relationship is a correspondence relationship between a first subset of the first target resource set and a second subset of the second target resource set; or
The second target resource set.

In some embodiments, when the second target resource set does not correspond to one or more second subsets, the second target subset is one of the following:
A subset consisting of second resources determined from the second target resource set according to a second rule;
A subset consisting of second resources determined from the second target resource set according to a second relationship, the second relationship is a correspondence relationship between a first resource in the first target resource set and a second resource in the second target resource set configured by the network device; or
The second target resource set.

In some embodiments, the first communication unit 901 is further configured to receive third configuration information transmitted by the network device. The third configuration information indicates one or more second subsets corresponding to the second target resource set, and resources included in the second subset belong to the second target resource set.

In some embodiments, the third configuration information is transmitted through RRC signaling.

In some embodiments, the third configuration information and the second configuration information are same configuration information or two pieces of independent configuration information.

In some embodiments, when the third configuration information and the second configuration information are two independent pieces of configuration information, the third configuration information is further used to indicate the second target resource set.

In some embodiments, when the third configuration information and the second configuration information are two independent pieces of configuration information, the third configuration information and the second configuration information are transmitted in the same RRC information element.

In some embodiments, the third configuration information is further used to indicate a subset identifier of each of the one or more second subsets corresponding to the second target resource set.

In some embodiments, a manner in which the third configuration information indicates the one or more second subsets corresponding to the second target resource set includes one of the following:
Indicating a second subset to which each resource in the second target resource set belongs by means of a bitmap;
For a second subset of the one or more second subsets, indicating a number of a resource included in the second subset, the number of the resource is a number of the resource in the second target resource set; or
For a second subset of the one or more second subsets, indicating an identifier of a resource included in the second subset, and the identifier of the resource is an identifier in resource configuration information for the resource.

In some embodiments, when the second group includes at least two second resource sets, the third configuration information indicates a subset corresponding to each of the at least two second resource sets.

In some embodiments, the first indication information is further used to indicate the third target subset. The third target subset is one of one or more third subsets corresponding to the third target resource set.

In some embodiments, when the third target resource set corresponds to one or more third subsets, and the first indication information does not indicate the third target subset, the third target subset is one of the following:
A third subset determined from the one or more third subsets according to a third rule;
A third subset determined from the one or more third subsets according to a third relationship, the third relationship is a correspondence relationship between a first subset of the first target resource set and a third subset of the third target resource set; or
The third target resource set.

In some embodiments, when the third target resource set does not correspond to one or more third subsets, the third target subset is one of the following:
A subset consisting of third resources determined from the third target resource set according to a fourth rule;
A subset consisting of third resources determined from the third target resource set according to a fourth relationship, the fourth relationship is a correspondence relationship between a first resource in the first target resource set and a third resource in the third target resource set configured by the network device; or
The third target resource set.

In some embodiments, the first communication unit 901 is further configured to receive fourth configuration information transmitted by the network device. The fourth configuration information indicates one or more third subsets corresponding to the third target resource set, and resources included in the third subset belong to the third target resource set.

In some embodiments, the fourth configuration information is transmitted through RRC signaling.

In some embodiments, the fourth configuration information and the second configuration information are same configuration information or two pieces of independent configuration information.

In some embodiments, when the fourth configuration information and the second configuration information are two pieces of independent configuration information, the fourth configuration information is further used to indicate the third target resource set.

In some embodiments, when the fourth configuration information and the second configuration information are two independent pieces of configuration information, the fourth configuration information and the second configuration information are transmitted in a same RRC information element.

In some embodiments, the fourth configuration information is further used to indicate a subset identifier of each of the one or more third subsets corresponding to the third target resource set.

In some embodiments, a manner in which the fourth configuration information indicates the one or more third subsets corresponding to the third target resource set includes one of the following:
Indicating a third subset to which each resource in the third target resource set belongs by means of a bitmap;
For a third subset of the one or more third subsets, indicating a number of a resource included in the third subset, the number of the resource is a number of the resource in the third target resource set;
For a second subset of the one or more third subsets, indicating an identifier of a resource included in the third subset, and the identifier of the resource is an identifier in resource configuration information for the resource.

In some embodiments, when the third group includes at least two third resource sets, the fourth configuration information indicates a subset corresponding to each of the at least two third resource sets.

In some embodiments, a reporting type for measured results of the first target subset is applicable to one or more of:
Aperiodic reporting, periodic reporting and semi-persistent reporting.

In some embodiments, the terminal device 900 further includes a second measurement unit configured to perform measurement based on the first target resource set when the first indication information indicates a first value.

In some embodiments, the terminal device 900 further includes a second measurement unit configured to: when the terminal device does not receive the first indication information, a target signal to be measured corresponds to the first target resource set, perform measurement and/or reporting based on the first target resource set.

In some embodiments, the terminal device 901 further includes a second interference measurement unit configured to perform interference measurement based on a second target resource set and/or a third target resource set. The second target resource set is one of one or more second resource sets included in the second group, a second resource in the second resource set is used for performing interference measurement on the signal corresponding to the second resource. The third target resource set is one of one or more third resource sets included in the third group, and a third resource in the third resource set is used for performing interference measurement.

In some embodiments, the first communication unit 901 is further configured to report a first result to the network device. The first result includes a measured result of measurement information and/or a predicted result corresponding to the measurement information, and the predicted result is determined based on the measured result.

In some embodiments, when the terminal device determines the measured result and the predicted result, the first result is the measured result or the predicted result, the first communication unit 901 is further configured to: receive second indication information transmitted by the network device. The second indication information indicates that the first result is the measured result or the predicted result.

In some embodiments, the measurement information includes one or more of:
Reference signal received power (RSRP)_ or Layer 1 Reference Dignal Received Power (L1-RSRP);
Signal-to-Interference Noise Ratio (SINR) or Layer 1 Signal-to-Interference Noise Ratio (L1-SINR).

In some embodiments, the first communication unit 901 is further configured to report first capability information to the network device. The first capability information indicates a first terminal capability of the terminal device, and the first terminal capability is related to a subset.

In some embodiments, the first capability information is transmitted through RRC signaling, or a MAC CE.

In some embodiments, the first terminal capability includes one or more of the following:
For one resource set, configuring one or more corresponding subsets through RRC;
For one resource set, indicating the one or more corresponding subsets by using the MAC CE;
For one resource set, indicating the one or more corresponding subsets by using DCI; or
The terminal device supports subset-based measurement and/or subset-based reporting.

In some embodiments, the first terminal capability is reported according to one of the following:
a frequency band, a frequency band combination, a frequency band in a frequency band combination, a carrier on a frequency band in a frequency band combination, a frequency band range or a terminal device.

In some embodiments, the first configuration information is associated with a first serving cell.

In some embodiments, resources in the one or more first resource sets in the first group belong to the first serving cell or the second serving cell.

In some embodiments, one resource in the first resource set corresponds to one signal.

In some embodiments, the first configuration information is further used to configure a second group and/or a third group. The second group includes one or more second resource sets. The third group includes one or more third resource sets, a second resource in the second resource set is used to perform interference measurements on a signal corresponding to the second resource, and a third resource in the third resource set is used to perform interference measurement.

In some embodiments, a second resource in the one or more second resource sets in the second group belongs to a first serving cell or a second serving cell or a third serving cell.

In some embodiments, one second resource in the second resource set corresponds to one signal.

In some embodiments, one third resource set in the third group indicates one or more of the following: a time domain resource, a frequency domain resource, and a time-frequency resource.

In some embodiments, the first configuration information is transmitted through RRC.

In some embodiments, the first configuration information is further used to indicate that one of the following measurement information is reported:
L1-RSRP or RSRP; or
L1-SINR or SINR.

In some embodiments, the first configuration information is further used to indicate that a reporting type is aperiodic reporting, periodic reporting, or semi-persistent reporting.

FIG. 10 is a schematic structural diagram of the network device according to the embodiments of the present application. As shown in FIG. 10, the network device 1000 includes a second communication unit 1001.

The second communication unit is configured to transmit, first configuration information to the terminal device. The first configuration information indicates a first group, the first group includes one or more first resource sets for channel measurement and/or beam measurement, the first configuration information is transmitted through radio resource control (RRC) signaling.

The second communication unit 1001 is further configured to transmit second configuration information to the terminal device. The second configuration information indicates one or more first subsets corresponding to a first target resource set, resources included in the first subset belong to the first target resource set, the first target resource set is one of the one or more resource sets included in the first group, and the second configuration information is transmitted through RRC signaling.

It is understood that the network device further includes a configuration unit configured to determine the first configuration information and the second configuration information.

In some embodiments, the first configuration information and the second configuration information are same configuration information or two pieces of independent configuration information.

In some embodiments, when the first configuration information and the second configuration information are two pieces of independent configuration information, the second configuration information is further used to indicate the first target resource set.

In some embodiments, when the first configuration information and the second configuration information are two independent pieces of configuration information, the first configuration information and the second configuration information are transmitted in a same RRC information element.

In some embodiments, the second configuration information is further used to indicate a subset identifier of each of the one or more first subsets included in the first target resource set.

In some embodiments, a manner in which the second configuration information indicates the one or more first subsets corresponding to the first target resource set includes one of the following:

Indicating resources included in the first subset by means of a bitmap;

For a first subset of the one or more first subsets, indicating a number of a resource included in the first subset, the number of the resource is a number of the resource in the first target resource set; or

For a first subset of the one or more first subsets, Indicating, an identifier of a resource included in the first subset, the identifier of the resource is an identifier in resource configuration information for the resource.

In some embodiments, when the first group includes at least two first resource sets, the second configuration information indicates a subset corresponding to each of the at least two first resource sets.

In some embodiments, the second communication unit 1001 is further configured to transmit first indication information, The first indication information indicates a first target subset corresponding to the first target resource set, and the first target subset is one of one or more subsets corresponding to the first target resource set.

In some embodiments, the first indication information is transmitted via one of:
A radio resource control (RRC); or
A Media Access Control Element (MAC CE).

In some embodiments, the first target subset meets one or more of:
Resources included in the first target subset belong to the first serving cell; or
Resources included in the first target subset belong to the first BWP.

In some embodiments, when the first indication information is transmitted via the MAC CE, the first indication information is further used for one of the following:
Indicating a first serving cell to which the first indication information is applied;
Indicating a first bandwidth portion (BWP) to which the first indication information is applied;
Indicating a second serving cell;
Not indicating the second serving cell;
Indicating a second BWP; or
Not indicating the second BWP.

In some embodiments, when the first indication information indicates the second serving cell, resources included in the first target subset belong to the second serving cell;
When the first indication information does not indicate the second serving cell, resources included in the first target subset belong to the first serving cell;
When the first indication information indicates the second BWP, resources included in the first target subset belong to the second BWP;
When the first indication information does not indicate the second BWP, resources included in the first target subset belong to the first BWP.

In some embodiments, the first indication information is transmitted via downlink control information (DCI).

In some embodiments, a manner in which the first indication information indicates the first target subset includes one of the following:
The first indication information indicates a subset identifier of the first target subset; or
The first indication information indicates the first target subset by means of a bitmap.

In some embodiments, the first indication information is carried in a first field in the DCI, and a manner for determining a size of the first field includes one of the followings:
The size of the first field is determined based on a first number, the first number is a maximum number among a number of subsets corresponding to each of the one or more resource sets corresponding to the first target subset; or
The size of the first field is indicated by the network device.

In some embodiments, when the size of the first field is indicated by the network device, and a value of the first field is greater than the number of first subsets included in the first target resource set, the first target subset is determined by a predetermined rule.

In some embodiments, the first indication information is further used to indicate a second target subset. The second target subset is one of one or more second subsets corresponding to the second target resource set in the second group, and the second target subset is used for performing interference measurement.

In some embodiments, the second communication unit 1001 is further configured to transmit third configuration information to the terminal device. The third configuration information indicates one or more second subsets corresponding to the second target resource set, and resources included in the second subset belong to the second target resource set.

In some embodiments, the third configuration information is transmitted through RRC signaling.

In some embodiments, the third configuration information and the second configuration information are same configuration information or two pieces of independent configuration information.

In some embodiments, when the third configuration information and the second configuration information are two independent pieces of configuration information, the third configuration information is further used to indicate the second target resource set.

In some embodiments, when the third configuration information and the second configuration information are two independent pieces of configuration information, the third configuration information and the second configuration information are transmitted in a same RRC information element.

In some embodiments, the third configuration information is further used to indicate a subset identifier of each of the one or more second subsets corresponding to the second target resource set.

In some embodiments, a manner in which the third configuration information indicates the one or more second subsets corresponding to the second target resource set includes one of the following:
Indicating resources included in the second subset by means of a bitmap;
For a second subset of the one or more second subsets, indicating a number of a resource included in the second subset, the number of the resource is a number of the resource in the second target resource set; or
For a second subset of the one or more second subsets, indicating an identifier of a resource included in the second subset, and the identifier of the resource is an identifier in resource configuration information for the resource.

In some embodiments, when the second group includes at least two second resource sets, the third configuration information indicates a subset corresponding to each second resource set of the at least two second resource sets.

In some embodiments, the first indication information is further used to indicate the third target subset. The third target subset is one third subset of one or more third subsets corresponding to the third target resource set.

In some embodiments, the second communication unit 1001 is further configured to transmit fourth configuration information to the terminal device. The fourth configuration information indicates one or more third subsets corresponding to the third target resource set, and resources included in the third subset belong to the third target resource set.

In some embodiments, the fourth configuration information is transmitted through RRC signaling.

In some embodiments, the fourth configuration information and the second configuration information are same configuration information or two pieces of independent configuration information.

In some embodiments, when the fourth configuration information and the second configuration information are two pieces of independent configuration information, the fourth configuration information is further used to indicate the third target resource set.

In some embodiments, when the fourth configuration information and the second configuration information are two independent pieces of configuration information, the fourth configuration information and the second configuration information are transmitted in a same RRC information element.

In some embodiments, the fourth configuration information is further used to indicate a subset identifier of each of the one or more third subsets corresponding to the third target resource set.

In some embodiments, a manner in which the fourth configuration information indicates the one or more third subsets corresponding to the third target resource set includes one of the following:
Indicating resources included in the third subset by means of a bitmap;
For a third subset of the one or more third subsets, indicating a number of a resource included in the third subset, the number of the resource is a number of the resource in the third target resource set; or
For a second subset of the one or more third subsets, indicating an identifier of a resource included in the third subset, and the identifier of the resource is an identifier in resource configuration information for the resource.

In some embodiments, when the third group includes at least two third resource sets, the fourth configuration information indicates a subset corresponding to each third resource set of the at least two third resource sets.

In some embodiments, the second communication unit 1001 is further configured to receive a first result reported by the terminal device. The first result includes a measured result of measurement information and/or a predicted result corresponding to the measurement information, and the predicted result is determined based on the measured result.

In some embodiments, the second communication unit 1001 is further configured to transmit second indication information to the terminal device. The second indication information is used to indicates that the terminal device determines the measured result and the predicted result, and the first result is the measured result or the predicted result.

In some embodiments, the measurement information comprises one or more of:
a Reference Signal Received Power (RSRP) or a Layer 1 Reference Signal Received Power (L1-RSRP); or
a Signal-to-Interference Noise Ratio (SINR) or a Layer 1 Signal-to-Interference Noise Ratio (L1-SINR).

In some embodiments, the second communication unit 1001 is further configured to receive first capability information reported by the terminal device. The first capability information indicates a first terminal capability of the terminal device, and the first terminal capability is related to a subset.

In some embodiments, the first capability information is transmitted through RRC signaling, or a MAC CE.

In some embodiments, the first terminal capability includes one or more of the following:
For one resource set, configuring one or more corresponding subsets through RRC signaling;
For one resource set, indicating the one or more corresponding subsets by using a Media Access Control Element (MAC CE);
For one resource set, indicating the one or more corresponding subsets by using Downlink Control Information (DCI); or
The terminal device supports at least one of subset-based measurement or subset-based reporting.

In some embodiments, the first terminal capability is reported according to one of the following:
a frequency band, a frequency band combination, a frequency band in a frequency band combination, a carrier on a frequency band in a frequency band combination, a frequency band range or a terminal device.

In some embodiments, the first configuration information is associated with a first serving cell.

In some embodiments, resources in one or more first resource sets in the first group belong to the first serving cell or the second serving cell.

In some embodiments, one resource in the first resource set corresponds to one signal.

In some embodiments, the first configuration information is further used to configure a second group and/or a third group, the second group includes one or more second resource sets, the third group includes one or more third resource sets, the second resource in the second resource set is used to perform interference measurement on a signal corresponding to the second resource, and the third resource in the third resource set is used to perform interference measurement.

Those skilled in the art should understand that the related descriptions of the above-described terminal devices and network devices according to the embodiments of the present application can be understood with reference to the related descriptions of the wireless communication methods according to the embodiments of the present application.

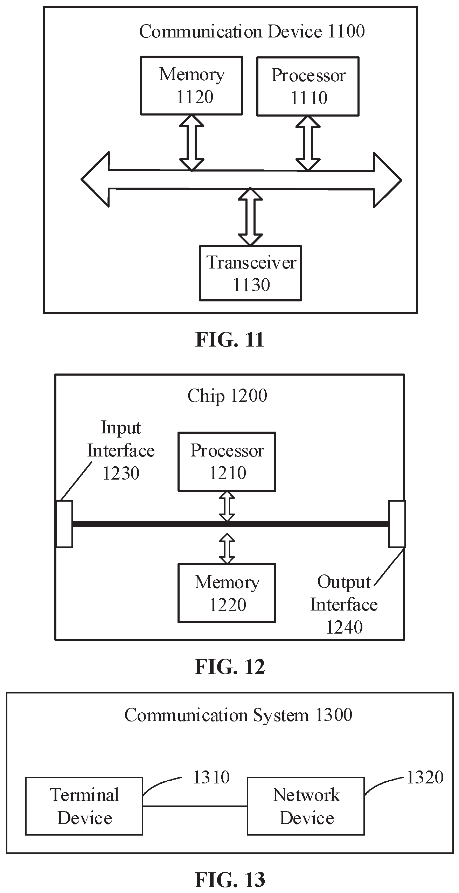

FIG. 11 is a schematic structural diagram of a communication device 1100 according to an embodiment of the present application. The communication device may be a terminal device or a network device. The communication device 1100 illustrated in FIG. 11 includes a processor 1110, and the processor 1110 can call and run a computer program from a memory to implement the method in the embodiments of the present application.

Optionally, as shown in FIG. 11, the communication device 1100 may further include a memory 2011. The processor 1110 may call and run a computer program from the memory 1120 to implement the method in the embodiments of the present application.

The memory 1120 may be a separate device independent of the processor 1110, or may be integrated in the processor 1110.

Optionally, as shown in FIG. 11, the communication device 1100 may further include a transceiver 1130, and the processor 1110 may control the transceiver 1130 to communicate with other devices, specifically, may transmit information or data to other devices, or receive information or data transmitted by other devices.

Here, the transceiver 1130 may include a transmitter and a receiver. The transceiver 1130 may further include antennas, and the number of antennas may be one or more.

Optionally, the communication device 1100 may be a network device according to the embodiments of the present application, and the communication device 1100 may implement a corresponding process implemented by the network device in each method according to the embodiments of the present application, and will not be described herein for the sake of conciseness.

Optionally, the communication device 1100 may specifically be a mobile terminal/terminal device according to the embodiments of the present application, and the communication device 1100 may implement a corresponding process implemented by the mobile terminal/terminal device in each method according to the embodiments of the present application, and will not be described herein for the sake of conciseness.

FIG. 12 is a schematic structural diagram of a chip according to an embodiment of the present application. The chip 1200 shown in FIG. 12 includes a processor 1210, and the processor 1210 can call and run a computer program from a memory to implement the method in the embodiments of the present application.

Optionally, as shown in FIG. 12, the chip 1200 may further include a memory 1220. The processor 1210 may call and run a computer program from the memory 1220 to implement the method in the embodiments of the present application.

The memory 1220 may be a separate device independent of the processor 1210 or may be integrated in the processor 1210.

Optionally, the chip 1200 may further include an input interface 1230. The processor 1210 may control the input interface 1230 to communicate with other devices or chips, specifically, may acquire information or data transmitted by other devices or chips.

Optionally, the chip 1200 may further include an output interface 1240. The processor 1210 may control the output interface 1240 to communicate with other devices or chips, specifically, may output information or data to other devices or chips.

Optionally, the chip can be applied to the network device in the embodiments of the present application, and the chip can implement the corresponding process implemented by the network device in each method of the embodiments of the present application, and will not be repeated here for the sake of brevity.

Optionally, the chip can be applied to the mobile terminal/terminal device in the embodiments of the present application, and the chip can implement the corresponding flow implemented by the mobile terminal/terminal device in each method of the embodiments of the present application, and will not be repeated here for the sake of brevity.

It should be understood that the chip mentioned in the embodiments of the present application may also be referred to as a system-on-chip, a system chip, a chip system or a system-on-chip chip.

FIG. 13 is a schematic block diagram of a communication system 1300 according to an embodiment of the present application. As shown in FIG. 13, the communication system 1300 includes a terminal device 1310 and a network device 1320.

Here, the terminal device 1310 may be used to implement the corresponding functions implemented by the terminal device in the above-described method, and the network device 1320 may be used to implement the corresponding functions implemented by the network device in the above-described method, which will not be described herein for the sake of brevity.

It should be understood that the processor of the embodiments of the present application may be an integrated circuit chip having signal processing capabilities. In the implementation process, the operations of the above-described method embodiments may be completed by integrated logic circuits in hardware or instructions in software in the processor. The processor described above may be a general-purpose processor, a Digital Signal Processor (DSP), an Application Specific Integrated Circuit (ASIC), a Field Programmable Gate Array (FPGA) or other programmable logic device, a discrete gate or transistor logic device, or a discrete hardware component. The methods, operations, and logical block diagrams disclosed in the embodiments of the present application may be implemented or executed. The general purpose processor may be a microprocessor or the processor may be any conventional processor or the like. The operations of the method disclosed in connection with the embodiments of the present application may be directly embodied as execution by the hardware decoding processor, or may be executed by combining hardware and software modules in the decoding processor. The software module may be located in a storage medium mature in the art, such as a random access memory, a flash memory, a read-only memory, a programmable read-only memory, or an electrically erasable and writable programmable memory, a register, etc. The storage medium is located in the memory, and the processor reads the information in the memory, and combines its hardware to complete the operations of the above method.

It is understood that the memory in the embodiments of the present application may be a volatile memory or a non-volatile memory, or may include both volatile and non-volatile memory. The non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which serves as an external cache. By way of example, but not limitation, many forms of RAM are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It should be noted that the memory of the systems and methods described herein is intended to include, but is not limited to, these and any other suitable type of memory.

It should be understood that the above memory is illustrative but not limiting, for example, the memory in the embodiments of the present application may also be a static random access memory (SRAM), a dynamic random access memory (DRAM), a synchronous dynamic random access memory (SDRAM), a double data rate synchronous dynamic random access memory (DDR SDRAM), an enhanced SDRAM (ESDRAM), a synch link dynamic random access memory (SLDRAM), a Direct Rambus RAM (DR RAM), and the like. That is, the memory in the embodiments of the present application is intended to include, but is not limited to, these and any other suitable type of memory.

Embodiments of the present application also provide a computer-readable storage medium for storing a computer program.

Optionally, the computer-readable storage medium can be applied to the network device in the embodiments of the present application, and the computer program causes the computer to execute the corresponding flow implemented by the network device in each method in the embodiments of the present application, and the description thereof will not be repeated here for the sake of brevity.

Optionally, the computer-readable storage medium can be applied to the mobile terminal/terminal device in the embodiments of the present application, and the computer program causes the computer to execute the corresponding flow implemented by the mobile terminal/terminal device in each method of the embodiments of the present application, and will not be repeatedly described herein for the sake of brevity.

Embodiments of the present application also provide a computer program product including computer program instructions.

Optionally, the computer program product can be applied to the network device in the embodiments of the present application, and the computer program instruction causes the computer to execute the corresponding flow implemented by the network device in each method in the embodiments of the present application, and the description thereof is not repeated here for the sake of brevity.

Optionally, the computer program product can be applied to the mobile terminal/terminal device in the embodiments of the present application, and the computer program instruction causes the computer to execute the corresponding flow implemented by the mobile terminal/terminal device in each method of the embodiments of the present application, and will not be repeated here for the sake of brevity.

Embodiments of the present application also provide a computer program.

Optionally, the computer program can be applied to the network device in the embodiments of the present application, and the computer program, when executed on the computer, enables the computer to perform the corresponding process implemented by the network device in each method of the embodiments of the present application, and the description thereof is not repeated here for the sake of brevity.

Optionally, the computer program can be applied to the mobile terminal/terminal device in the embodiments of the present application, and the computer program, when executed on the computer, enables the computer to perform the corresponding flow implemented by the mobile terminal/terminal device in each method of the embodiments of the present application, which is not repeated herein for the sake of brevity.

Those of ordinary skill in the art will appreciate that the elements and algorithmic steps of the various examples described according to the embodiments disclosed herein can be implemented in electronic hardware, or a combination of computer software and electronic hardware. Whether these functions are performed in hardware or software depends on the specific application and design constraints of the technical solution. Those skilled in the art may use different methods for implementing the described functions for each particular application, but such implementations should not be considered beyond the scope of the present application.

Those skilled in the art can clearly understand that for convenience and conciseness of the description, the specific working processes of the systems, devices, and units described above may refer to the corresponding processes in the aforementioned method embodiments, and will not be repeatedly described herein.

In several embodiments provided herein, it should be understood that the disclosed systems, apparatuses, and methods may be implemented in other ways. For example, the device embodiments described above are merely schematic. For example, the division of units is only one logical function division, and there may be other division methods in actual implementation. For example, multiple units or components may be combined or integrated into another system, or some features may be ignored or not implemented. In addition, the coupling or direct coupling or communication connection between each other shown or discussed may be an indirect coupling or communication connection through some interface, device or unit, which may be electrical, mechanical or otherwise.

The units described as separate units may or may not be physically separate, and the units shown as units may or may not be physical units, that is, they may be located in one place or may be distributed over a plurality of network units. Some or all of the units may be selected according to actual needs to achieve the purpose of the solution of the present embodiment.

In addition, each functional unit in each embodiment of the present application may be integrated in one processing unit, each unit may be physically present alone, or two or more units may be integrated in one unit.

The functions may be stored in a computer-readable storage medium if implemented in the form of software functional units and sold or used as a stand-alone product. Based on this understanding, the technical solution of the present application essentially or a part that contributes to the prior art or a part of the technical solution may be embodied in the form of a software product, which is stored in a storage medium and includes several instructions for causing a computer device (which may be a personal computer, a server, or a network device, etc.) to perform all or part of the operations of the method described in various embodiments of the present application. The storage medium includes a USB disk, a removable hard disk, a Read-Only Memory (ROM), a Random Access Memory (RAM), a magnetic disk, or an optical disk that can store a program code.

The above are merely specific embodiments of the present application, but the scope of protection of the present application is not limited thereto, and any change or substitution which can be easily thought by any person skilled in the art within the technical scope disclosed in the present application should be covered within the scope of protection of the present application. Therefore, the scope of protection of the present application should be subject to the scope of protection of the claims.

## Claims

1. A wireless communication method, comprising:
receiving, by a terminal device, first configuration information transmitted by a network device, the first configuration information indicating a first group, the first group comprising one or more first resource sets, the first resource sets being used for at least one of channel measurement or beam measurement, the first configuration information being transmitted through radio resource control (RRC) signaling; and
receiving, by the terminal device, second configuration information transmitted by the network device, the second configuration information indicating one or more first subsets corresponding to a first target resource set, resources comprised in the first subsets belonging to the first target resource set, the first target resource set being one of the one or more resource sets comprised in the first group, and the second configuration information being transmitted through RRC signaling.

2. The method of claim 1, wherein the first configuration information and the second configuration information are same configuration information or two pieces of independent configuration information.

3. The method of claim 2, wherein when the first configuration information and the second configuration information are two pieces of independent configuration information, the second configuration information is further used to indicate the first target resource set.

4. The method of claim 2 or 3, wherein when the first configuration information and the second configuration information are two pieces of independent configuration information, the first configuration information and the second configuration information are transmitted in a same RRC information element.

5. The method of any one of claims 1 to 4, wherein the second configuration information is further used to indicate a subset identifier of each of the one or more first subsets comprised in the first target resource set.

6. The method of any one of claims 1 to 5, wherein a manner in which the second configuration information indicates the one or more first subsets corresponding to the first target resource set comprises one of:
indicating resources comprised in the first subset by means of a bitmap;
for a first subset of the one or more first subsets, indicating a number of a resource comprised in the first subset, the number of the resource being a number of the resource in the first target resource set; or
indicating, for a first subset of the one or more first subsets, an identifier of a resource comprised in the first subset, the identifier of the resource being an identifier in resource configuration information for the resource.

7. The method of any one of claims 1 to 6, wherein when the first group comprises at least two first resource sets, the second configuration information indicates a subset corresponding to each of the at least two first resource sets.

8. The method of any one of claims 1 to 7, further comprising:
receiving, by the terminal device, first indication information transmitted by the network device, the first indication information indicating a first target subset corresponding to the first target resource set, and the first target subset being one of one or more subsets corresponding to the first target resource set.

9. The method of claim 8, wherein the first indication information is transmitted via one of:
RRC signaling; or
a Media Access Control Element (MAC CE).

10. The method of claim 9, wherein the first target subset meets one or more of:
resources comprised in the first target subset belong to a first serving cell; or
resources comprised in the first target subset belong to a first BandWidth Portion (BWP).

11. The method of claim 9, wherein when the first indication information is transmitted via the MAC CE, the first indication information is further used for one of:
indicating a first serving cell to which the first indication information is applied;
indicating a first BandWidth Portion (BWP) to which the first indication information is applied;
indicating a second serving cell;
not indicating the second serving cell;
indicating a second BWP; or
not indicating the second BWP.

12. The method of claim 11, wherein
when the first indication information indicates the second serving cell, resources comprised in the first target subset belong to the second serving cell;
when the first indication information does not indicate the second serving cell, resources comprised in the first target subset belong to the first serving cell;
when the first indication information indicates the second BWP, resources comprised in the first target subset belong to the second BWP;
when the first indication information does not indicate the second BWP, resources comprised in the first target subset belong to the first BWP.

13. The method of any one of claims 9 to 12, further comprising:
when a target signal for which at least one of measurement or reporting is to be performed corresponds to the first target resource set, performing, by the terminal device based on the first target subset, at least one of measurement or reporting.

14. The method of claim 9, wherein the first indication information is transmitted through Downlink Control Information (DCI).

15. The method of claim 14, wherein a manner in which the first indication information indicates the first target subset comprises one of the followings:
the first indication information indicates a subset identifier of the first target subset; or
the first indication information indicates the first target subset by means of a bitmap.

16. The method of claim 14 or 15, wherein the first indication information is carried in a first field in the DCI, a manner for determining a size of the first field comprises one of the followings:
the size of the first field is determined based on a first number, the first number is a maximum number among a number of subsets corresponding to each of the one or more resource sets corresponding to the first target subset; or
the size of the first field is indicated by the network device.

17. The method of claim 16, wherein when the size of the first field is indicated by the network device and a value of the first field is greater than the number of first subsets comprised in the first target resource set, the first target subset is determined by a predetermined rule.

18. The method of any one of claims 14 to 17, further comprising:
performing, by the terminal device based on the first target subset, at least one of measurement or reporting.

19. The method of claim 13 or 18, further comprising:
performing, by the terminal device, interference measurement based on at least one of a second target subset or a third target subset, the second target subset corresponding to a second target resource set, the second target resource set being one of one or more second resource sets comprised in a second group, a second resource in the second resource set being used for performing interference measurement on a signal corresponding to the second resource, the third target subset corresponding to a third target resource set, the third target resource set being one of one or more third resource sets comprised in a third group, and a third resource in the third resource set being used for performing interference measurement.

20. The method of claim 19, wherein the first indication information is further used to indicate the second target subset and the second target subset is one of one or more second subsets corresponding to the second target resource set.

21. The method of claim 19, wherein when the second target resource set corresponds to one or more second subsets, and the first indication information does not indicate the second target subset, the second target subset is one of:
one second subset determined from the one or more second subsets according to a first rule;
one second subset determined from the one or more second subsets according to a first relationship, the first relationship being a correspondence relationship between a first subset of the first target resource set and a second subset of the second target resource set; or
the second target resource set.

22. The method of claim 19, wherein when the second target resource set does not correspond to one or more second subsets, the second target subset is one of:
a subset consisting of second resources determined from the second target resource set according to a second rule;
a subset consisting of second resources determined from the second target resource set according to a second relationship, the second relationship is a correspondence relationship between a first resource in the first target resource set and a second resource in the second target resource set configured by the network device; or
the second target resource set.

23. The method of any one of claims 20 to 22, further comprising:
receiving, by the terminal device, third configuration information transmitted by the network device, the third configuration information indicating one or more second subsets corresponding to the second target resource set, and resources comprised in the second subsets belong to the second target resource set.

24. The method of claim 23, wherein the third configuration information is transmitted through RRC signaling.

25. The method of claim 22 or 23, wherein the third configuration information and the second configuration information are same configuration information or two pieces of independent configuration information.

26. The method of claim 25, wherein when the third configuration information and the second configuration information are two pieces of independent configuration information, the third configuration information is further used to indicate the second target resource set.

27. The method of claim 25, wherein when the third configuration information and the second configuration information are two pieces of independent configuration information, the third configuration information and the second configuration information are transmitted in a same RRC information element.

28. The method of any one of claims 23 to 27, wherein the third configuration information is further used to indicate a subset identifier of each of the one or more second subsets corresponding to the second target resource set.

29. The method of any one of claims 23 to 28, wherein a manner in which the third configuration information indicates the one or more second subsets corresponding to the second target resource set comprises one of the followings:
indicating a second subset to which each resource in the second target resource set belongs by means of a bitmap;
for a second subset of the one or more second subsets, indicating a number of a resource comprised in the second subset is indicated, the number of the resource is a number of the resource in the second target resource set; or
for a second subset of the one or more second subsets, indicating an identifier of a resource comprised in the second subset, the identifier of the resource is an identifier in resource configuration information for the resource.

30. The method of any one of claims 23 to 29, wherein when the second group comprises at least two second resource sets, the third configuration information indicates a subset corresponding to each of the at least two second resource sets.

31. The method of claim 19, wherein the first indication information is further used to indicate the third target subset, the third target subset is one of one or more third subsets corresponding to the third target resource set.

32. The method of claim 19, wherein when the third target resource set corresponds to one or more third subsets, and the first indication information does not indicate the third target subset, the third target subset is one of:
a third subset determined from the one or more third subsets according to a third rule;
a third subset determined from the one or more third subsets according to a third relationship, the third relationship is a correspondence relationship between a first subset of the first target resource set and a third subset of the third target resource set; or
the third target resource set.

33. The method of claim 19, wherein when the third target resource set does not correspond to one or more third subsets, the third target subset is one of:
a subset consisting of third resources determined from the third target resource set according to a fourth rule;
a subset consisting of third resources determined from the third target resource set according to a fourth relationship, the fourth relationship is a correspondence relationship between a first resource in the first target resource set and a third resource in the third target resource set configured by the network device; or
the third target resource set.

34. The method of any one of claims 31 to 33, further comprising:
receiving, by the terminal device, fourth configuration information transmitted by the network device, the fourth configuration information indicating the one or more third subsets corresponding to the third target resource set, and resources comprised in the third subset belong to the third target resource set.

35. The method of claim 34, wherein the fourth configuration information is transmitted through RRC signaling.

36. The method of claim 34 or 35, wherein the fourth configuration information and the second configuration information are same configuration information or two pieces of independent configuration information.

37. The method of claim 36, wherein when the fourth configuration information and the second configuration information are two pieces of independent configuration information, the fourth configuration information is further used to indicate the third target resource set.

38. The method of claim 36, wherein when the fourth configuration information and the second configuration information are two pieces of independent configuration information, the fourth configuration information and the second configuration information are transmitted in a same RRC information element.

39. The method of any one of claims 34 to 38, wherein the fourth configuration information is further used to indicate a subset identifier of each of the one or more third subsets corresponding to the third target resource set.

40. The method of any one of claims 34 to 39, wherein a manner in which the fourth configuration information indicates the one or more third subsets corresponding to the third target resource set comprises one of:
indicating a third subset to which each resource in the third target resource set belongs by means of a bitmap;
for a third subset of the one or more third subsets, indicating a number of a resource comprised in the third subset, the number of the resource is a number of the resource in the third target resource set; or
for a second subset of the one or more third subsets, indicating an identifier of a resource comprised in the third subset, and the identifier of the resource is an identifier in resource configuration information for the resource.

41. The method of any one of claims 34 to 40, wherein when the third group comprises at least two third resource sets, the fourth configuration information indicates a subset corresponding to each of the at least two third resource sets.

42. The method of any one of claims 13, 18 to 41, wherein a reporting type for measured results of the first target subset is applicable to one or more of:
aperiodic reporting, periodic reporting or semi-persistent reporting.

43. The method of any one of claims 14 to 17, further comprising:
when the first indication information indicates a first value, performing, by the terminal device, measurement based on the first target resource set.

44. The method of any one of claims 8 to 43, further comprising:
when the terminal device does not receive the first indication information, a target signal for which measurement is to be performed corresponds to the first target resource set, and performing, by the terminal device based on the first target resource set, at least one of measurement or reporting.

45. The method of claim 43 or 44, further comprising:
performing, by the terminal device, interference measurement based on at least one of a second target resource set or a third target resource set, the second target resource set being one of one or more second resource sets comprised in a second group, a second resource in the second resource set being used for performing interference measurement on a signal corresponding to the second resource, the third target resource set being one of one or more third resource sets comprised in a third group, and a third resource in the third resource set being used for performing interference measurement.

46. The method of any one of claims 1 to 45, further comprising:
reporting, by the terminal device, a first result to the network device, the first result comprising at least one of a measured result of measurement information or a predicted result corresponding to the measurement information, and the predicted result being determined based on the measured result.

47. The method of claim 46, wherein when the terminal device determines the measured result and the predicted result, the first result is the measured result or the predicted result, the method further comprising:
receiving, by the terminal device, second indication information transmitted by the network device, the second indication information indicating that the first result is the measured result or the predicted result.

48. The method of claim 46, wherein the measurement information comprises one or more of:
a Reference Signal Received Power (RSRP) or a Layer 1 Reference Signal Received Power (L1-RSRP); or
a Signal-to-Interference Noise Ratio (SINR) or a Layer 1 Signal-to-Interference Noise Ratio (L1-SINR).

49. The method of any one of claims 1 to 48, further comprising:
reporting, by the terminal device, first capability information to the network device, the first capability information indicating a first terminal capability of the terminal device, and the first terminal capability being related to a subset.

50. The method of claim 49, wherein the first capability information is transmitted through RRC signaling, or a Media Access Control Element (MAC CE).

51. The method of claim 49 or 50, wherein the first terminal capability comprises one or more of:
for one resource set, configuring one or more corresponding subsets through RRC signaling;
for one resource set, indicating the one or more corresponding subsets through a Media Access Control Element (MAC CE);
for one resource set, indicating the one or more corresponding subsets through Downlink Control Information (DCI); or
the terminal device supports at least one of subset-based measurement or subset-based reporting.

52. The method of any one of claims 49 to 51, wherein the first terminal capability is reported according to one of:
a frequency band, a frequency band combination, a frequency band in a frequency band combination, a carrier on a frequency band in a frequency band combination, a frequency band range or a terminal device.

53. The method of any one of claims 1 to 52, wherein the first configuration information is associated with a first serving cell.

54. The method of claim 53, wherein resources in the one or more first resource sets in the first group belong to the first serving cell or a second serving cell.

55. The method of any one of claims 1 to 54, wherein one resource in the first resource set corresponds to one signal.

56. The method of any one of claims 1 to 55, wherein the first configuration information is further used to configure at least one of a second group or a third group, the second group comprising one or more second resource sets, the third group comprising one or more third resource sets, a second resource in the second resource set being used to perform interference measurements on a signal corresponding to the second resource, and a third resource in the third resource set being used to perform interference measurements.

57. The method of claim 56, wherein a second resource in the one or more second resource sets in the second group belongs to a first serving cell or a second serving cell or a third serving cell.

58. The method of claim 56 or 57, wherein one second resource in the second resource set corresponds to one signal.

59. The method of claim 56, wherein a third resource set in the third group indicates one or more of the following: a time domain resource, a frequency domain resource, and a time frequency resource.

60. The method of any one of claims 1 to 59, wherein the first configuration information is transmitted through RRC.

61. The method of any one of claims 1 to 60, wherein the first configuration information is further used to indicate that one of the following measurement information is reported:
a layer 1 reference signal received power (L1-RSRP) or a reference signal received power (RSRP); or
a layer 1 signal-to-interference noise ratio (L1-SINR) or a signal-to-interference noise ratio (SINR).

62. The method of any one of claims 1 to 61, wherein the first configuration information is further used to indicate that a reporting type is aperiodic reporting or periodic reporting or semi-persistent reporting.

63. A wireless communication method, comprising:
transmitting, by a network device, first configuration information to a terminal device, the first configuration information indicating a first group, the first group comprising one or more first resource sets, the first resource sets being used for at least one of channel measurement or beam measurement, the first configuration information and the second configuration information being transmitted through radio resource control (RRC) signaling; and
transmitting, by the network device, second configuration information to the terminal device, the second configuration information indicating one or more first subsets corresponding to a first target resource set, resources comprised in the first subsets belonging to the first target resource set, the first target resource set being one of the one or more resource sets comprised in the first group, and the second configuration information being transmitted through RRC signaling.

64. The method of claim 63, wherein the first configuration information and the second configuration information are the same configuration information or two pieces of independent configuration information.

65. The method of claim 64, wherein when the first configuration information and the second configuration information are two pieces of independent configuration information, the second configuration information is further used to indicate the first target resource set.

66. The method of claim 64 or 65, wherein when the first configuration information and the second configuration information are two independent pieces of configuration information, the first configuration information and the second configuration information are transmitted in a same RRC information element.

67. The method of any one of claims 63 to 66, wherein the second configuration information is further used to indicate a subset identifier of each of the one or more first subsets comprised in the first target resource set.

68. The method of any one of claims 63-67, wherein a manner in which the second configuration information indicates the one or more first subsets corresponding to the first target resource set comprises one of:
indicating resources comprised in the first subset by means of a bitmap;
for a first subset of the one or more first subsets, indicating a number of a resource comprised in the first subset, the number of the resource being a number of the resource in the first target resource set; or
for a first subset of the one or more first subsets, indicating an identifier of a resource comprised in the first subset, the identifier of the resource being an identifier in resource configuration information for the resource.

69. The method of any one of claims 63 to 68, wherein when the first group comprises at least two first resource sets, the second configuration information indicating a subset corresponding to each of the at least two first resource sets.

70. The method of any one of claims 63 to 69, further comprising:
transmitting, by the network device, first indication information to the network device, the first indication information indicating a first target subset corresponding to the first target resource set, and the first target subset is one of one or more subsets corresponding to the first target resource set.

71. The method of claim 70, wherein the first indication information is transmitted via one of:
RRC signaling; or
a Media Access Control Element (MAC CE).

72. The method of claim 71, wherein the first target subset meets one or more of:
resources comprised in the first target subset belonging to a first serving cell; or
resources comprised in the first target subset belonging to a first BandWidth Portion (BWP).

73. The method of claim 72, wherein when the first indication information is transmitted via the MAC CE, the first indication information is further used for one of:
indicating a first serving cell to which the first indication information is applied;
indicating a first BandWidth Portion (BWP) to which the first indication information is applied;
indicating a second serving cell;
not indicating the second serving cell;
indicating a second BWP; or
not indicating the second BWP.

74. The method of claim 73, wherein,
when the first indication information indicates the second serving cell, resources comprised in the first target subset belong to the second serving cell;
when the first indication information does not indicate the second serving cell, resources comprised in the first target subset belong to the first serving cell;
when the first indication information indicates the second BWP, resources comprised in the first target subset belong to the second BWP;
when the first indication information does not indicate the second BWP, resources comprised in the first target subset belong to the first BWP.

75. The method of claim 71, wherein the first indication information is transmitted via Downlink Control Information (DCI).

76. The method of claim 75, wherein a manner in which the first indication information indicates the first target subset comprises one of the followings:
the first indication information indicates a subset identifier of the first target subset; or
the first indication information indicates the first target subset by means of a bitmap.

77. The method of claim 75 or 76, wherein the first indication information is carried in a first field in the DCI, a manner for determining a size of the first field comprises one of the followings:
the size of the first field is determined based on a first number, the first number is a maximum number among a number of subsets corresponding to each of the one or more resource sets corresponding to the first target subset; or
the size of the first field is indicated by the network device.

78. The method of claim 77, wherein when the size of the first field is indicated by the network device and a value of the first field is greater than the number of first subsets comprised in the first target resource set, the first target subset is determined by a predetermined rule.

79. The method of any of claims 70 to 78, wherein the first indication information is further used to indicate a second target subset, the second target subset is one of one or more second subsets corresponding to a second target resource set in the second group, and the second target subset is used for performing interference measurement.

80. The method of claim 79, further comprising:
transmitting, by the network device, third configuration information to the terminal device, the third configuration information indicating one or more second subsets corresponding to the second target resource set, and resources comprised in the second subset belong to the second target resource set.

81. The method of claim 80, wherein the third configuration information is transmitted through RRC signaling.

82. The method of claim 80 or 81, wherein the third configuration information and the second configuration information are same configuration information or two pieces of independent configuration information.

83. The method of claim 82, wherein when the third configuration information and the second configuration information are two pieces of independent configuration information, the third configuration information is further used to indicate the second target resource set.

84. The method of claim 83, wherein when the third configuration information and the second configuration information are two independent pieces of configuration information, the third configuration information and the second configuration information are transmitted in a same RRC information element.

85. The method of any one of claims 80 to 84, wherein the third configuration information is further used to indicate a subset identifier of each of the one or more second subsets corresponding to the second target resource set.

86. The method of any one of claims 80 to 85, wherein a manner in which the third configuration information indicates the one or more second subsets corresponding to the second target resource set comprises one of the followings:
indicating resources comprised in the second subset by means of a bitmap;
for a second subset of the one or more second subsets, indicating a number of a resource comprised in the second subset, the number of the resource is a number of the resource in the second target resource set; or
for a second subset of the one or more second subsets, indicating an identifier of a resource comprised in the second subset, the identifier of the resource is an identifier in resource configuration information for the resource.

87. The method of any one of claims 80 to 86, wherein when the second group comprises at least two second resource sets, the third configuration information indicates a subset corresponding to each of the at least two second resource sets.

88. The method of any one of claims 70 to 87, wherein the first indication information is further used to indicate a third target subset, the third target subset is one of one or more third subsets corresponding to a third target resource set.

89. The method of claim 88, further comprising:
transmitting, by the network device, fourth configuration information to the terminal device, the fourth configuration information indicating the one or more third subsets corresponding to the third target resource set, and resources comprised in the third subset belong to the third target resource set.

90. The method of claim 89, wherein the fourth configuration information is transmitted through RRC signaling.

91. The method of claim 89 or 90, wherein the fourth configuration information and the second configuration information are same configuration information or two pieces of independent configuration information.

92. The method of claim 91, wherein when the fourth configuration information and the second configuration information are two pieces of independent configuration information, the fourth configuration information is further used to indicate the third target resource set.

93. The method of claim 91, wherein when the fourth configuration information and the second configuration information are two pieces of independent configuration information, the fourth configuration information and the second configuration information are transmitted in a same RRC information element.

94. The method of any one of claims 89 to 93, wherein the fourth configuration information is further used to indicate a subset identifier of each of the one or more third subsets corresponding to the third target resource set.

95. The method of any one of claims 89 to 94, wherein a manner in which the fourth configuration information indicates the one or more third subsets corresponding to the third target resource set comprises one of:
indicating resources comprised in the third subset by means of a bitmap;
for a third sebset of the one or more third subsets, indicating a number of a resource comprised in the third subset, the number of the resource being a number of the resource in the third target resource set; or
for a second subset of the one or more third subsets, indicating an identifier of a resource comprised in the third subset, and the identifier of the resource is an identifier in resource configuration information for the resource.

96. The method of any one of claims 89 to 95, wherein when the third group comprises at least two third resource sets, the fourth configuration information indicates a subset corresponding to each of the at least two third resource sets.

97. The method of any one of claims 63-96, further comprising:
receiving, by the network device, a first result reported by the terminal device, the first result comprising at least one of a measured result of measurement information or a predicted result corresponding to the measurement information, and the predicted result being determined based on the measured result.

98. The method of claim 97, further comprising:
transmitting, by the network device, second indication information to the terminal device, the second indication information indicating that the terminal device determines the measured result and the predicted result, and the first result is the measured result or the predicted result.

99. The method of claim 97, wherein the measurement information comprises one or more of:
a Reference Signal Received Power (RSRP) or a Layer 1 Reference Signal Received Power (L1-RSRP); or
a Signal-to-Interference Noise Ratio (SINR) or a Layer 1 Signal-to-Interference Noise Ratio (L1-SINR).

100. The method of any one of claims 63 to 99, further comprising:
receiving, by the network device, first capability information reported by the terminal device, the first capability information indicating a first terminal capability of the terminal device, and the first terminal capability is related to a subset.

101. The method of claim 100, wherein the first capability information is transmitted through RRC signaling, or a Media Access Control Element (MAC CE).

102. The method of claim 100 or 101, wherein the first terminal capability comprises one or more of:
for one resource set, configuring one or more corresponding subsets through RRC signaling;
for one resource set, indicating the one or more corresponding subsets through a Media Access Control Element (MAC CE);
for one resource set, indicating the one or more corresponding subsets through Downlink Control Information (DCI); or
the terminal device supports at least one of subset-based measurement or subset-based reporting.

103. The method of any one of claims 100 to 102, wherein the first terminal capability is reported according to one of:
a frequency band, a frequency band combination, a frequency band in a frequency band combination, a carrier on a frequency band in a frequency band combination, a frequency band range or a terminal device.

104. The method of any one of claims 63 to 103, wherein the first configuration information is associated with a first serving cell.

105. The method of claim 104, wherein resources in one or more first resource sets in the first group belong to the first serving cell or a second serving cell.

106. The method of any one of claims 63 to 105, wherein one resource in the first resource set corresponds to one signal.

107. The method of any one of claims 63 to 106, wherein the first configuration information is further used to configure at least one of a second group or a third group, the second group comprising one or more second resource sets, the third group comprising one or more third resource sets, a second resource in the second resource set being used to perform interference measurements on a signal corresponding to the second resource, and a third resource in the third resource set being used to perform interference measurements.

108. A terminal device, comprising:
a first communication unit, configured to receive first configuration information transmitted by a network device, the first configuration information indicating a first group, the first group comprising one or more first resource sets, the first resource sets being used for at least one of channel measurement or beam measurement, the first configuration information being transmitted through radio resource control (RRC) signaling;
the first communication unit is further configured to receive the second configuration information transmitted by the network device, the second configuration information indicating one or more first subsets corresponding to a first target resource set, resources comprised in the first subsets belong to the first target resource set, the first target resource set is one of the one or more resource sets comprised in the first group, and the second configuration information is transmitted through RRC signaling.

109. A network device, comprising:
a second communication unit, configured to transmit first configuration information to the terminal device, the first configuration information indicating a first group, the first group including one or more first resource sets for channel measurement and/or beam measurement, the first configuration information and RRC signaling transmission through radio resource control;
the second communication unit is further configured to transmit second configuration information to the terminal device, the second configuration information indicating one or more first subsets corresponding to a first target resource set, resources comprised in the first subsets belong to the first target resource set, the first target resource set is one of the one or more resource sets comprised in the first group, and the second configuration information is transmitted through RRC signaling.

110. A communication device comprising:
a processor; and
a memory for storing a computer program,
wherein the processor is configured to call and execute the computer program stored in the memory, to perform the method of any one of claims 1 to 62, or performing the method of any one of claims 63 to 107.

111. A chip comprising: a processor for calling and executing a computer program from a memory to cause an apparatus on which the chip is mounted to perform the method of any one of claims 1 to 62 or perform the method of any one of claims 63 to 107.

112. A computer-readable storage medium for storing a computer program, execution of computer program causes a computer to perform the method of any one of claims 1 to 62, or perform the method of any one of claims 63 to 107.

113. A computer program product comprising computer program instructions, execution of the computer program instructions causes a computer to perform the method of any one of claims 1 to 62, or perform the method of any one of claims 63 to 107.

114. A computer program, execution of the computer program causes a computer to perform the method of any one of claims 1 to 62, or perform the method of any one of claims 63 to 107.
